# EUROPEAN PATENT APPLICATION

(11) **EP 4 545 586 A1**
(43) Date of publication of application: **30.04.2025**
(21) Application number: 23827066.4
(22) Date of filing: 14.06.2023
(51) Int. Cl.: C08G 65/336, C09K 3/18

(54) **FLUOROPOLYETHER GROUP-CONTAINING POLYMER, SURFACE TREATMENT AGENT, AND ARTICLE**

(30) Priority: 24.06.2022 JP 2022102021
(71) Applicant: SHIN-ETSU CHEMICAL CO., LTD., Tokyo 1000005 (JP)
(72) Inventor: MOTEGI, Miki, Annaka-shi, Gunma 379-0224 (JP); SAKOH, Ryusuke, Annaka-shi, Gunma 379-0224 (JP); UCHIDA, Takashi, Annaka-shi, Gunma 379-0224 (JP)
(74) Representative: Ter Meer Steinmeister & Partner
(86) International application number: PCT/JP2023/022017
(87) International publication number: WO 2023/248880

(57) **Abstract**

A cured coating film having an excellent water and oil repellency, an excellent slipperiness, and excellent chucking properties can be formed by a surface treatment agent that contains: a fluoropolyether group-containing polymer having at least one group represented by formula (1) at at least one terminal of the molecule 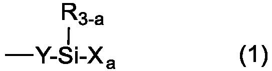 (In the formula, Y is a divalent organic group containing an o-, m-, or p-phenylene group; R is a C1-4 alkyl group or a phenyl group; each X is independently a hydroxyl group or hydrolyzable group; and a is 2 or 3.),
and/or a partial (hydrolysis) condensate of this polymer.

## Description

### TECHNICAL FIELD

This invention relates to a fluoropolyether-containing polymer and the like, and more particularly, to a fluoropolyether-containing polymer having a linker unit containing at least one phenylene group in the molecule and a silanol (hydroxy bonded to silicon) or hydrolyzable silyl group positioned at an end of the molecular chain and linked to the linker unit and capable of forming a coating having improved water/oil repellency and abrasion resistance, a surface treating agent comprising the polymer and/or partial (hydrolytic) condensate thereof, and an article having a surface treated with the surface treating agent.

### BACKGROUND ART

Generally, fluoropolyether-containing compounds exhibit, by virtue of their extremely low surface free energy, water/oil repellency, chemical resistance, lubricity, parting, antifouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically hydrolyzable silyl such as alkoxysilyl) in the molecule. In the presence of airborne moisture or the like, the hydrolyzable silyl groups undergo self-condensation reaction to form a coating. The hydrolyzable silyl groups form chemical and physical bonds with the surface of substrates, whereby the coating becomes a tough coating having durability.

Patent Documents 1 to 4 (JP-A 2012-072272, JP-A 2012-157856, JP-A 2013-136833, JP-A 2015-199906) disclose a composition comprising a fluoropolyether-containing polymer which is obtained by introducing a hydrolyzable silyl group into a fluoropolyether-containing compound at an end, the composition being tightly adherent to the substrate surface and able to form a coating with water/oil repellency, chemical resistance, lubricity, parting, antifouling and other properties on the substrate surface.

When lenses and antireflective coatings are surface-treated with a composition comprising the fluoropolyether-containing polymer obtained by introducing a hydrolyzable silyl group into a fluoropolyether-containing compound, the cured film-bearing substrate is improved in water/oil repellency. When the cured film-bearing substrate is fixedly secured and machined, tight securement is difficult due to slippage, indicating poor chucking. This allows the substrate to be shifted during machining, making it difficult to machine the substrate to the desired shape.

It has been difficult to use fluoropolyether-containing polymers which are obtained by introducing hydrolyzable silyl groups into fluoropolyether-containing compounds to form cured film-bearing substrates having water/oil repellency and chucking-slipping at a high level.

As the prior art pertinent to the present invention, the following documents are cited as well as the foregoing.

### PRIOR ART DOCUMENTS

### PATENT DOCUMENTS

Patent Document 1: JP-A 2012-072272
Patent Document 2: JP-A 2012-157856
Patent Document 3: JP-A 2013-136833
Patent Document 4: JP-A 2015-199906
Patent Document 5: JP-A 2003-238577

### SUMMARY OF INVENTION

### TECHNICAL PROBLEM

An object of the invention, which has been made under the above-mentioned circumstances, is to provide a fluoropolyether-containing polymer having a silanol and/or hydrolyzable silyl group and capable of forming a cured film having improved water/oil repellency, abrasion resistance and chucking properties, a surface treating agent comprising the polymer and/or a partial (hydrolytic) condensate thereof, and an article having a surface treated with the surface treating agent.

### SOLUTION TO PROBLEM

Making extensive investigations to attain the above object, the inventors have found that among the foregoing fluoropolyether-containing polymers, a fluoropolyether-containing polymer having, at at least one end of the molecule, at least one group represented by the formula (1) shown below and having a linker unit containing a phenylene group and a silanol group (hydroxy bonded to silicon) or hydrolyzable silyl group linked to the linker unit, is effective in that a surface treating agent comprising the polymer and/or a partial (hydrolytic) condensate thereof is capable of forming a cured coating having improved water/oil repellency, slipping, and chucking properties. The present invention is predicated on this finding.

Accordingly, the invention provides a fluoropolyether-containing polymer, a surface treating agent, and an article as defined below.
[1] A fluoropolyether-containing polymer having at least one group represented by the formula (1) at at least one end in the molecule: 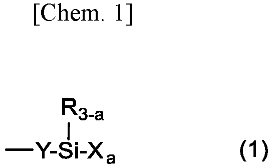 wherein Y is a divalent organic group including an o-, m- or p-phenylene group, R is a C₁-C₄ alkyl group or phenyl group, X is independently a hydroxy or hydrolyzable group, and a is 2 or 3.
[2] The fluoropolyether-containing polymer of [1], wherein Y in formula (1) is a group represented by the formula (5): 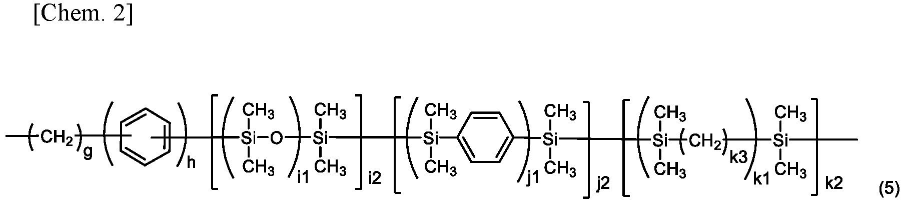 wherein g is an integer of 0 to 20, h is an integer of 1 to 3, i1, j1 and k1 are an integer of 1 to 10, i2, j2 and k2 are an integer of 0 to 5, k3 is an integer of 1 to 10, individual repeating units may be randomly bonded, and when (CH₂)_{g} are separated into a plurality of blocks, numbers of repetition of (CH₂) units in the plurality of blocks may be the same or different.
[3] The fluoropolyether-containing polymer of [1] or [2], wherein in formula (1), Y is selected from among groups represented by the following formulae: 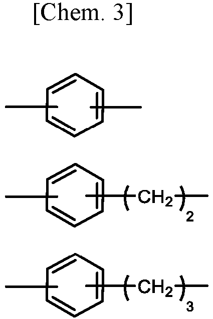 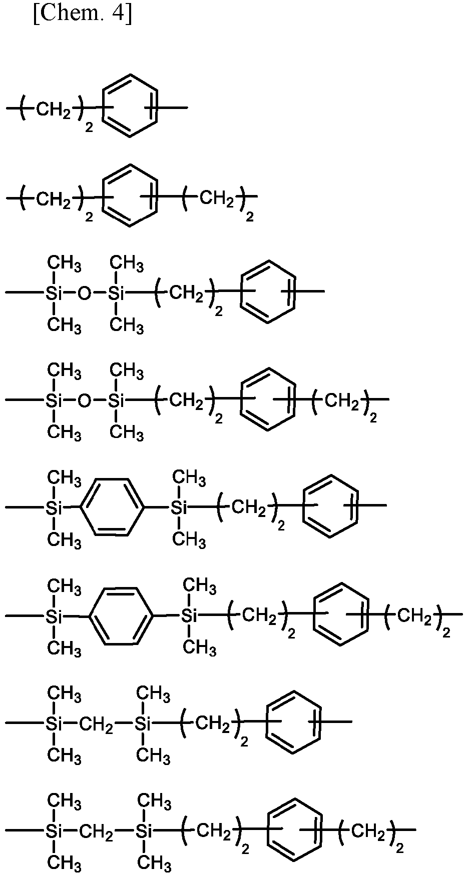 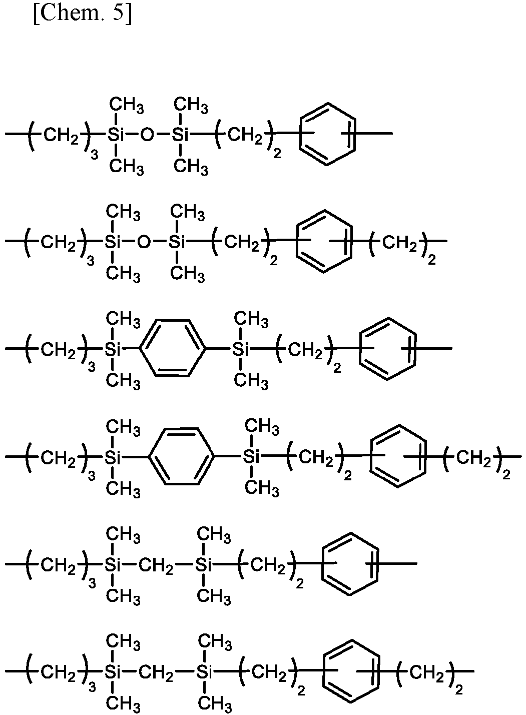 wherein the valence bond on the right side is attached to silicon in formula (1).
[4] The fluoropolyether-containing polymer of any one of [1] to [3], wherein in formula (1), X is hydroxy, a C₁-C₁₀ alkoxy group, a C₂-C₁₀ alkoxyalkoxy group, a C₂-C₁₀ acyloxy group, a C₂-C₁₀ alkenyloxy group or halogen.
[5] The fluoropolyether-containing polymer of any one of [1] to [4], wherein the fluoropolyether-containing polymer is represented by the formula (2): 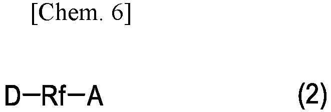 wherein Rf is a divalent fluorooxyalkylene-containing polymer residue represented by the formula (3): 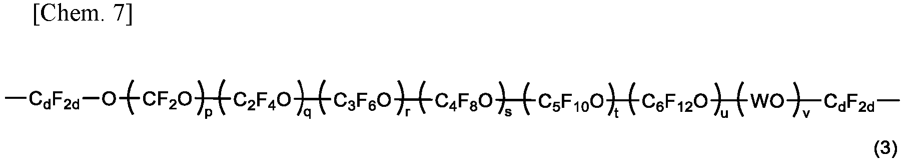 wherein W is a fluoroalkylene group containing at least one hydrogen, d is independently for each unit an integer of 1 to 3, p, q, r, s, t, u, and v each are an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 1,000 to 20,000,
   D is fluorine, a monovalent fluorinated hydrocarbon group which is terminated with CF₃-, CF₂H- or CH₂F- and may contain oxygen, or A, and A is a group represented by the formula (4): 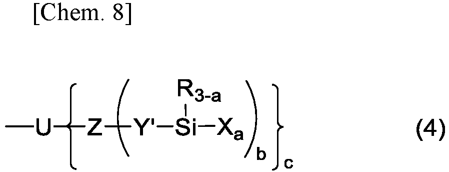 wherein U is a single bond or a di- to tetravalent organic group, Z is independently a single bond, carbon, silicon, nitrogen or a tri- to nonavalent organic group, Y' is independently a C₁-C₈ aliphatic divalent hydrocarbon group or Y, at least one Y' in the molecule is Y, Y, R, X, and a are as defined above, b is an integer of 1 to 8, and c is an integer of 1 to 3.
[6] The fluoropolyether-containing polymer of [5], wherein in formula (4), Z is a single bond, carbon, silicon, nitrogen, a linear, branched or cyclic tri- to octavalent organopolysiloxane residue of 3 to 13 silicon atoms, trivalent isocyanurate or a trivalent triazine ring-containing group.
[7] The fluoropolyether-containing polymer of [5] or [6], wherein in formula (4), U is a single bond, carbonyl, amide, a group represented by the following formula: 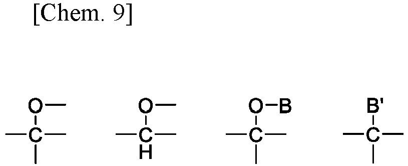
   wherein B is hydrogen, a C₁-C₂₀ monovalent hydrocarbon group or a monovalent polyether group, B' is hydrogen or a C₁-C₂₀ monovalent hydrocarbon group,
   or a C₁-C₂₀ di- to tetravalent hydrocarbon group which may contain at least one atom or group selected from among oxygen, sulfur, hydroxy, polyether, diorganosilylene, a linear divalent organopolysiloxane residue of 2 to 100 silicon atoms, silalkylene, silarylene, secondary amino, tertiary amino, ether, carbonyl, amide and ester.
[8] The fluoropolyether-containing polymer of any one of [5] to [7] wherein the polymer having formula (2) is represented by any one of the following formulae: 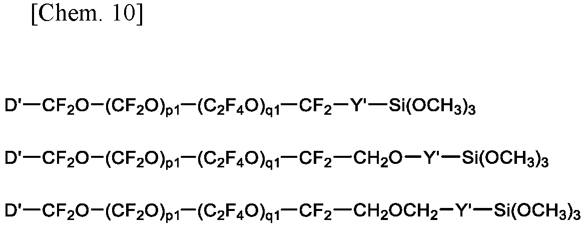 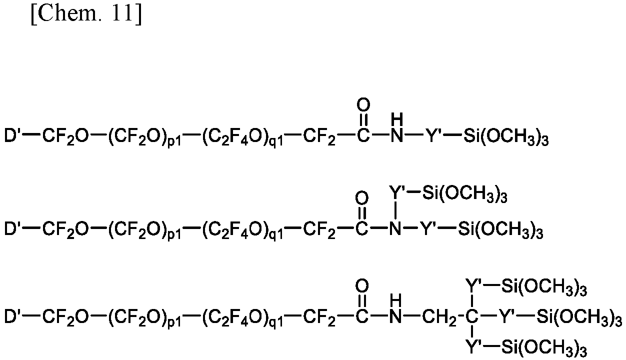 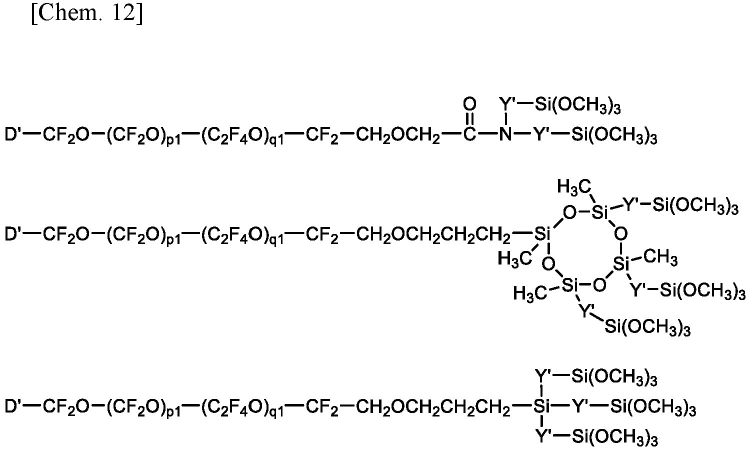 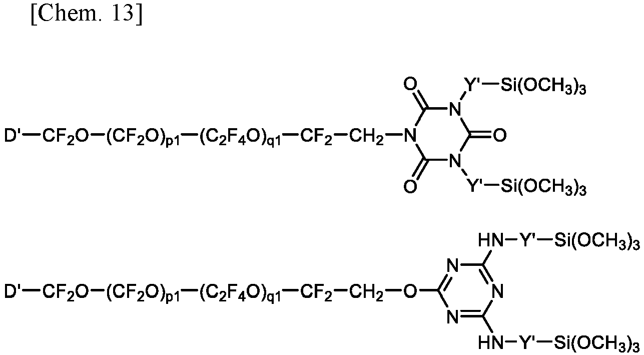 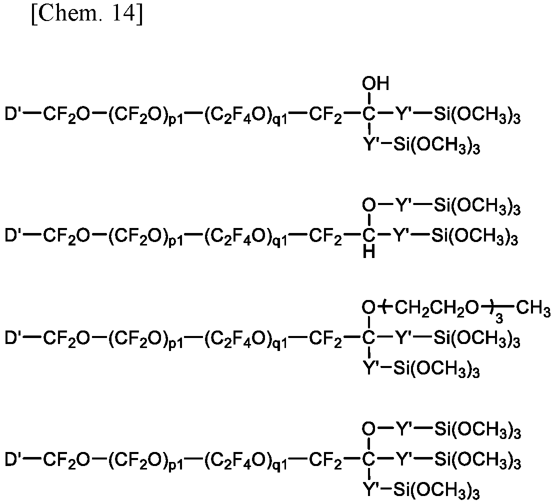 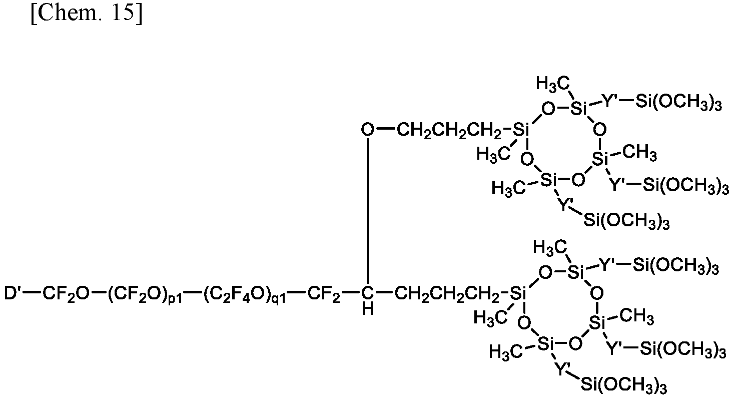 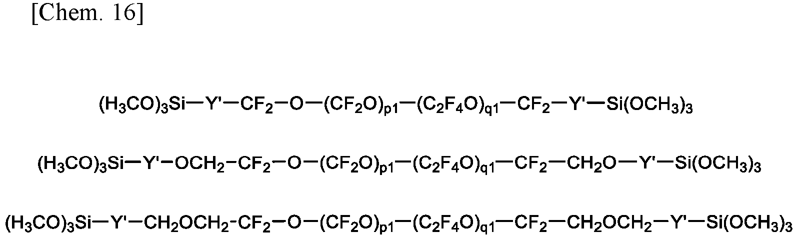 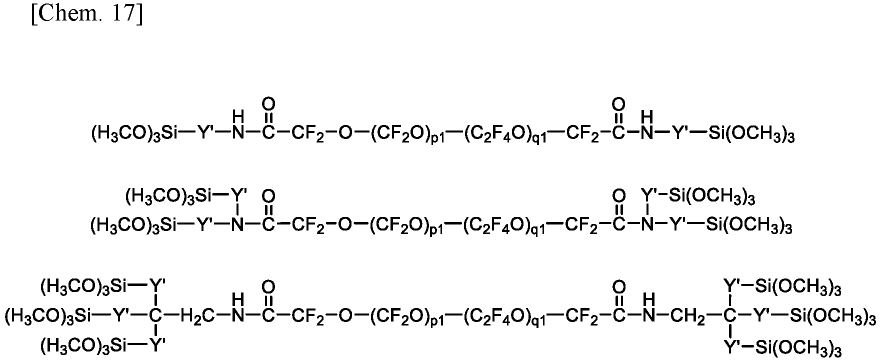 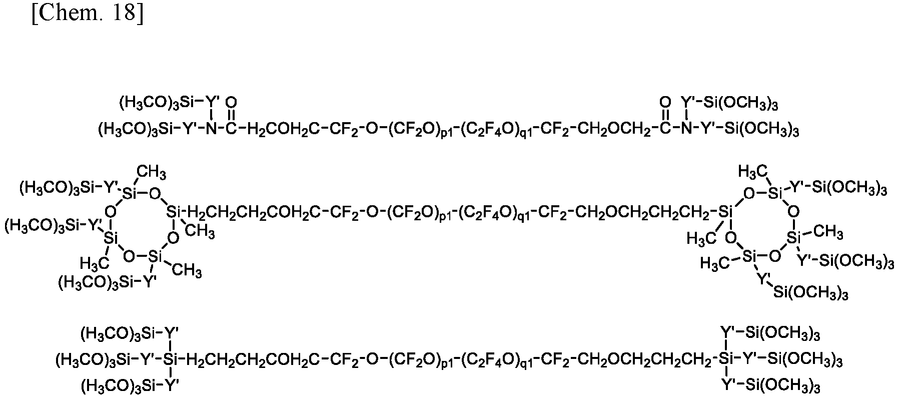 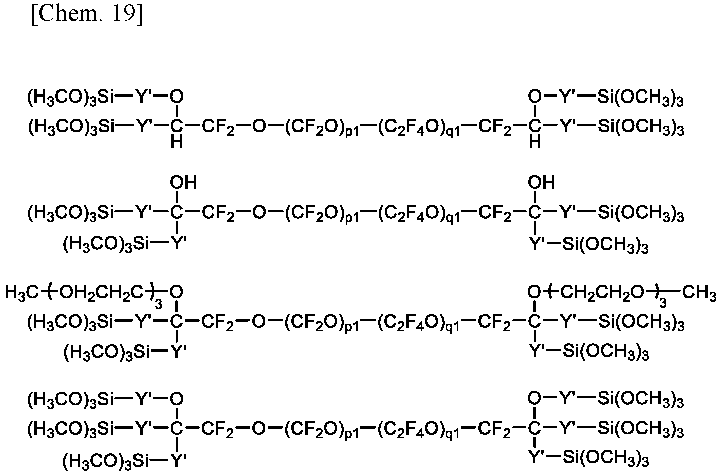 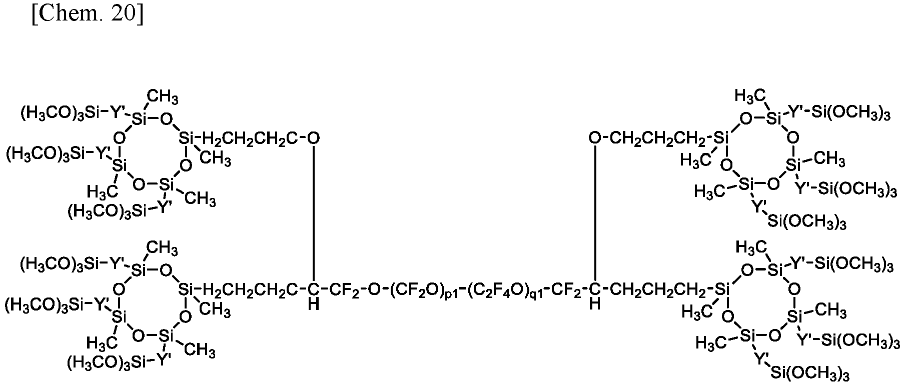 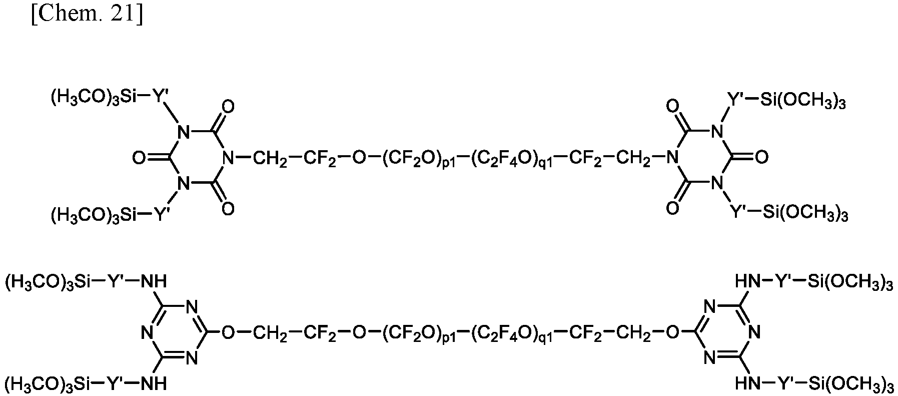 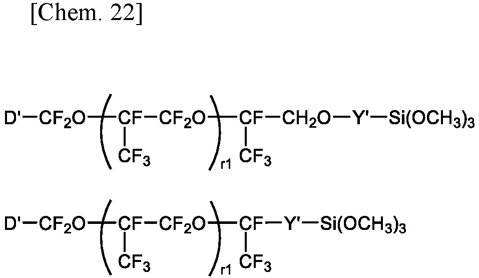 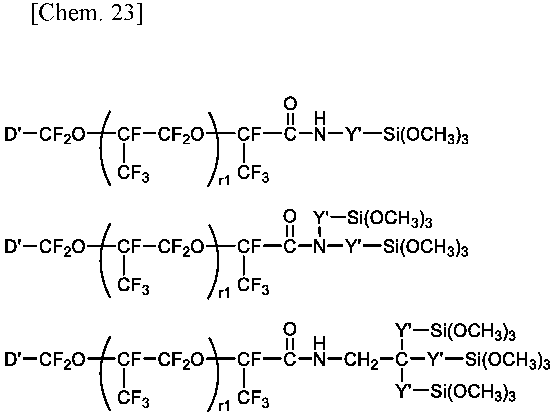 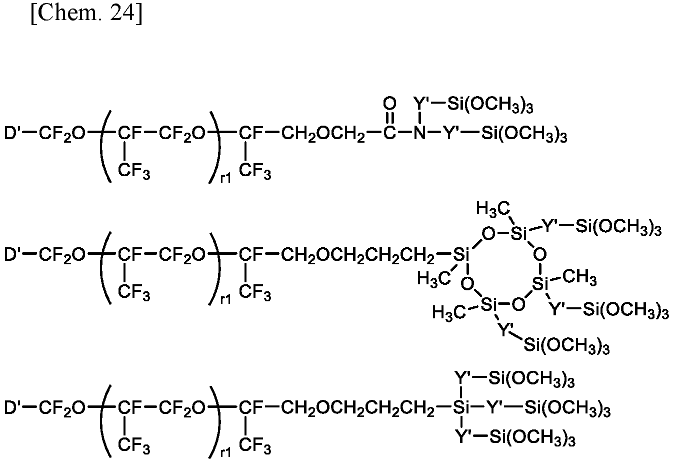 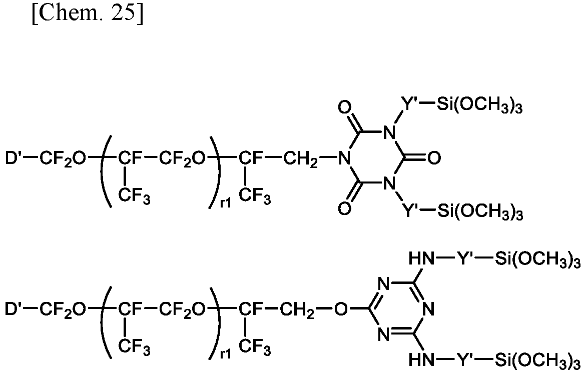 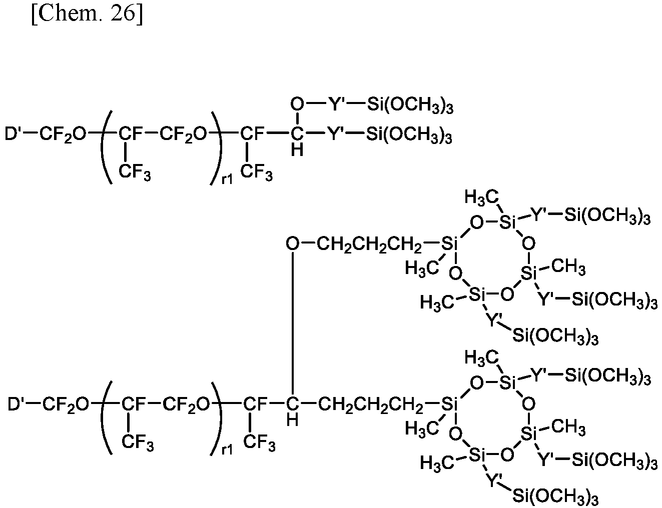 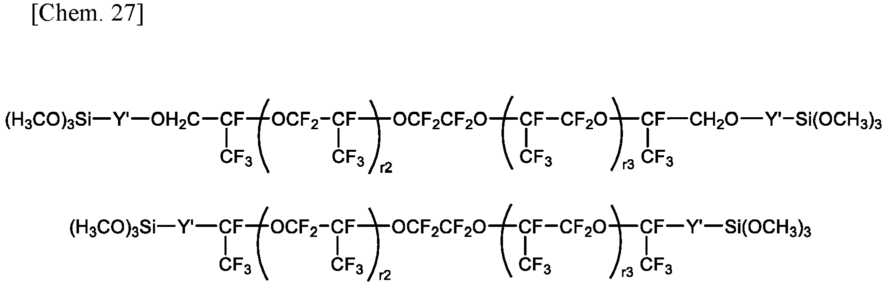 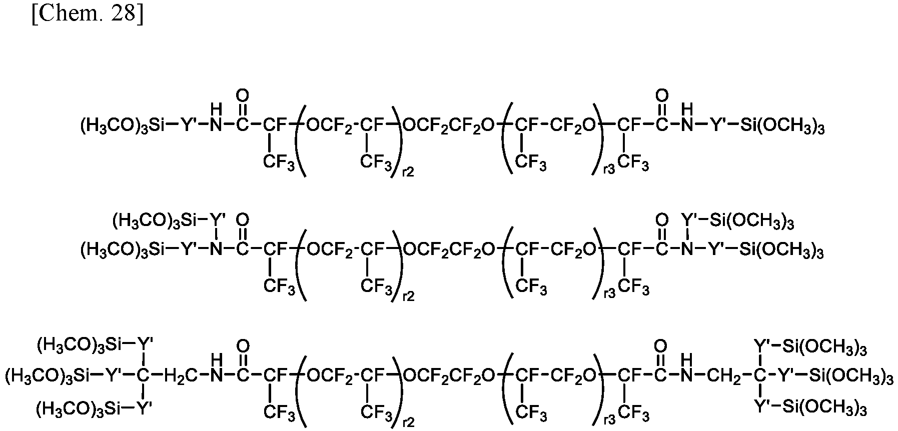 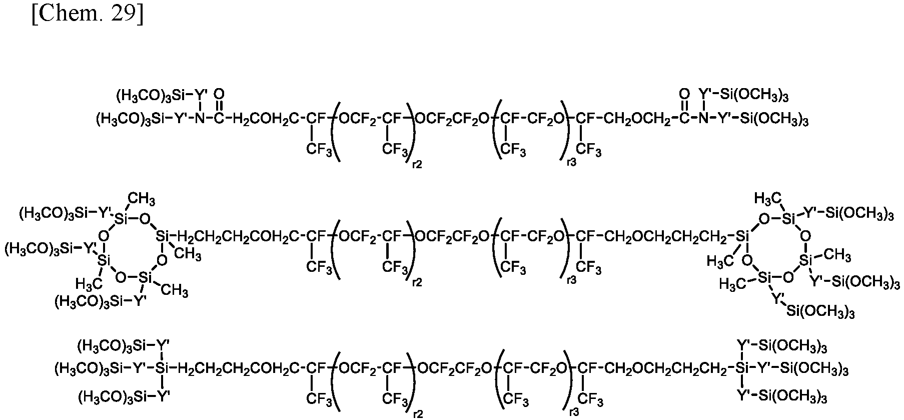 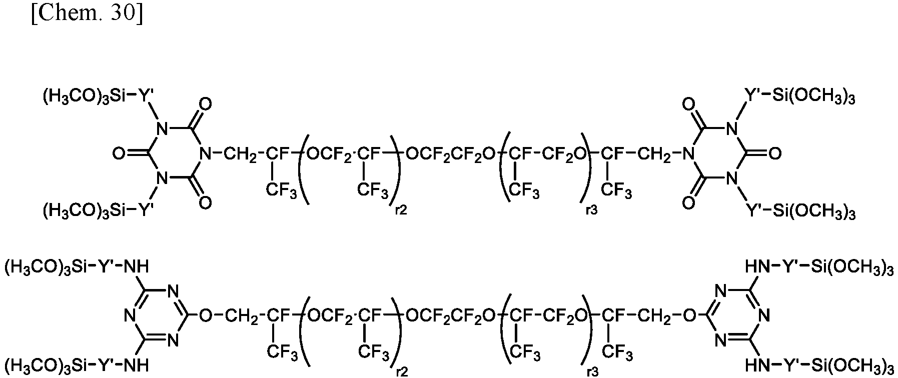 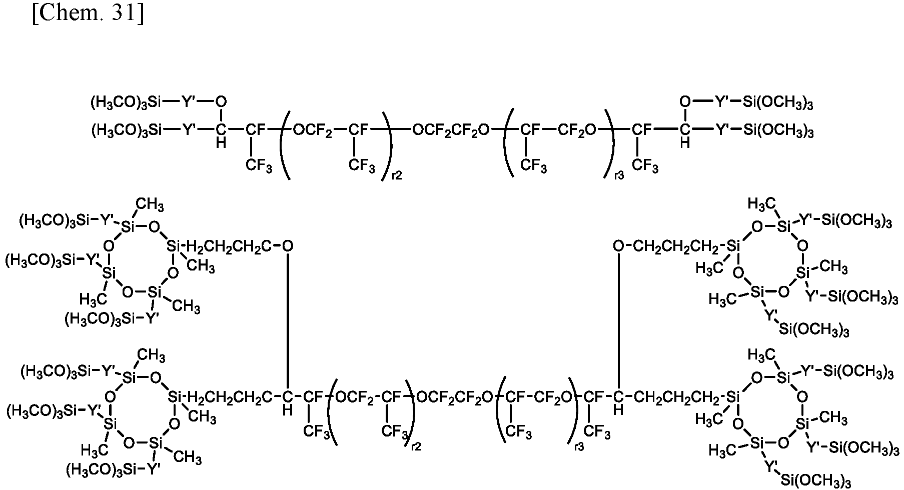 wherein Y' is as defined above, D' is F, CF₃ or CF₃CF₂, p1 is an integer of 5 to 440, q1 is an integer of 5 to 250, p1+q1 is an integer of 20 to 450, r1 is an integer of 20 to 180, r2 is an integer of 1 to 100, r3 is an integer of 1 to 100, r2+r3 is an integer of 20 to 180, and individual repeating units within the parentheses with p1 and q1 may be randomly bonded.
[9] A surface treating agent comprising the fluoropolyether-containing polymer of any one of [1] to [8] and/or a partial (hydrolytic) condensate thereof as a main component.
[10] An article having a surface treated with the surface treating agent of [9].
[11] The article of [10] which is a lens substrate.

### ADVANTAGEOUS EFFECTS OF INVENTION

The fluoropolyether-containing polymer of the invention has a silanol and/or hydrolyzable silyl group and has an o-, m- or p-phenylene group in a linking group (linker) between a fluorooxyalkylene-containing polymer residue (Rf) of the backbone and the silanol and/or hydrolyzable silyl group (-SiXₐ(R)₃-ₐ). An article which is surface-treated with a surface treating agent comprising the polymer and/or a partial (hydrolytic) condensate thereof is improved in water/oil repellency and slipping. Owing to inclusion of an o-, m- or p-phenylene group in the linker unit, the article which is surface-treated with the surface treating agent is improved in substrate adhesion and chucking properties, especially lens substrates.

### DESCRIPTION OF EMBODIMENTS

The fluoropolyether-containing polymer of the invention is a fluoropolyether-containing polymer (or a fluorooxyalkylene-containing polymer) having, at at least one end in the molecule, at least one group represented by the formula (1), preferably 1 to 12 groups represented by the formula (1), more preferably 1 to 8 groups represented by the formula (1).

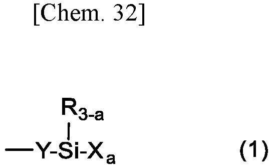

Herein Y is a divalent organic group containing an o-, m- or p-phenylene group, R is a C₁-C₄ alkyl group or phenyl group, X is independently a hydroxy or hydrolyzable group, and a is 2 or 3.

In formula (1), Y is a divalent organic group containing an o-, m- or p-phenylene group and a preferred example thereof is represented by the formula (5).

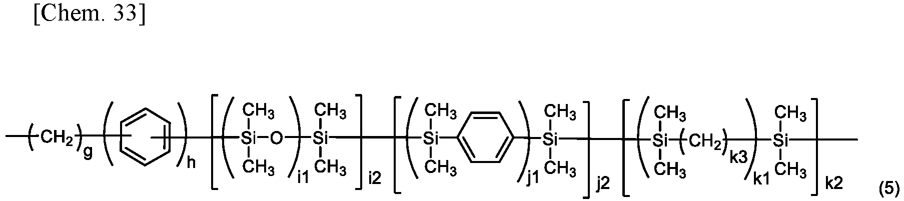

Herein g is an integer of 0 to 20, h is an integer of 1 to 3, i1, j1 and k1 are an integer of 1 to 10, i2, j2 and k2 are an integer of 0 to 5, k3 is an integer of 1 to 10, individual repeating units may be randomly bonded, and when (CH₂)_{g} are separated into a plurality of blocks, numbers of repetition of (CH₂) units in the plurality of blocks may be the same or different.

In formula (5), g is an integer of 0 to 20, preferably an integer of 0 to 8, h is an integer of 1 to 3, preferably 1, i1, j1, k1 each are an integer of 1 to 10, i1 is preferably an integer of 1 to 3, j1 is preferably an integer of 1 to 3, k1 is preferably an integer of 1 to 3, i2, j2, and k2 each are an integer of 0 to 5, i2 is preferably an integer of 0 to 2, j2 is preferably an integer of 0 to 2, k2 is preferably an integer of 0 to 2, k3 is an integer of 1 to 10, preferably an integer of 1 to 3, and individual repeating units may be randomly bonded.

Examples of Y include the following groups. The valence bond on the right side is preferably attached to silicon in formula (1).

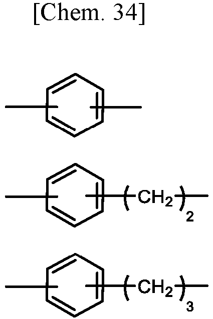

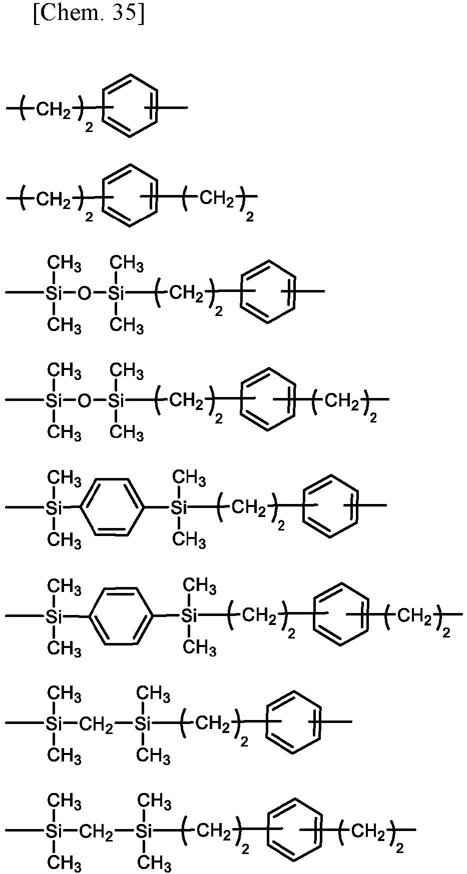

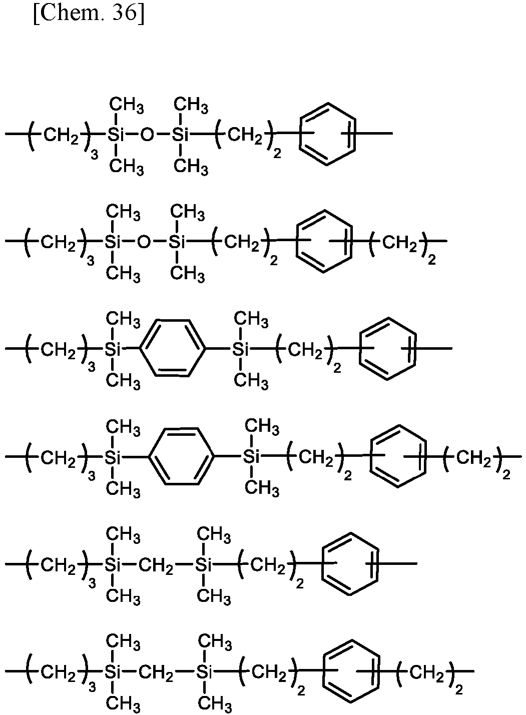

In formula (1), X is independently a hydroxy group or a hydrolyzable group selected from the group consisting of C₁-C₁₀ alkoxy groups such as methoxy, ethoxy, propoxy, isopropoxy, butoxy, isobutoxy, sec-butoxy and tert-butoxy, C₂-C₁₀ alkoxyalkoxy groups such as methoxymethoxy, methoxyethoxy, ethoxymethoxy and ethoxyethoxy, C₂-C₁₀ acyloxy groups such as acetoxy and propionoxy, C₂-C₁₀ alkenyloxy groups such as vinyloxy, allyloxy, propenoxy and isopropenoxy, and halogens such as chloro, bromo and iodo.

In formula (1), R is independently a C₁-C₄ alkyl group such as methyl, ethyl, propyl or butyl or phenyl.

In formula (1), a is 2 or 3 and is preferably 3.

When the fluoropolyether-containing polymer of the invention has two or more groups represented by formula (1) in the molecule, the groups represented by formula (1) may be the same or different.

The fluoropolyether-containing polymer of the invention is preferably a fluoropolyether-containing polymer represented by the formula (2).

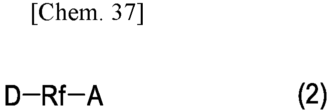

Herein Rf is a divalent fluorooxyalkylene-containing polymer residue represented by the formula (3).

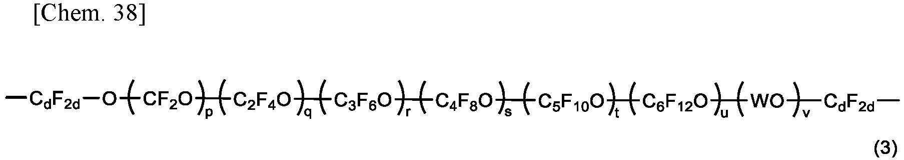

Herein W is a fluoroalkylene group containing at least one hydrogen, d is independently for each unit an integer of 1 to 3, p, q, r, s, t, u, and v each are an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 1,000 to 20,000.

D is fluorine, a monovalent fluorinated hydrocarbon group which is terminated with CF₃-, CF₂H- or CH₂F- and may contain oxygen, or A, and A is a group represented by the formula (4).

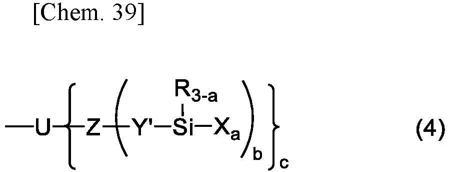

Herein U is a single bond or a di- to tetravalent organic group, Z is independently a single bond, carbon, silicon, nitrogen or a tri- to nonavalent organic group, Y' is independently a C₁-C₈ aliphatic divalent hydrocarbon group or Y, at least one Y' in the molecule is Y, Y, R, X, a are as defined above, b is an integer of 1 to 8, and c is an integer of 1 to 3.

In formula (2), Rf is a divalent fluorooxyalkylene-containing polymer residue represented by the formula (3).

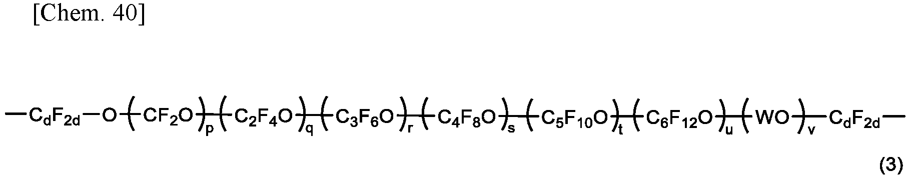

In formula (3), W is a fluoroalkylene group containing at least one hydrogen. Examples thereof include perfluoroalkylene groups such as CF₂, C₂F₄, C₃F₆, C₄F₈, C₅F₁₀, and C₆F₁₂, in which one or two fluorine atoms are substituted by hydrogen atoms.

In formula (3), d is independently for each unit an integer of 1 to 3, preferably 1 or 2.

Also, p, q, r, s, t, u, and v each are an integer of 0 to 450, preferably p is an integer of 0 to 440, q is an integer of 0 to 250, r is an integer of 0 to 180, s is an integer of 0 to 100, t is an integer of 0 to 100, u is an integer of 0 to 100, v is an integer of 0 to 100, and p+q+r+s+t+u+v is 20 to 450, preferably 20 to 200. When p+q+r+s+t+u+v is not more than the upper limit, adhesion and curability are satisfactory, and when the same is not less than the lower limit, the characteristics of fluoropolyether group are fully developed. Each of the units associated with p, q, r, s, t, u and v may be linear or branched. Individual repeating units within the parentheses with p, q, r, s, t, u and v may be randomly bonded.

The fluorooxyalkylene-containing polymer residue Rf should have a number average molecular weight (Mn) of 1,000 to 20,000, preferably 2,000 to 15,000. As used herein, Mn may be computed by gel permeation chromatography (GPC) using a fluorochemical solvent as the developing solvent or spectroscopy such as ¹⁹F-NMR.

Examples of Rf are shown below.

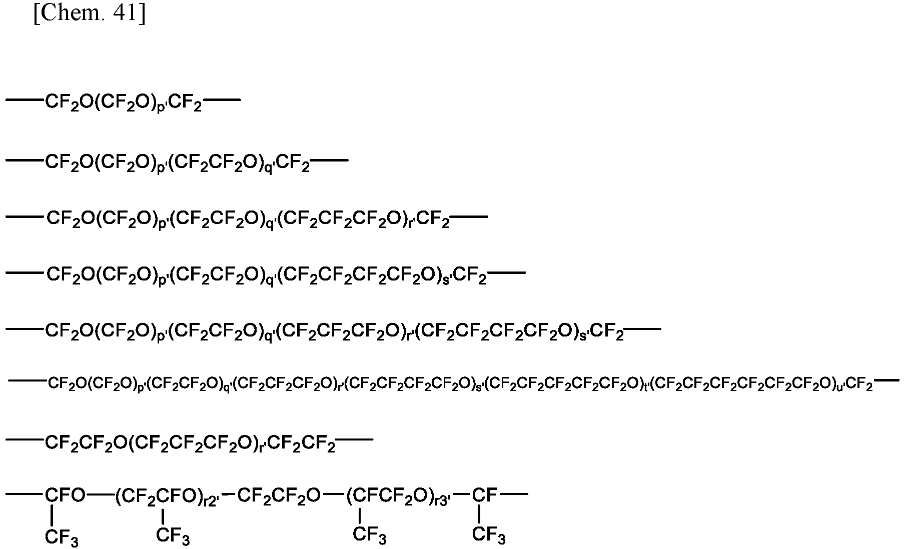

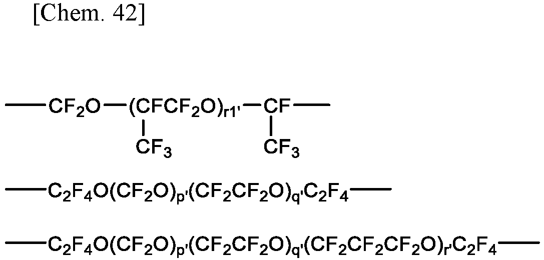

Herein, p', q', r', s', t', and u' each are an integer of at least 1, their upper limit is the same as the upper limit of p, q, r, s, t, and u, and the sum of p', q', r', s', t', and u' is 20 to 450; r1' is an integer of 20 to 180; r2' and r3' each an integer of 1 to 100, and the sum of r2' and r3' is 20 to 180. Also, individual repeating units within the parentheses with p', q', r', s', t', and u' may be randomly bonded.

In formula (2), D is fluorine, a monovalent fluorinated hydrocarbon group which is terminated with CF₃-, CF₂H- or CH₂F- and may contain oxygen, or A (group having formula (4) described later). The monovalent fluorinated hydrocarbon group which is terminated with CF₃-, CF₂H- or CH₂F- and may contain oxygen is preferably a C₁-C₆ fluoroalkyl group, more preferably a polymer terminated with CF₃- or CF₂H-.

Examples of D being the monovalent fluorinated hydrocarbon group which is terminated with CF₃-, CF₂H- or CH₂F- and may contain oxygen include the following groups.

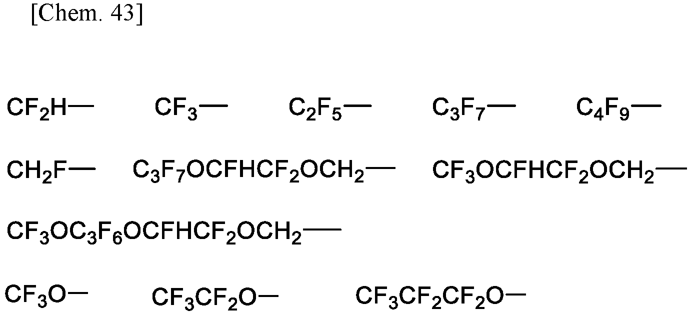

D is preferably fluorine, CF₃-, CF₃CF₂- or A.

In formula (2), A is a group represented by the formula (4).

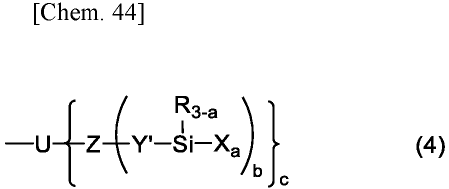

Herein U is a single bond or a di- to tetravalent organic group, Z is independently a single bond, carbon, silicon, nitrogen or a tri- to nonavalent organic group, Y' is independently a C₁-C₈ aliphatic divalent hydrocarbon group or Y, at least one Y' in the molecule is Y, Y, R, X, and a are as defined above, b is an integer of 1 to 8, and c is an integer of 1 to 3.

In formula (4), U is a single bond or a di- to tetravalent organic group, preferably a single bond, carbonyl, amide, a group having the formula: 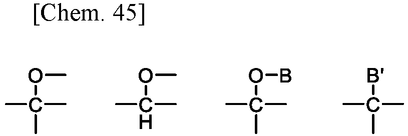 wherein B is hydrogen, a C₁-C₂₀ monovalent hydrocarbon group or a monovalent polyether group, B' is hydrogen or a C₁-C₂₀ monovalent hydrocarbon group. The valence bond on the left side is attached to Rf in formula (2) and other valence bonds are attached to Z, or a C₁-C₂₀ di- to tetravalent hydrocarbon group which may contain at least one atom or group selected from among oxygen, sulfur, hydroxy, polyether, diorganosilylene (e.g., dimethylsilylene), a linear divalent organopolysiloxane residue of 2 to 100, preferably 2 to 50 silicon atoms, silalkylene, silarylene, secondary amino, tertiary amino, ether, carbonyl, amide and ester.

Herein in the formulae, examples of B and B' being C₁-C₂₀ monovalent hydrocarbon groups include linear alkyl groups such as methyl, ethyl, propyl, butyl, pentyl, hexyl, heptyl, octyl, and decyl, branched alkyl groups such as isopropyl, isobutyl, tert-butyl, neopentyl, and thexyl, cyclic alkyl groups such as cyclopentyl and cyclohexyl, alkenyl groups such as vinyl, allyl, and propenyl, aryl groups such as phenyl and tolyl, and aralkyl groups such as benzyl and phenethyl.

B being the monovalent polyether group is preferably -(Cₑ₁H₂ₑ₁O)ₑ-CH₃ (e1 is an integer of 1 to 6 and e is an integer of 1 to 30).

An example of the linear divalent organopolysiloxane residue of 2 to 100, preferably 2 to 50 silicon atoms which may be contained in the di- to tetravalent hydrocarbon group is shown below: 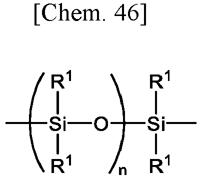 wherein R¹ is a C₁-C₄ alkyl group such as methyl, ethyl, propyl or butyl or a C₆-C₁₀ aryl group such as phenyl, R¹ may be the same or different, and n is an integer of 1 to 99, preferably an integer of 1 to 49.

An example of the silalkylene or silarylene is shown below: 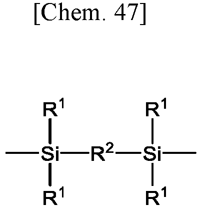 wherein R¹ is as defined above, R¹ may be the same or different, R² is a C₁-C₄ alkylene group such as methylene, ethylene, propylene or butylene or a C₆-C₁₀ arylene group such as phenylene.

Examples of U include the following groups. Preferably the valence bond on the left side is attached to Rf and other valence bonds are attached to Z.

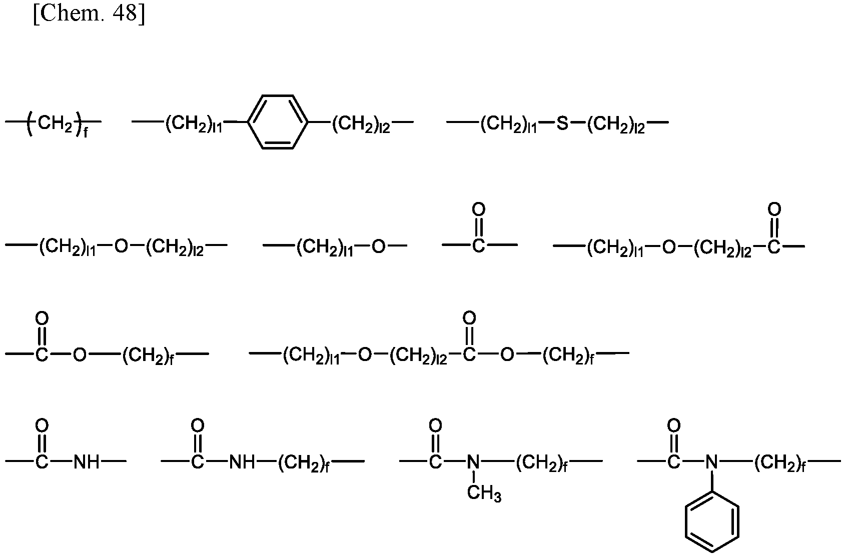

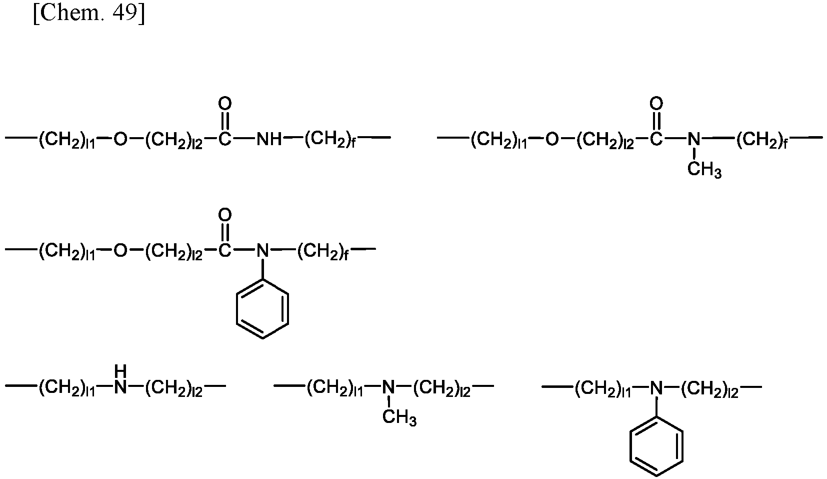

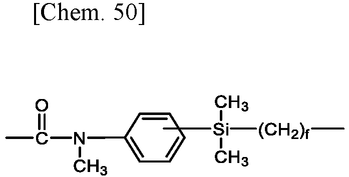

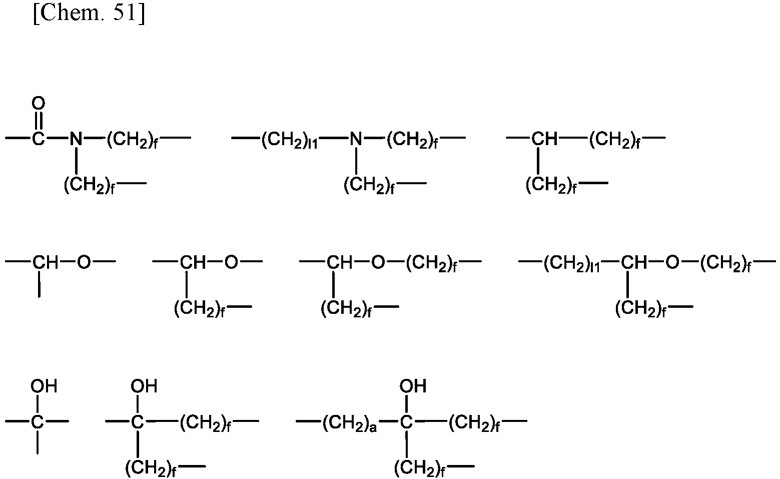

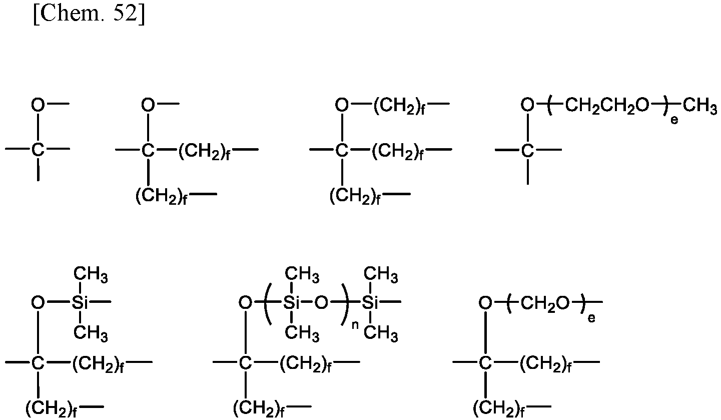

Herein f is independently an integer of 1 to 4, l1 and l2 are an integer of 1 to 4, n is an integer of 1 to 99, and e is an integer of 1 to 30.

In formula (4), Z is independently a single bond, carbon, silicon, nitrogen, or a tri- to nonavalent organic group, preferably a single bond, carbon, silicon, nitrogen, a linear, branched or cyclic tri- to octavalent organopolysiloxane residue of 3 to 13 silicon atoms, especially 3 to 5 silicon atoms, trivalent isocyanurate or a trivalent triazine ring-containing group. The organopolysiloxane residue may contain a silalkylene structure in which two silicon atoms are bonded with an alkylene group.

Examples of the linear, branched or cyclic tri- to octavalent organopolysiloxane residue of 3 to 13 silicon atoms, especially 3 to 5 silicon atoms are shown by the following formulae.

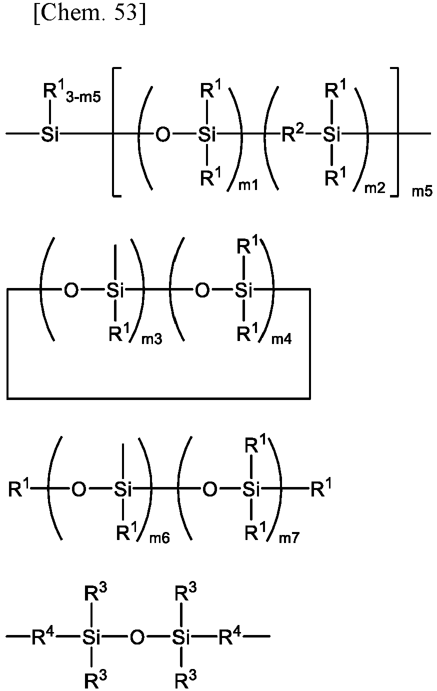

Herein R¹ which may be the same or different is a C₁-C₄ alkyl group such as methyl, ethyl, propyl or butyl, or C₆-C₁₀ aryl group such as phenyl. R² is a C₁-C₄ alkylene group such as methylene, ethylene, propylene or butylene, or C₆-C₁₀ arylene group such as phenylene. R³ is independently R¹ or a group having the formula (6): 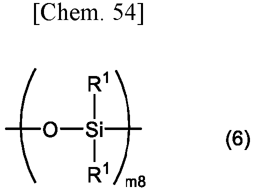
wherein R¹ is as defined above, m8 is an integer of 1 to 6, preferably 1, the valence bond on the left side is attached to Si,
R⁴ is independently a single bond or a group having the formula (7): 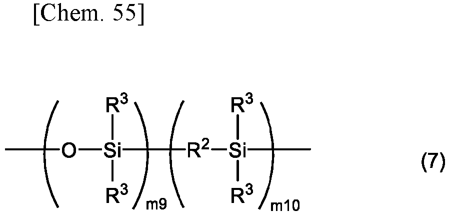
wherein R² and R³ are as defined above, m9 is an integer of 0 to 6, preferably an integer of 0 to 3, m10 is an integer of 0 to 6, preferably an integer of 0 to 2, m9+m10 ≠ 0, individual repeating units within the parentheses may be randomly bonded, and the valence bond on the left side is attached to Si,
at least one R³ being formula (6). m1 is an integer of 1 to 9, preferably an integer of 1 to 4, m2 is 0 to 9, preferably an integer of 0 to 3, m3 is an integer of 2 to 6, preferably an integer of 3 to 5, m4 is an integer of 0 to 8, preferably 0 or 1, m3+m4 is an integer of 3 to 10, preferably an integer of 3 to 5, m5 is 2 or 3, m6 is an integer of 3 to 9, preferably an integer of 3 to 7, m7 is an integer of 0 to 9, preferably an integer of 0 to 3, and individual repeating units within the parentheses may be randomly bonded. The organopolysiloxane residues each have 3 to 13 silicon atoms.

Examples of Z include the following groups. Preferably the valence bond on the left side is attached to U and other valence bonds are attached to Y.

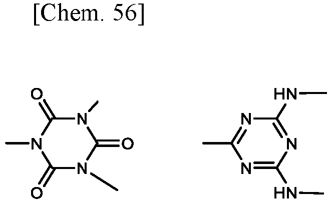

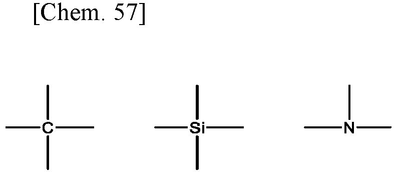

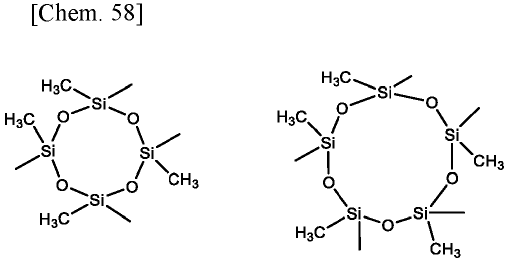

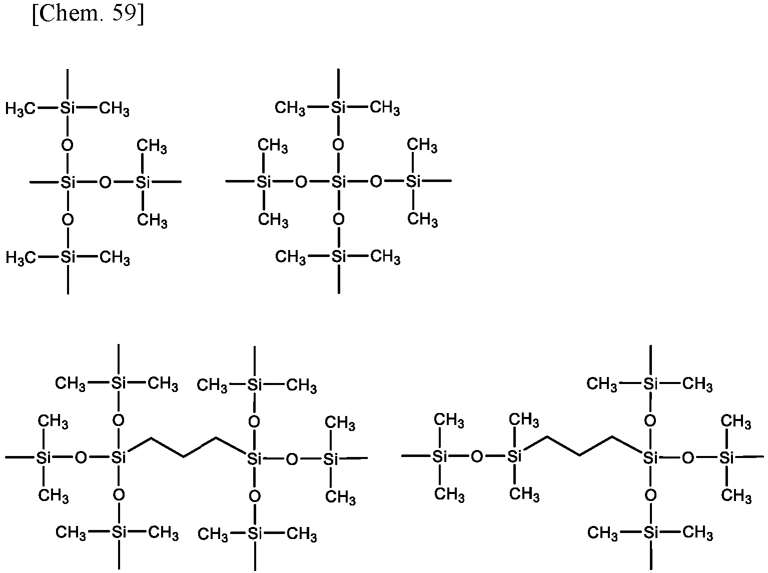

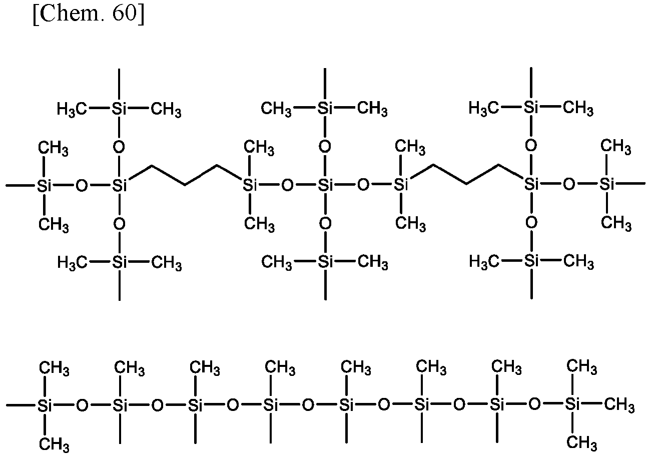

In formula (4), Y' is independently a C₁-C₈ aliphatic divalent hydrocarbon group or Y, at least one Y' in the molecule being Y.

The C₁-C₈ aliphatic divalent hydrocarbon group is exemplified by alkylene groups such as methylene, ethylene, propylene (trimethylene, methylethylene), butylene (tetramethylene, methylpropylene), hexamethylene, and octamethylene, and is preferably propylene.

Y is as defined above for Y in formula (1). At least one Y' in the molecule is Y and all Y' are preferably Y. When formula (4) contains a plurality of Y, Y may be the same or different.

In formula (4), R, X, and a are as defined in formula (1).

In formula (4), b is an integer of 1 to 8, preferably an integer of 1 to 4, and c is an integer of 1 to 3, preferably 1 or 2.

Examples of the fluoropolyether-containing polymer having formula (2) include the following structures.

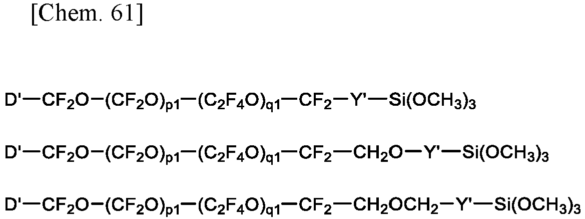

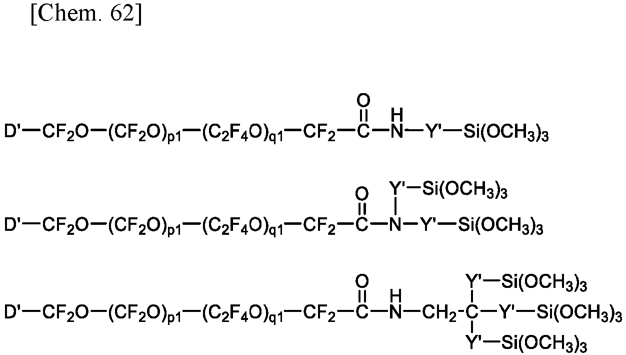

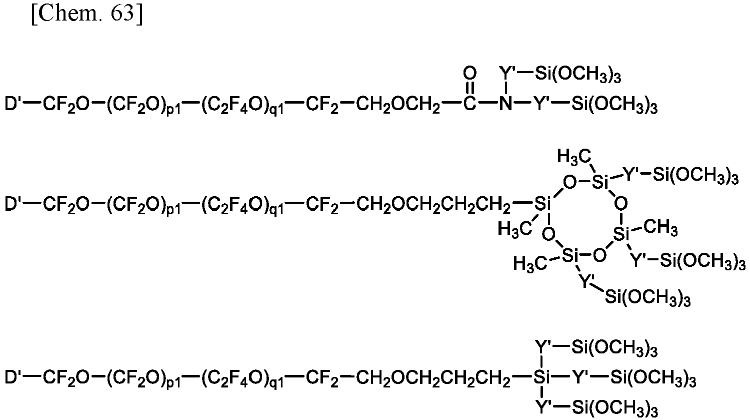

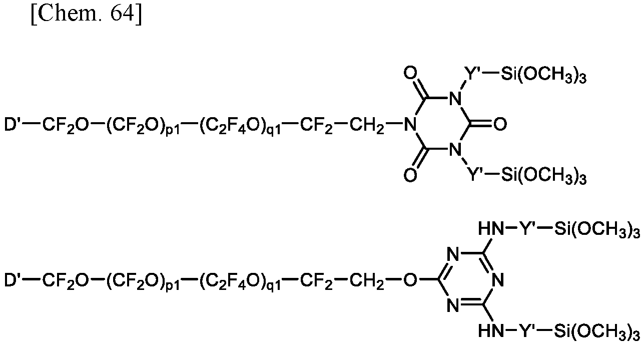

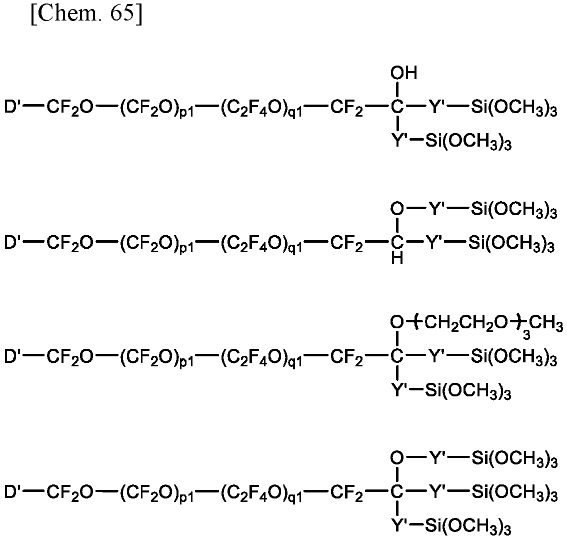

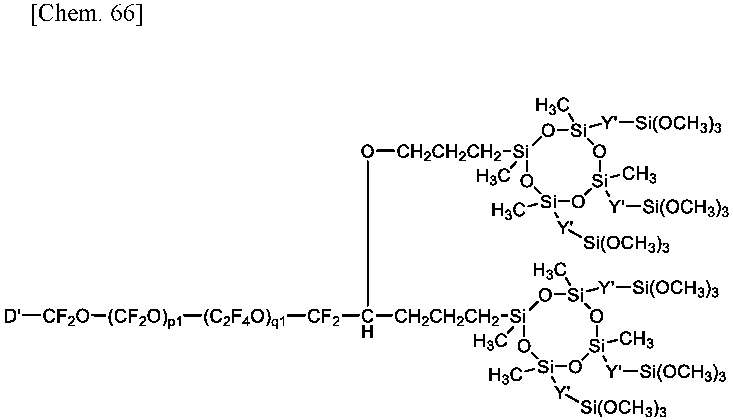

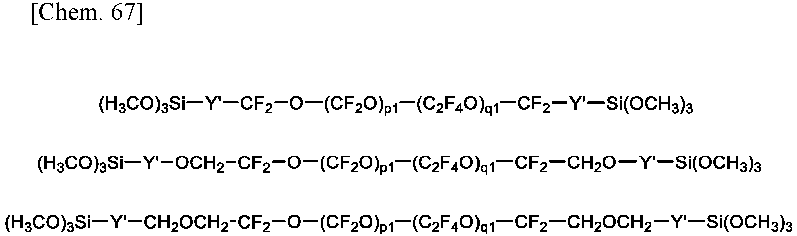

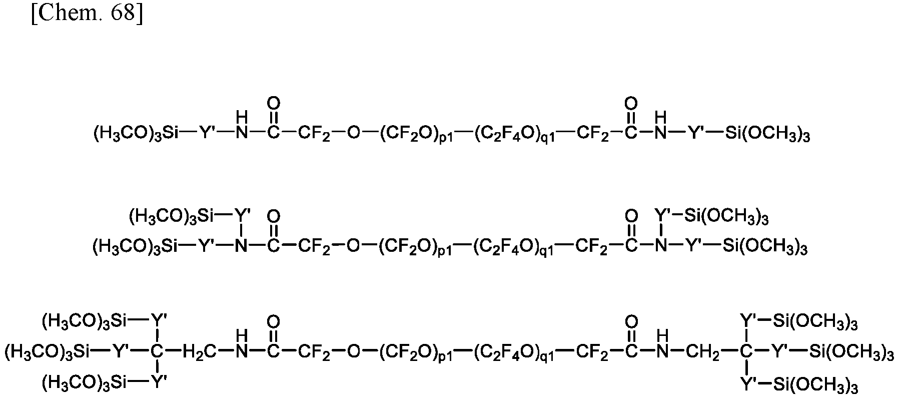

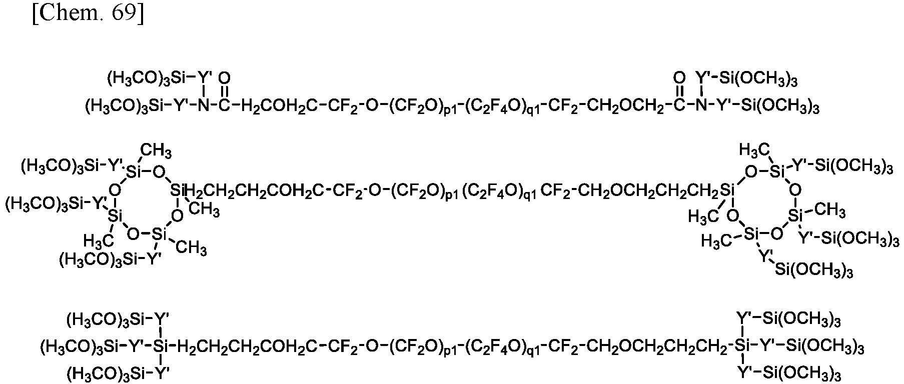

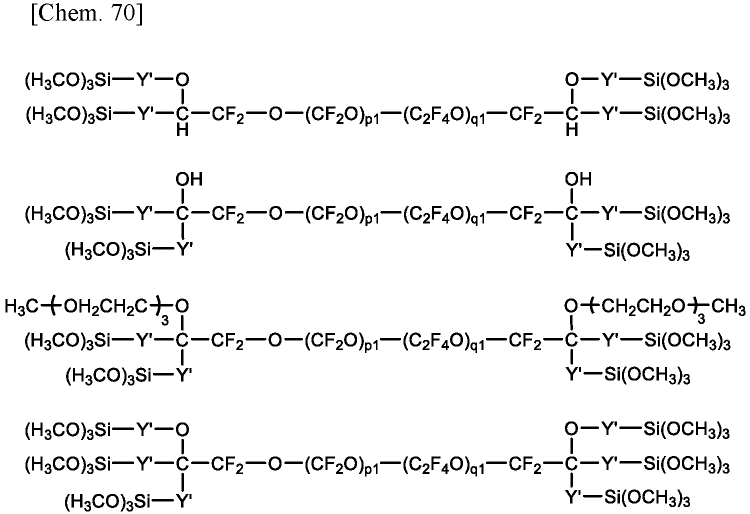

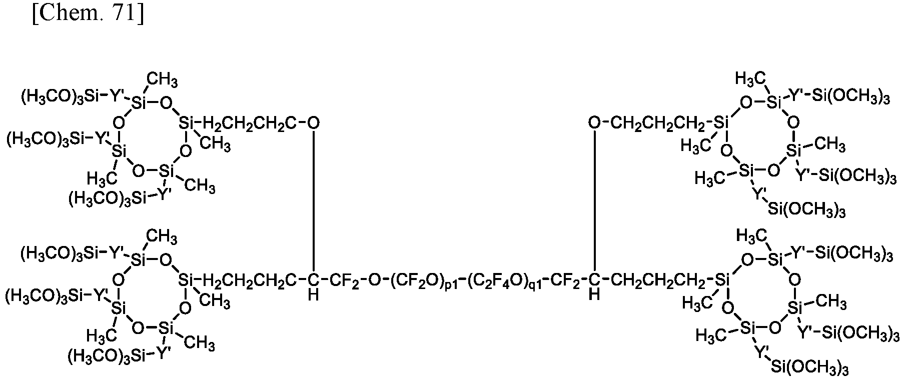

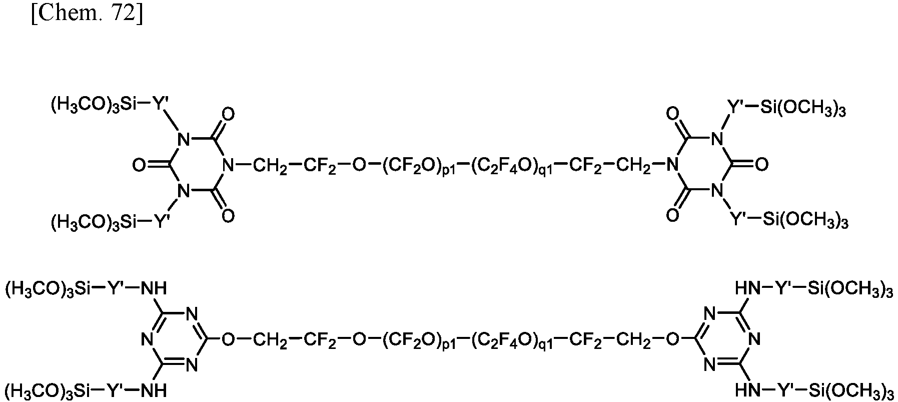

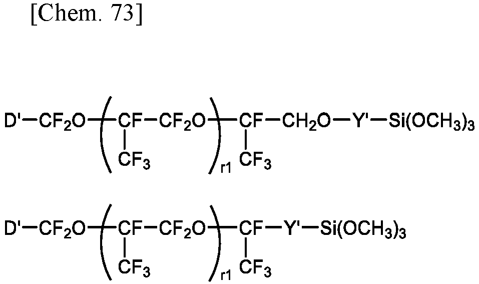

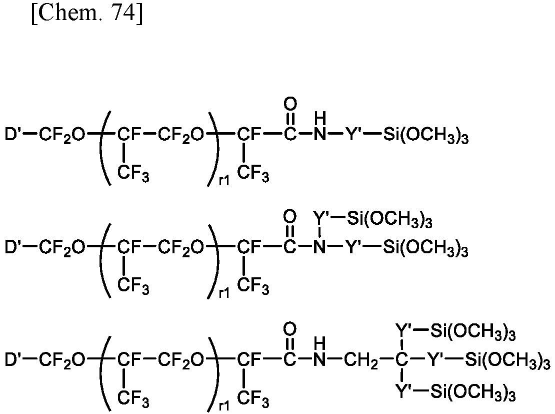

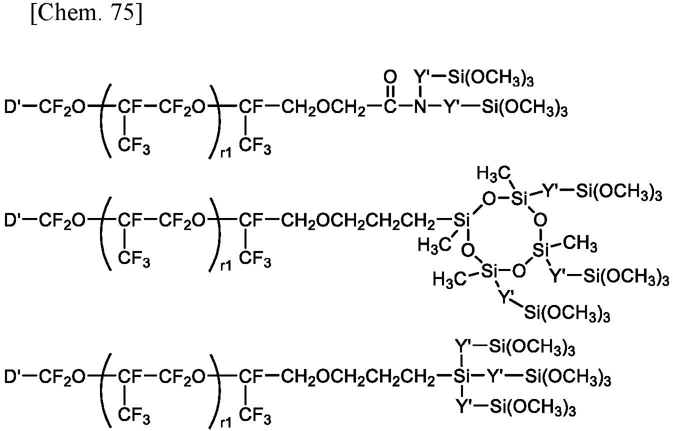

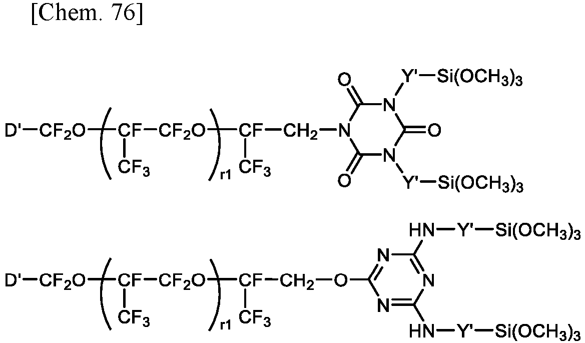

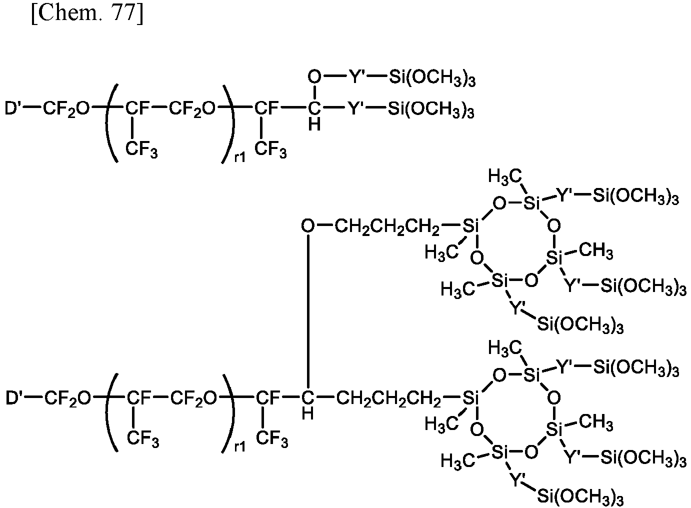

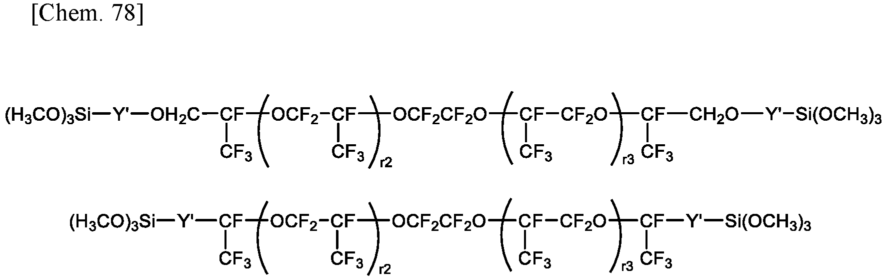

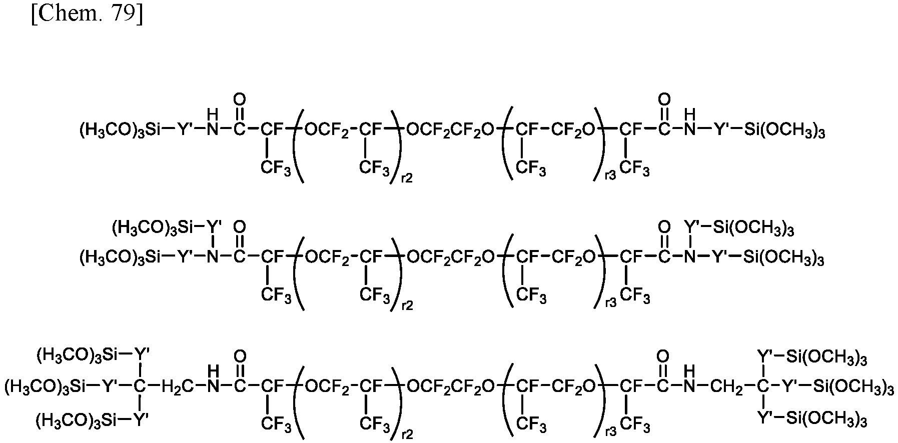

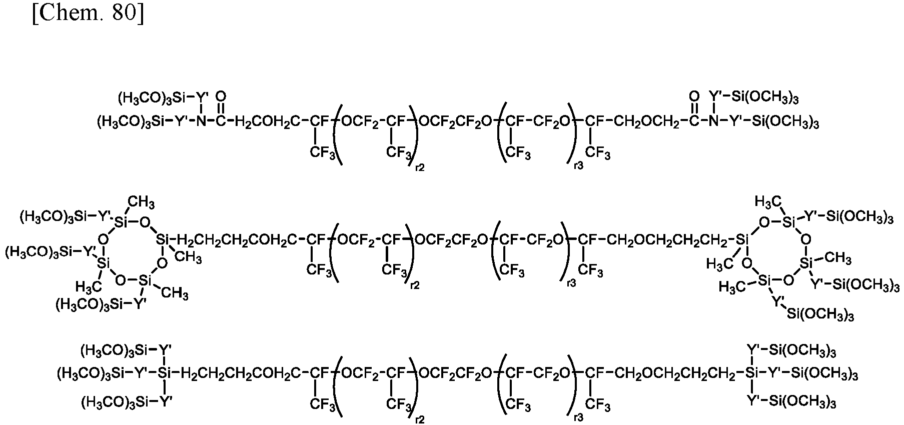

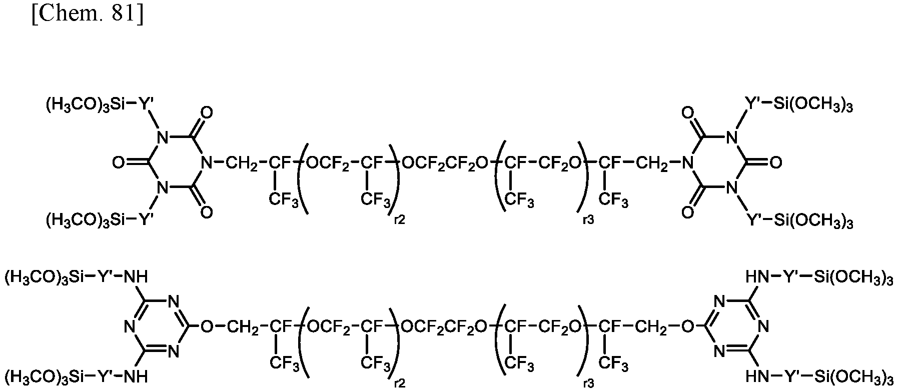

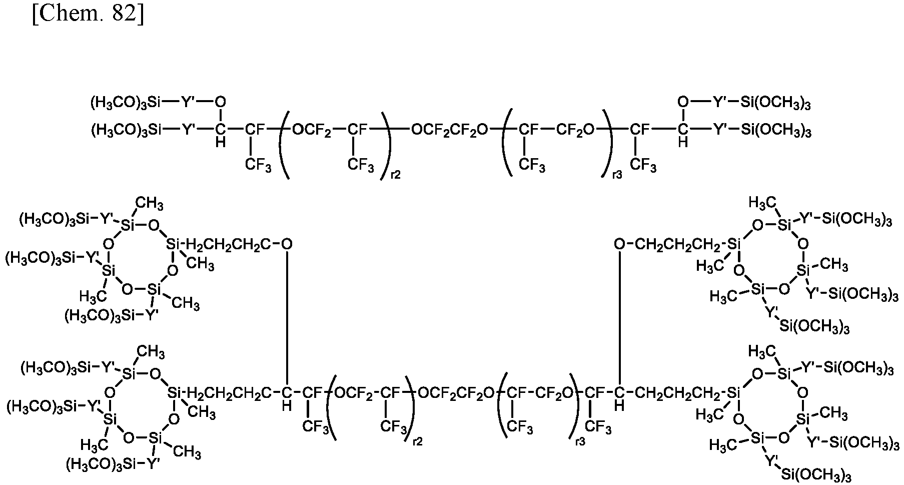

Herein Y' is as defined above, D' is F, CF₃ or CF₃CF₂, p1 is an integer of 5 to 440, q1 is an integer of 5 to 250, p1+q1 is an integer of 20 to 450, preferably an integer of 20 to 200, r1 is an integer of 20 to 180, r2 is an integer of 1 to 100, r3 is an integer of 1 to 100, and r2+r3 is an integer of 20 to 180. Individual repeating units within the parentheses with p1 and q1 may be randomly bonded.

In particular, examples of the fluoropolyether-containing polymer having formula (2) include the structures shown below. A series of fluoropolyether-containing polymers having a silanol and/or hydrolyzable silyl group are obtained by changing the combination of Rf, D, and A in formula (2). In the following formulae, D' is F, CF₃ or CF₃CF₂, p1 is an integer of 5 to 440, q1 is an integer of 5 to 250, p1+q1 is an integer of 20 to 450, preferably an integer of 20 to 200, r1 is an integer of 20 to 180, r2 is an integer of 1 to 100, r3 is an integer of 1 to 100, and r2+r3 is an integer of 20 to 180. Individual repeating units within the parentheses with p1 and q1 may be randomly bonded.

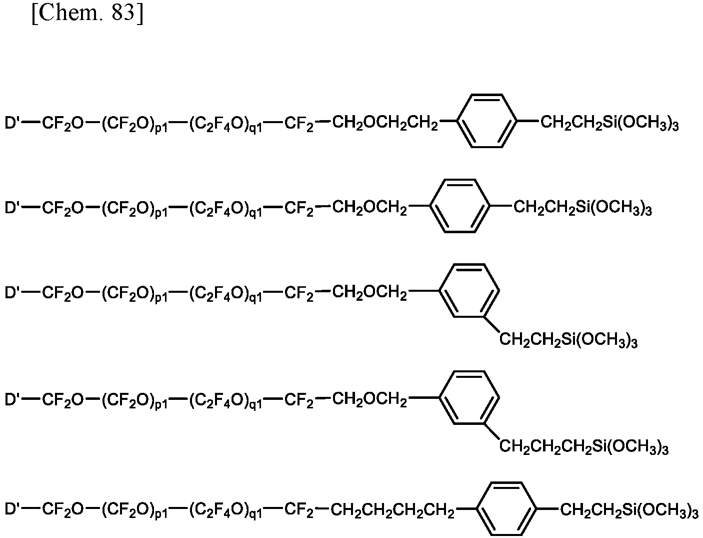

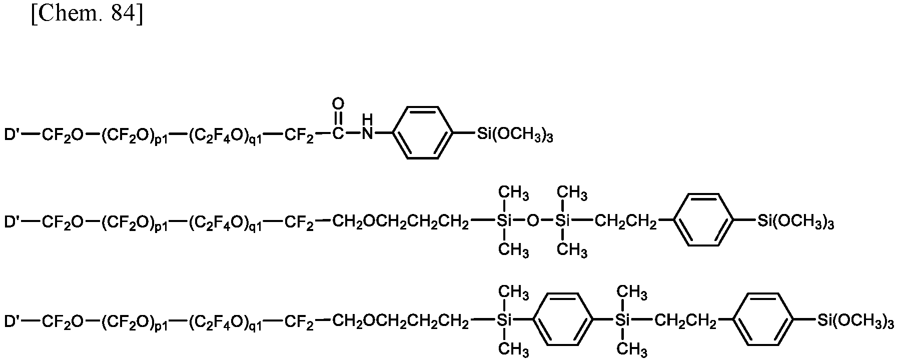

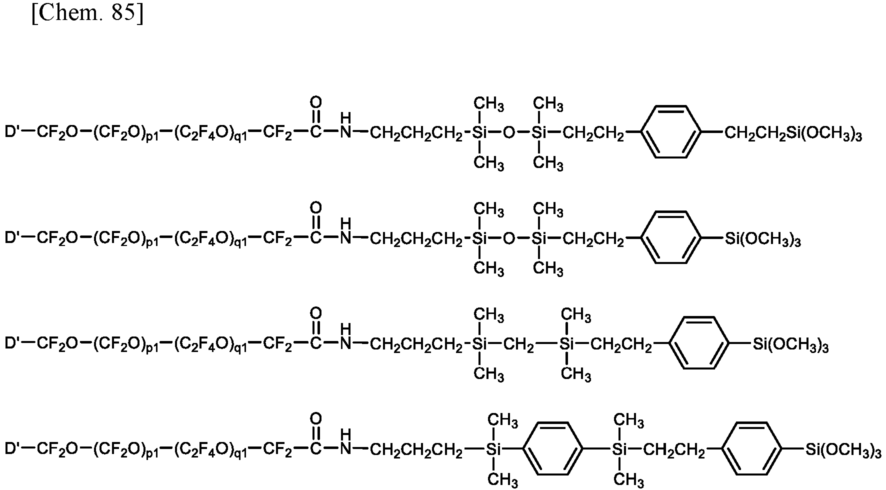

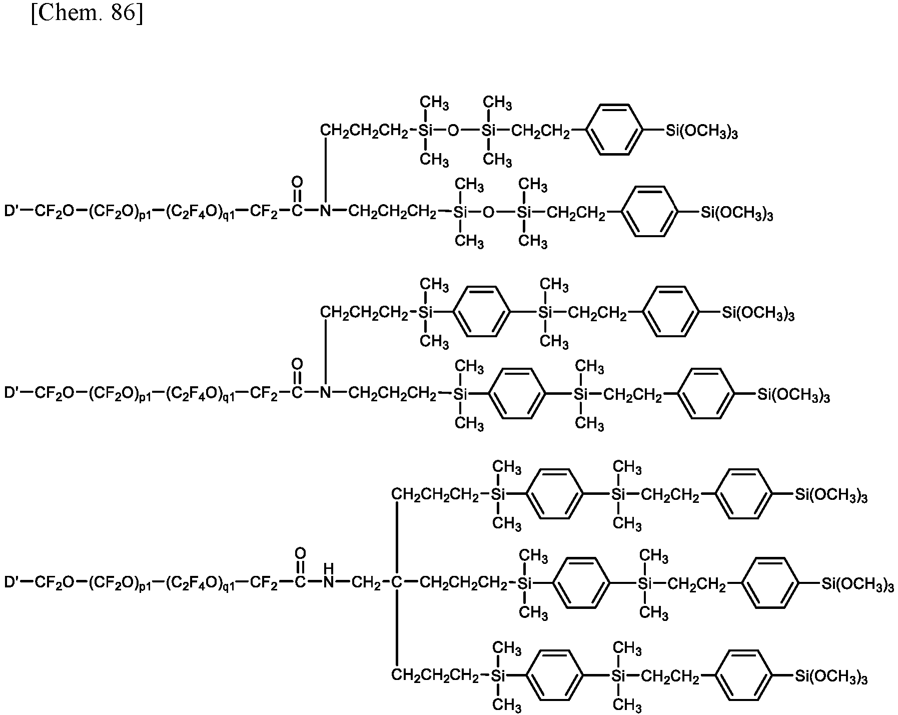

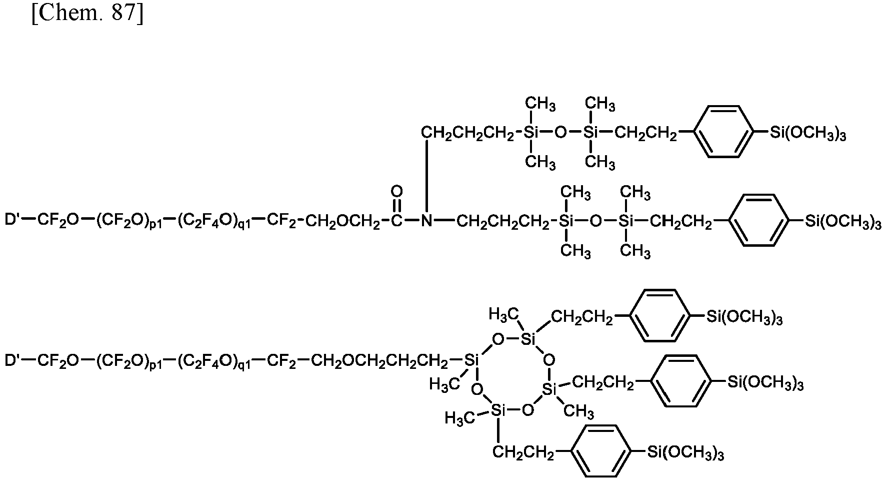

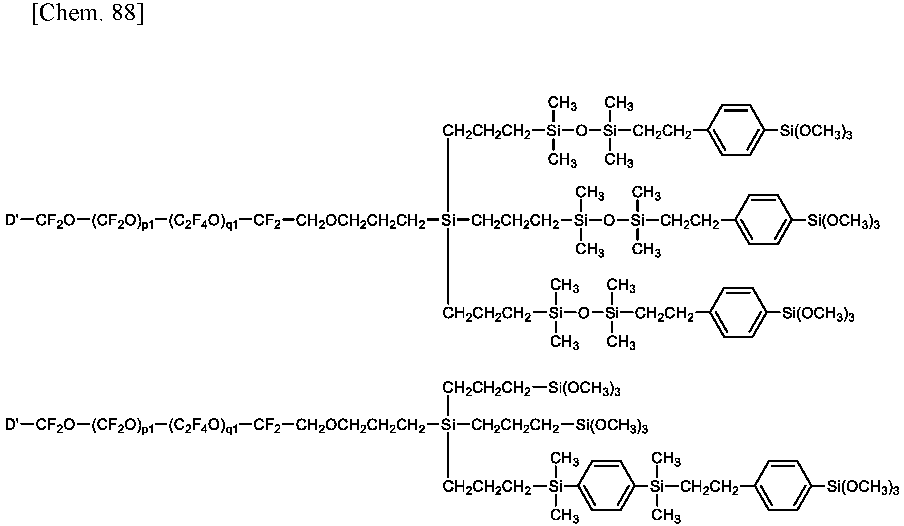

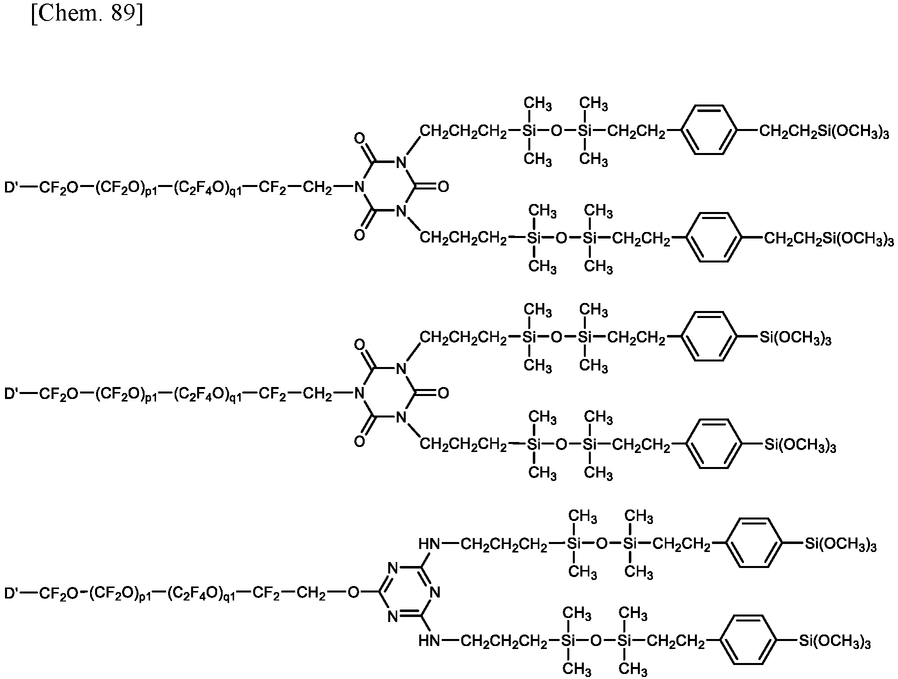

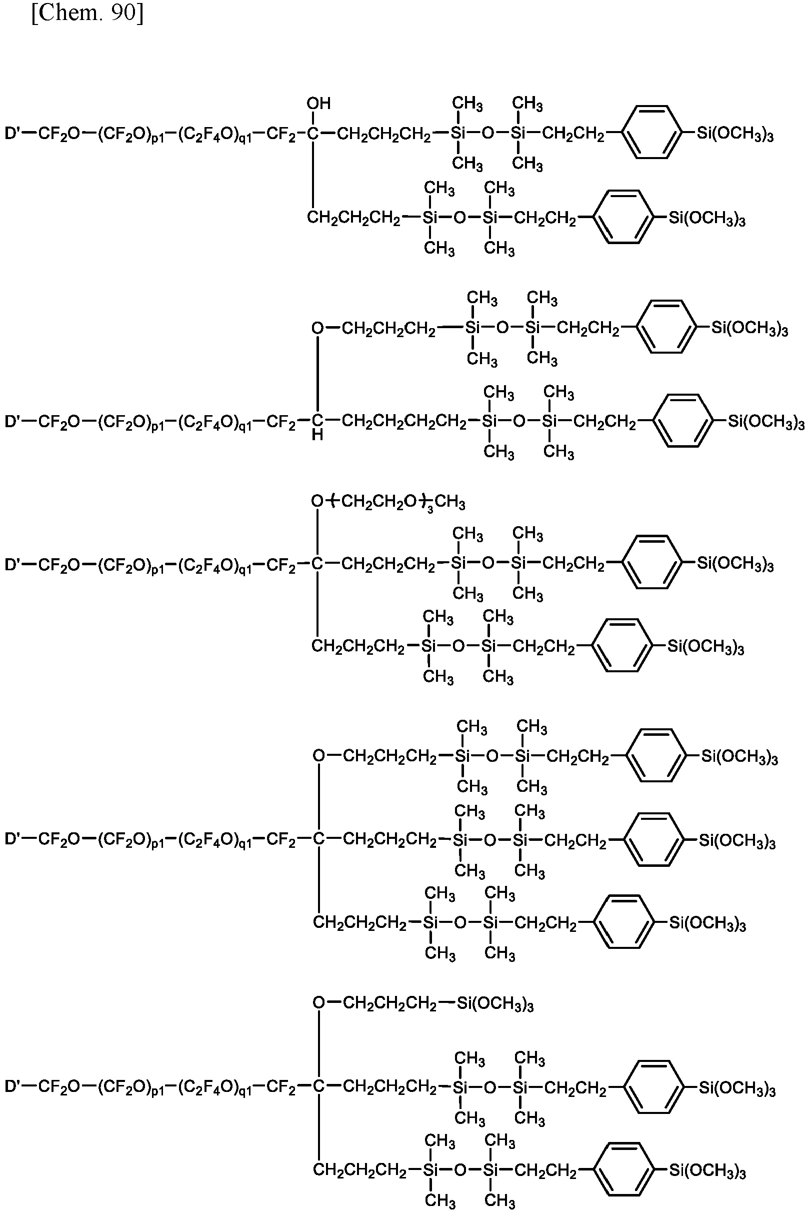

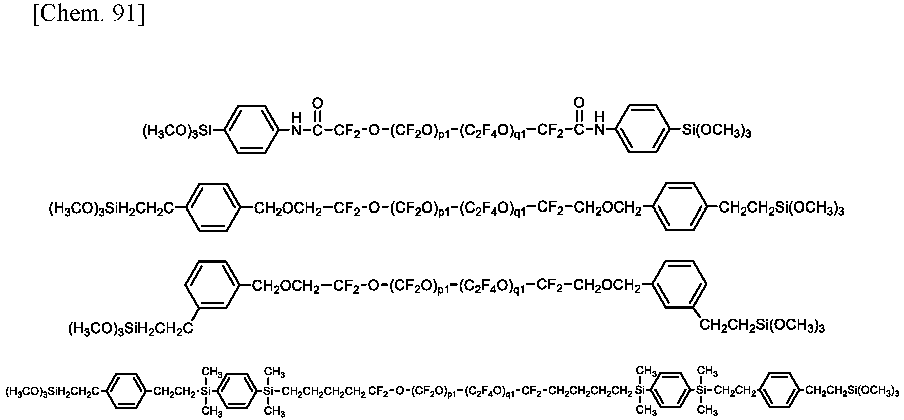

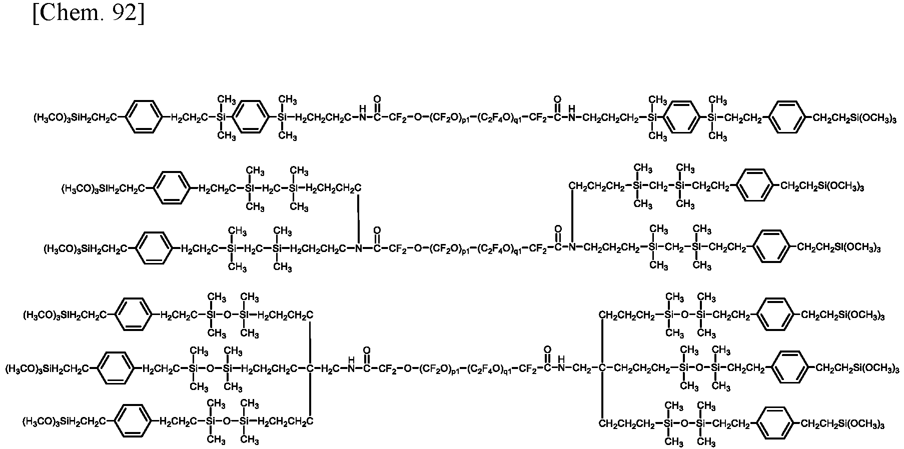

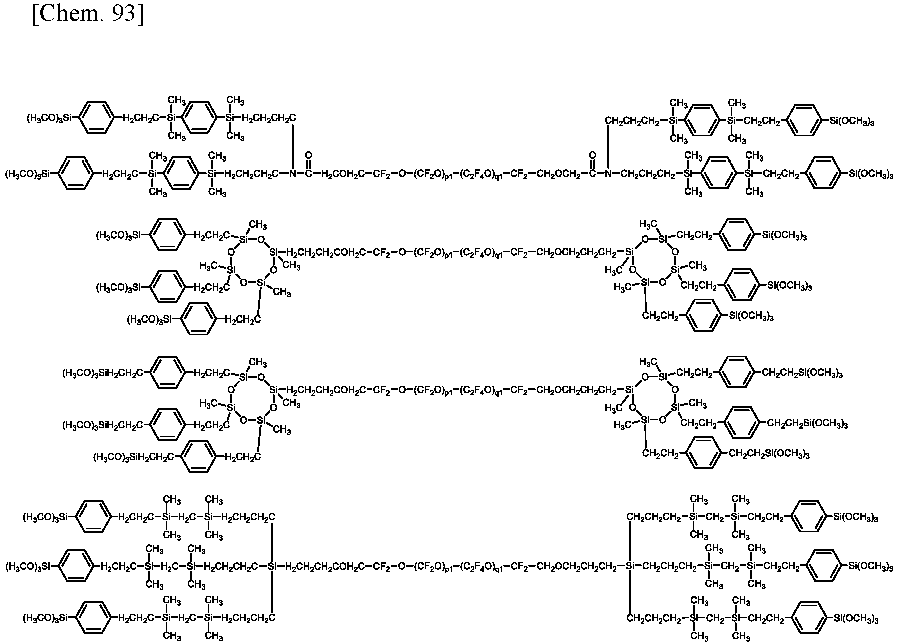

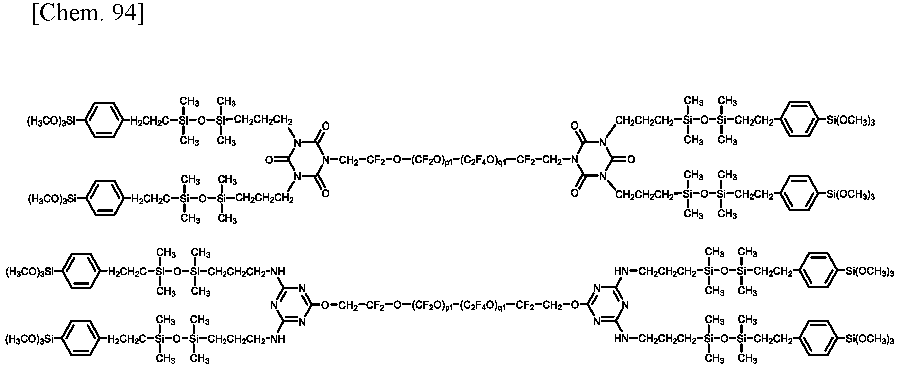

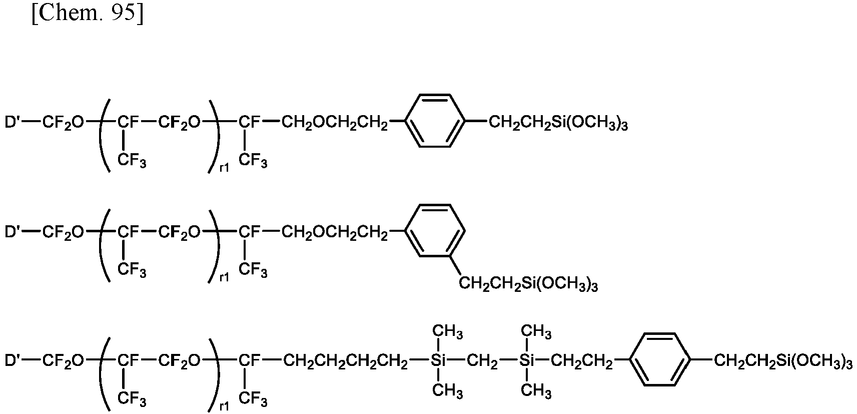

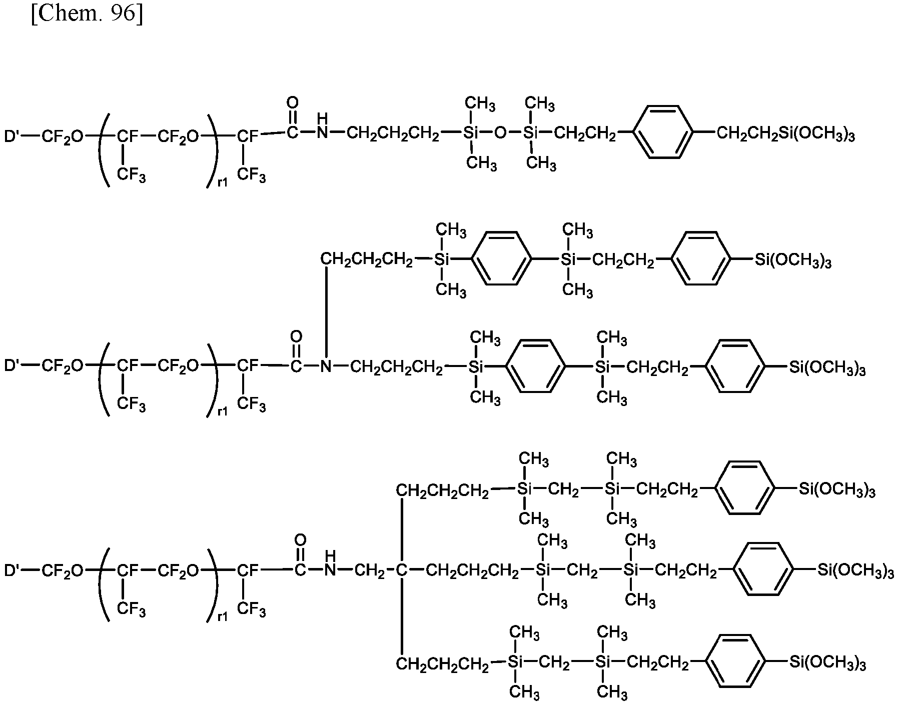

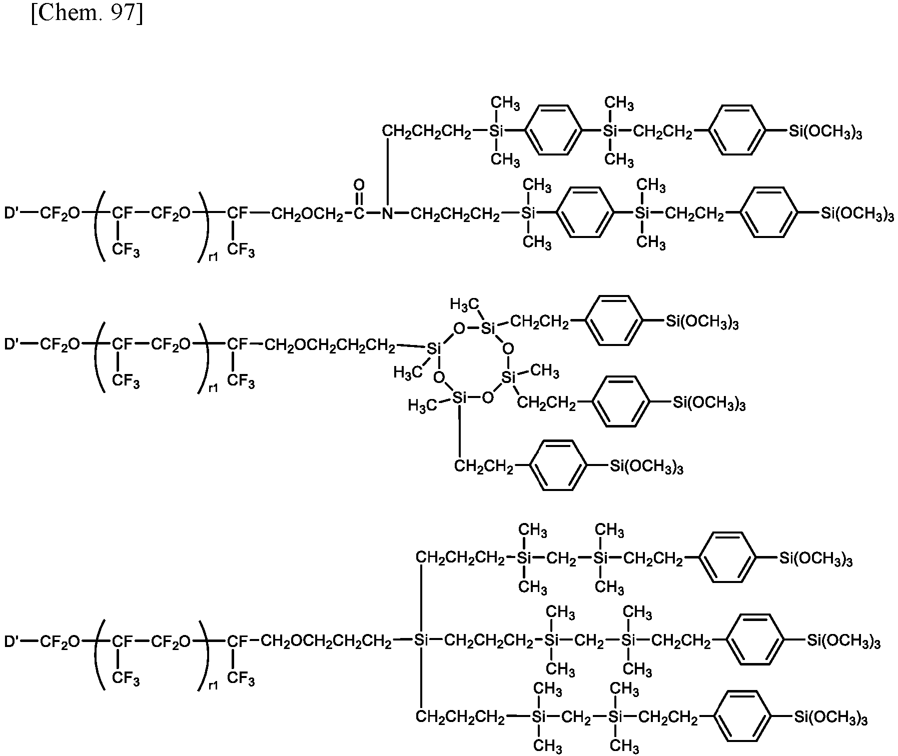

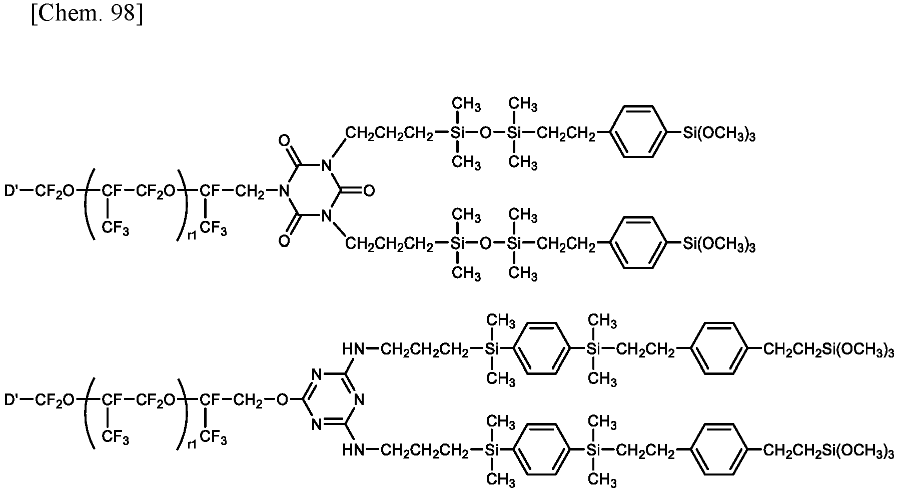

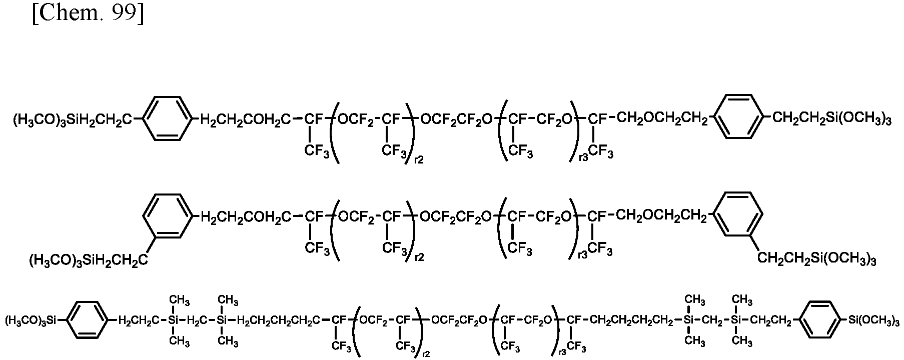

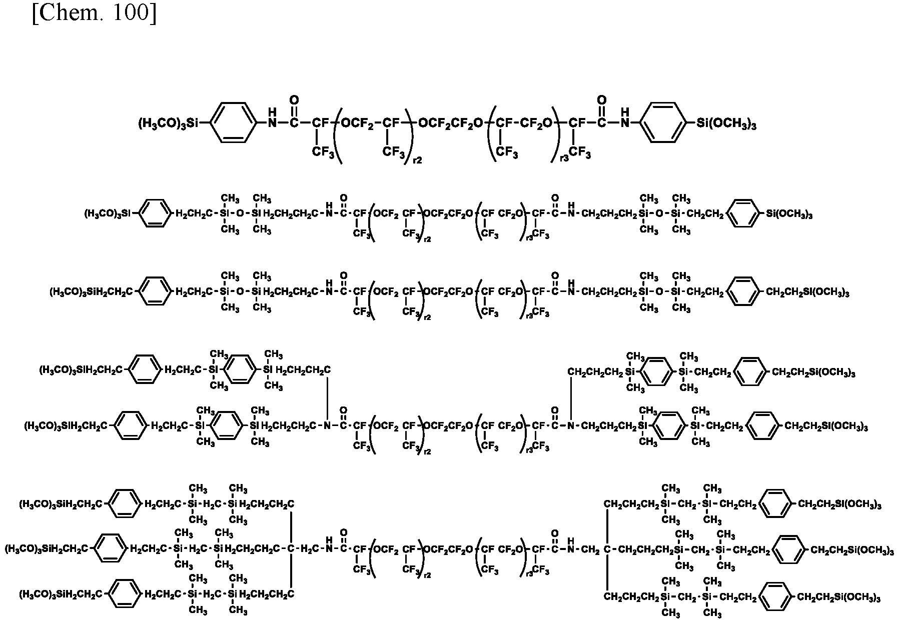

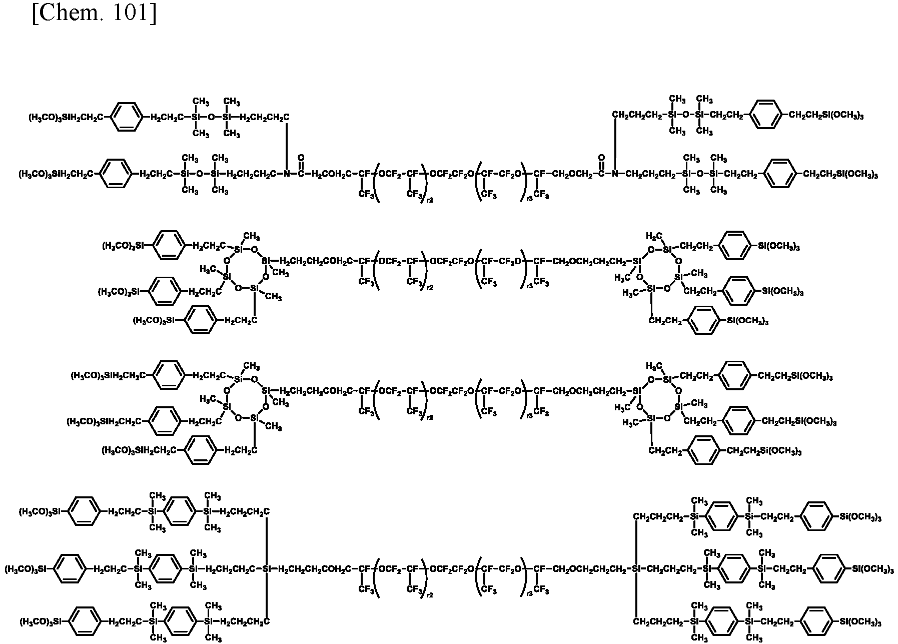

The fluoropolyether-containing polymer having a silanol group or hydrolyzable silyl group, represented by formula (2), may be prepared, for example, by the following method.

### [Preparation Method 1]

One exemplary method involves dissolving a fluoropolyether-containing polymer having an olefin site (alkenyl group) in a solvent such as fluorochemical solvent (e.g., 1,3-bis(trifluoromethyl)benzene), mixing an organosilicon compound having an o-, m- or p-phenylene group in the molecule and having a SiH group and a silanol group or hydrolyzable silyl group (e.g., halogenated silyl or alkoxysilyl group), and aging the mixture in the presence of a toluene solution of a hydrosilation catalyst such as chloroplatinic acid/vinylsiloxane complex, at a temperature of 40 to 120°C, preferably 60 to 100°C, more preferably about 80°C, for 1 to 72 hours, preferably 10 to 36 hours, more preferably about 12 hours. It is noted that when an organosilicon compound having halogen on the hydrolyzable silyl group is used as the organosilicon compound having an o-, m- or p-phenylene group in the molecule and having a SiH group and a silanol group or hydrolyzable silyl group, the substituent (i.e., halogen) on the silyl group may be subsequently converted to another hydrolyzable group, for example, alkoxy group (e.g., methoxy).

In the preparation of the fluoropolyether-containing polymer having a silanol group or hydrolyzable silyl group, represented by formula (2), the fluoropolyether-containing polymer having an olefin site (alkenyl group) is exemplified by a fluoropolyether-containing polymer having the formula (8): 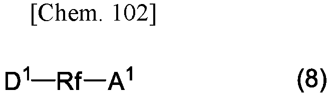 wherein Rf is as defined above, D¹ is fluorine, a monovalent fluorinated hydrocarbon group which is terminated with CF₃-, CF₂H- or CH₂F- and may contain oxygen, or A¹, and A¹ is a group having the formula (9): 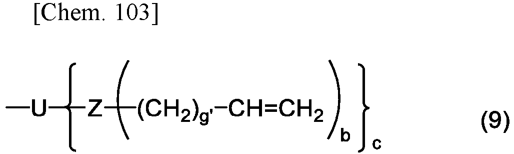 wherein U, Z, b, and c are as defined above, and g' is an integer of 0 to 8, preferably an integer of 0 to 3.

In formula (8), D¹ being the monovalent fluorinated hydrocarbon group which is terminated with CF₃-, CF₂H- or CH₂F- and may contain oxygen is as exemplified above for D being the monovalent fluorinated hydrocarbon group which is terminated with CF₃-, CF₂H- or CH₂F- and may contain oxygen. D¹ is preferably fluorine, CF₃-, CF₃CF₂- or A¹.

Examples of the fluoropolyether-containing polymer having an olefin site (alkenyl group), represented by formula (8), are shown below.

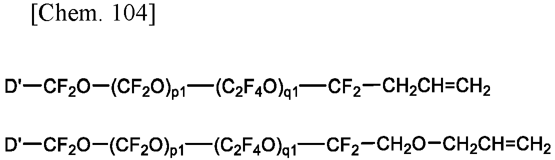

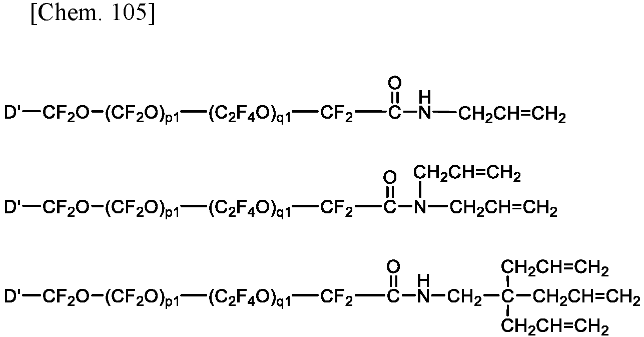

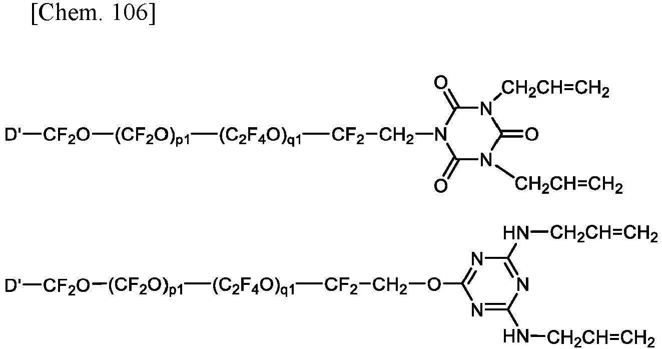

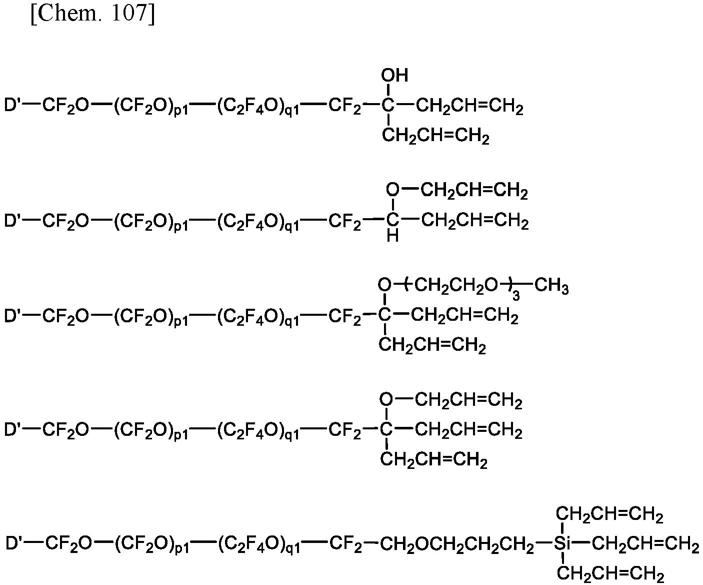

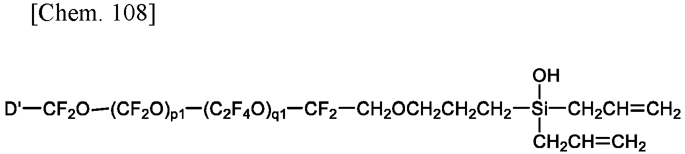

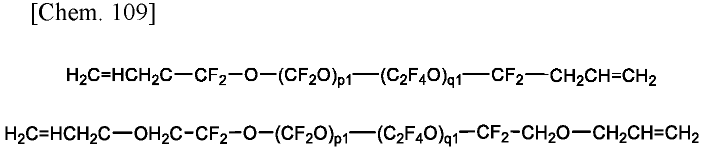

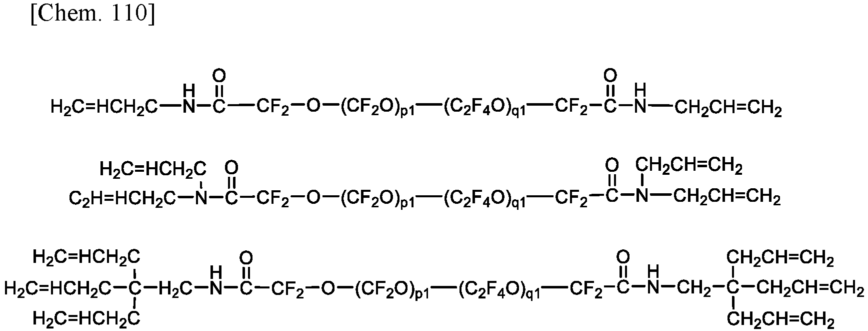

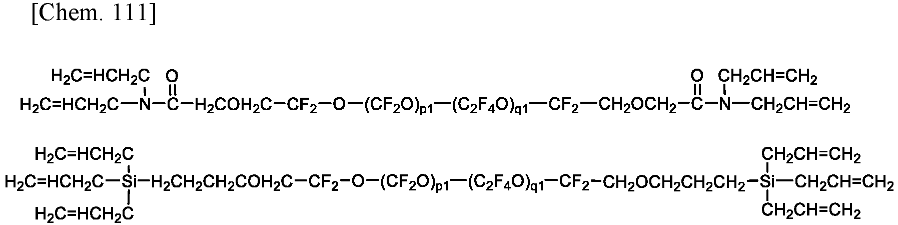

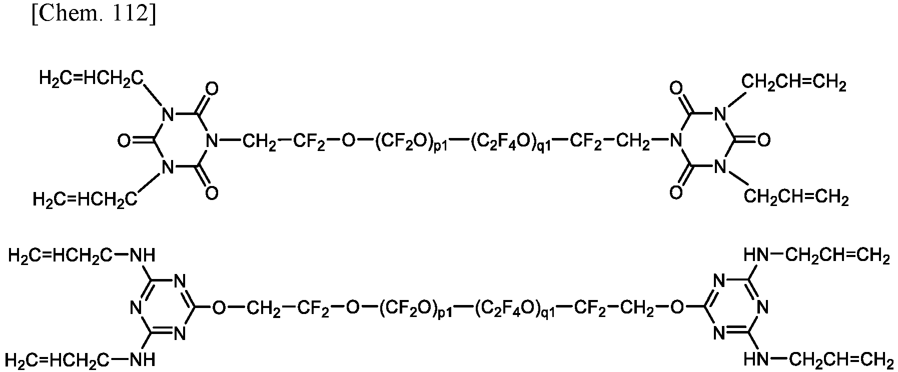

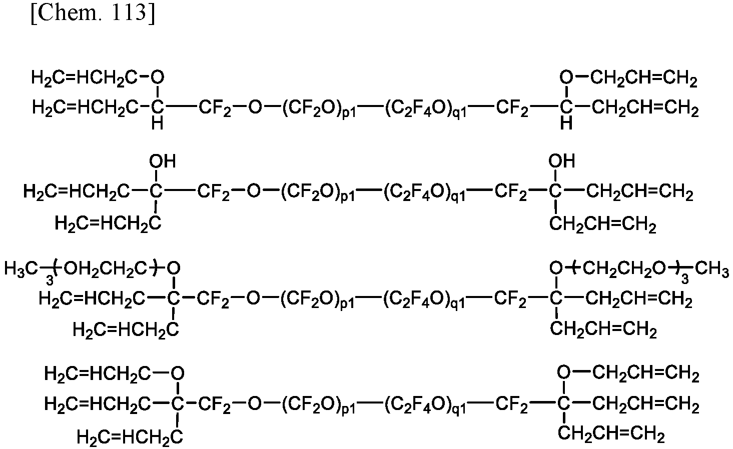

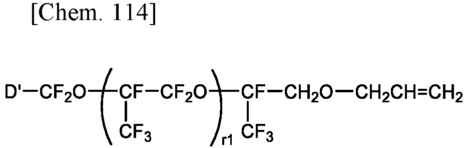

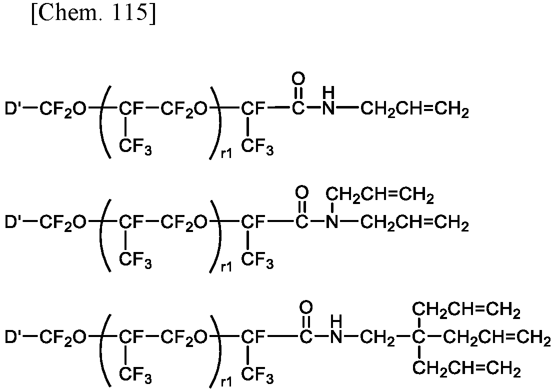

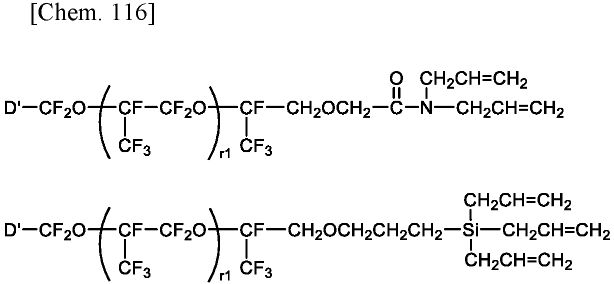

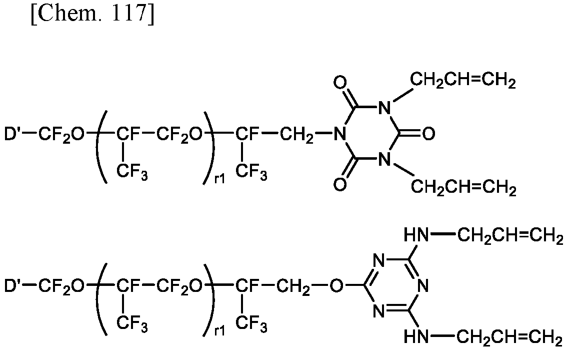

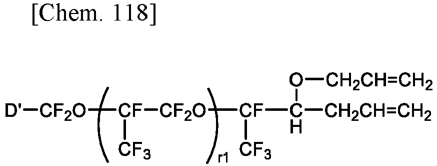

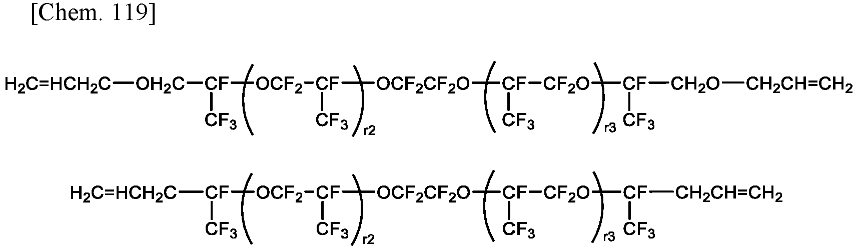

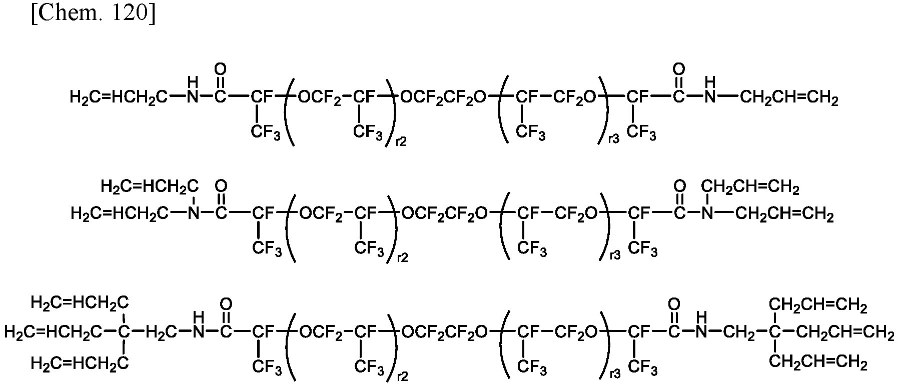

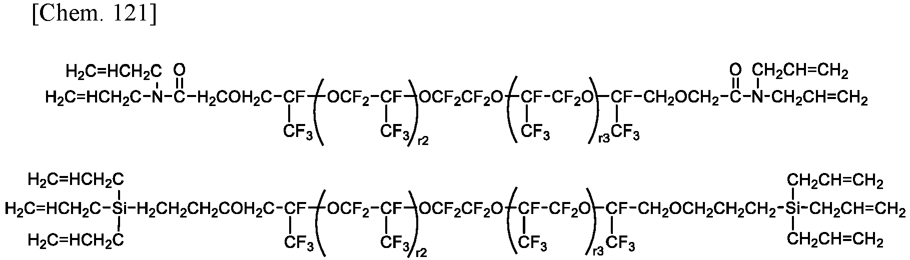

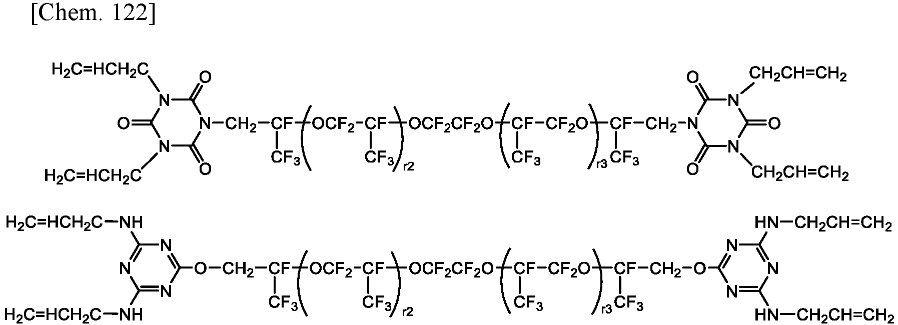

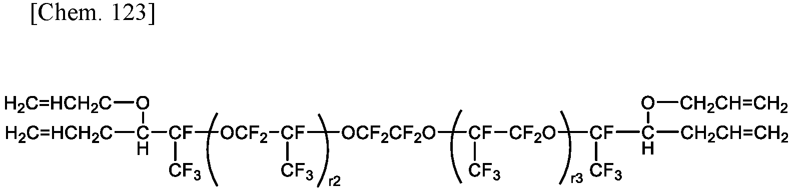

Herein D', p1, q1, p1+q1, r1, r2, r3, and r2+r3 are as defined above. Individual repeating units within the parentheses with p1 and q1 may be randomly bonded.

In the preparation of the fluoropolyether-containing polymer having a silanol group or hydrolyzable silyl group, represented by formula (2), examples of the organosilicon compound having an o-, m- or p-phenylene group in the molecule and having a SiH group and a silanol group or hydrolyzable silyl group are shown below.

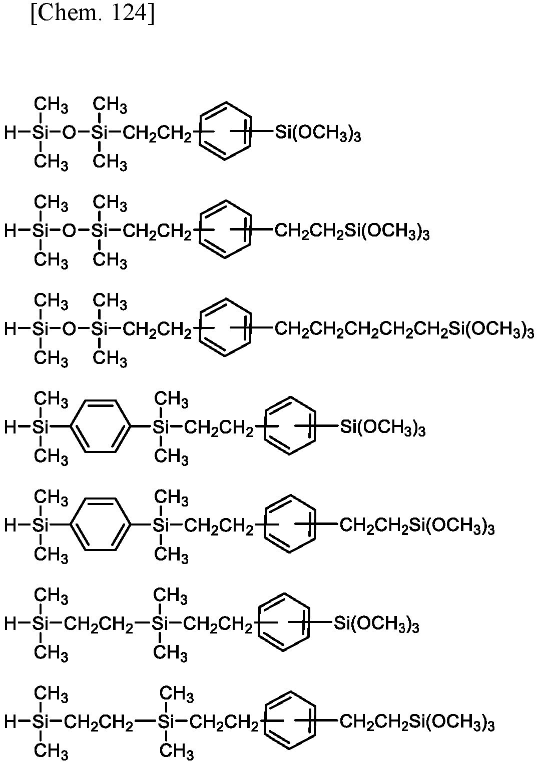

In the preparation of the fluoropolyether-containing polymer having a silanol group or hydrolyzable silyl group, represented by formula (2), the organosilicon compound having an o-, m- or p-phenylene group in the molecule and having a SiH group and a silanol group or hydrolyzable silyl group can be used in such an amount that the amount of the SiH group of the organosilicon compound per 1 mol of the olefin site (alkenyl group) in the fluoropolyether-containing polymer having an olefin site (alkenyl group) is 1 to 4 mol, preferably 1 to 2.5 mol.

In the preparation of the fluoropolyether-containing polymer having a silanol group or hydrolyzable silyl group, represented by formula (2), the organosilicon compound having an o-, m- or p-phenylene group in the molecule and having a SiH group and a silanol group or hydrolyzable silyl group and an organosilicon compound not having an o-, m- or p-phenylene group in the molecule but having a SiH group and a silanol group or hydrolyzable silyl group can be reacted. In this case, the fluoropolyether-containing polymer having an olefin site (alkenyl group) preferably has two or more olefin sites (alkenyl groups).

Examples of the organosilicon compound not having an o-, m- or p-phenylene group in the molecule but having a SiH group and a silanol group or hydrolyzable silyl group include trimethoxysilane.

When the organosilicon compound not having an o-, m- or p-phenylene group but having a SiH group and a silanol group or hydrolyzable silyl group is used, the reaction ratio thereof is not particularly limited as long as 1 mol of the fluoropolyether-containing polymer having an olefin site (alkenyl group) reacts with at least 1 mol of the organosilicon compound having an o-, m- or p-phenylene group in the molecule and having a SiH group and a silanol group or hydrolyzable silyl group. The total content of the SiH groups of the organosilicon compound having an o-, m- or p-phenylene group in the molecule and having a SiH group and a silanol group or hydrolyzable silyl group and the organosilicon compound not having an o-, m- or p-phenylene group in the molecule but having a SiH group and a silanol group or hydrolyzable silyl group per 1 mol of the olefin site (alkenyl group) in the fluoropolyether-containing polymer having an olefin site (alkenyl group) is preferably 1 to 4 mol, preferably 1 to 2.5 mol.

As the solvent used in the preparation of the fluoropolyether-containing polymer having a silanol group or hydrolyzable silyl group, represented by formula (2), fluorochemical solvents are exemplary. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, perfluoro solvents composed of completely fluorinated compounds (tradename Fluorinert series by 3M), and Asahiklin AC-6000 (tridecafluorooctane by AGC).

The amount of the solvent used is 10 to 300 parts by weight, preferably 30 to 150 parts by weight per 100 parts by weight of the fluoropolyether-containing polymer having an olefin site (alkenyl group).

Examples of the hydrosilation catalyst used in the preparation of the fluoropolyether-containing polymer having a silanol group or hydrolyzable silyl group, represented by formula (2), include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The hydrosilation catalyst is used in an amount to provide 0.01 to 100 ppm, preferably 0.1 to 50 ppm of transition metal based on the weight of the fluoropolyether-containing polymer having an olefin site (alkenyl group).

When the organosilicon compound having halogen on the hydrolyzable silyl group is used as the organosilicon compound having an o-, m- or p-phenylene group in the molecule and having a SiH group and a silanol group or hydrolyzable silyl group, the substituent (i.e., halogen) on the silyl group may be subsequently converted to another hydrolyzable group such as alkoxy group (e.g., methoxy). Examples of the reagent which can be used in converting the substituent (halogen) on the silyl group to another hydrolyzable group include C₁-C₁₀ alcohols such as methanol, ethanol, propanol, isopropanol and butanol.

The amount of the reagent used is 10 to 200 parts by weight, preferably 40 to 100 parts by weight per 100 parts by weight of the addition reaction product of the fluoropolyether-containing polymer having an olefin site (alkenyl group) with the organosilicon compound having an o-, m- or p-phenylene group in the molecule and having a SiH group and a halogenated silyl group.

In one embodiment wherein a compound having the following formula: 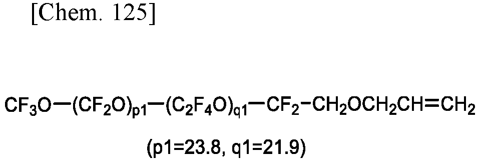 is used as the fluoropolyether-containing polymer having an olefin site (alkenyl group), and a silane compound having the following formula: 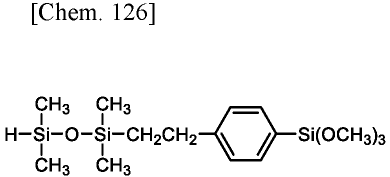 is used as the organosilicon compound having an o-, m- or p-phenylene group in the molecule and having a SiH group and a silanol group or hydrolyzable silyl group, a compound having the following formula: 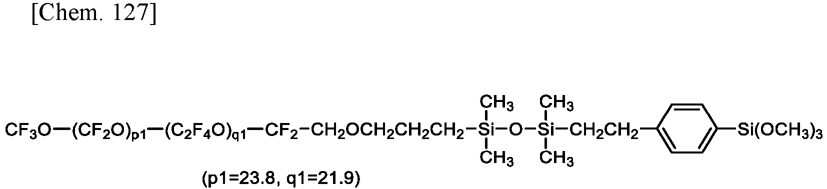 is obtained.

In another embodiment wherein a compound having the following formula: 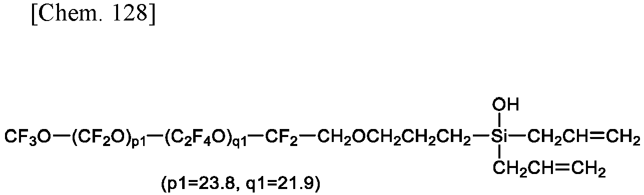 is used as the fluoropolyether-containing polymer having an olefin site (alkenyl group), and an equimolar mixture of a silane compound having the following formula: 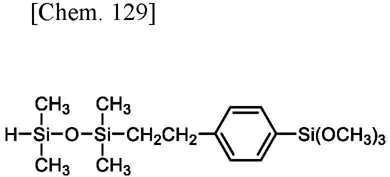 and serving as the organosilicon compound having an o-, m- or p-phenylene group in the molecule and having a SiH group and a silanol group or hydrolyzable silyl group and an organosilicon compound not having an o-, m- or p-phenylene group in the molecule but having a SiH group and a silanol group or hydrolyzable silyl group (e.g., trimethoxysilane) is used, a compound having the following formula: 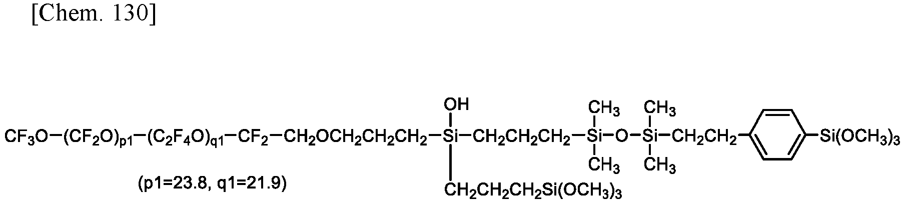 is obtained.

As another method for preparing the fluoropolyether-containing polymer having a silanol group or hydrolyzable silyl group, represented by formula (2), the following method is exemplary.

### [Preparation Method 2]

The method involves the steps of dissolving a fluoropolyether-containing polymer having a carbonyl group in a solvent such as fluorochemical solvent (e.g., 1,3-bis(trifluoromethyl)benzene), mixing an organosilicon compound having an o-, m- or p-phenylene group in the molecule and having an amino group and a silanol group or hydrolyzable silyl group (e.g., a halogenated silyl or alkoxysilyl group), and aging the mixture at a temperature of 20 to 100°C, preferably 25 to 50°C, more preferably about 25°C, for 1 to 72 hours, preferably 20 to 36 hours, more preferably about 24 hours. It is noted that when an organosilicon compound having halogen on the hydrolyzable silyl group is used as the organosilicon compound having an o-, m- or p-phenylene group in the molecule and having an amino group and a silanol group or hydrolyzable silyl group, the substituent (i.e., halogen) on the silyl group may be subsequently converted to another hydrolyzable group, for example, alkoxy group (e.g., methoxy).

In the preparation of the fluoropolyether-containing polymer having a silanol group or hydrolyzable silyl group, represented by formula (2) (Preparation Method 2), the fluoropolyether-containing polymer having a carbonyl group is exemplified by a fluoropolyether-containing polymer having the formula (14).
[Chem. 131]

**D²-Rf-A²** **(14)**

Herein Rf is as defined above. D² is fluorine, a monovalent fluorinated hydrocarbon group which is terminated with CF₃-, CF₂H- or CH₂F- and may contain oxygen, or A². A² is a group having the formula (15).

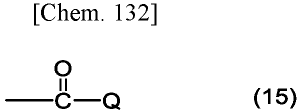

Herein Q is OH, OCH₃, OCH₂CH₃ or F.

In formula (14), D² being the monovalent fluorinated hydrocarbon group which is terminated with CF₃-, CF₂H- or CH₂F- and may contain oxygen is as exemplified above for the D being the monovalent fluorinated hydrocarbon group which is terminated with CF₃-, CF₂H- or CH₂F- and may contain oxygen. D² is preferably fluorine, CF₃-, CF₃CF₂- or A².

Examples of the fluoropolyether-containing polymer having a carbonyl group, represented by formula (14), are shown below.

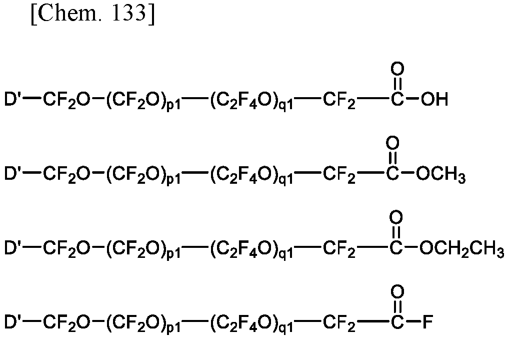

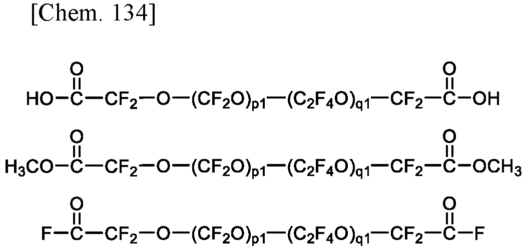

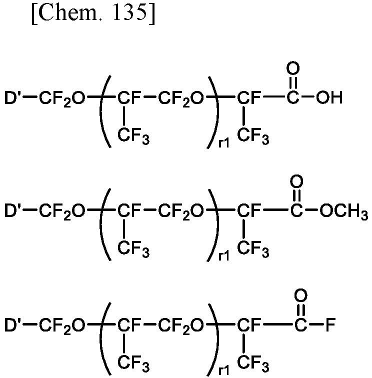

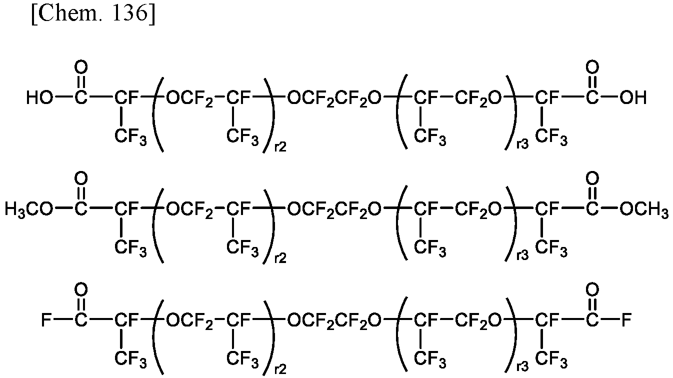

Herein D', p1, q1, p1+q1, r1, r2, r3, and r2+r3 are as defined above. Individual repeating units within the parentheses with p1 and q1 may be randomly bonded.

In the preparation of the fluoropolyether-containing polymer having a silanol group or hydrolyzable silyl group, represented by formula (2) (Preparation Method 2), the organosilicon compound having an o-, m- or p-phenylene group in the molecule and having an amino group and a silanol group or hydrolyzable silyl group is exemplified by p-aminophenyltrimethoxysilane and (4-trimethoxysilylphenyl)methaneamine.

In the preparation of the fluoropolyether-containing polymer having a silanol group or hydrolyzable silyl group, represented by formula (2) (Preparation Method 2), the organosilicon compound having an o-, m- or p-phenylene group in the molecule and having an amino group and a silanol group or hydrolyzable silyl group can be used in such an amount that the amount of the amino group of the organosilicon compound per 1 mol of the carbonyl group in the fluoropolyether-containing polymer having a carbonyl group is 1 to 4 mol, preferably 1 to 2.5 mol.

In the preparation of the fluoropolyether-containing polymer having a silanol group or hydrolyzable silyl group, represented by formula (2) (Preparation Method 2), the solvent as exemplified above for the solvent of Preparation Method 1 can be used.

The amount of the solvent used is 10 to 300 parts by weight, preferably 30 to 150 parts by weight per 100 parts by weight of the fluoropolyether-containing polymer having a carbonyl group.

When an organosilicon compound having halogen on the hydrolyzable silyl group is used as the organosilicon compound having an o-, m- or p-phenylene group in the molecule and having an amino group and a silanol group or hydrolyzable silyl group, the substituent (i.e., halogen) on the silyl group may be subsequently converted to another hydrolyzable group such as alkoxy group (e.g., methoxy). Examples of the reagent which can be used in converting the substituent (halogen) on the silyl group to another hydrolyzable group include C₁-C₁₀ alcohols such as methanol, ethanol, propanol, isopropanol and butanol.

The amount of the reagent used is 10 to 300 parts by weight, preferably 50 to 200 parts by weight per 100 parts by weight of the addition reaction product of the fluoropolyether-containing polymer having a carbonyl group with the organosilicon compound having an o-, m- or p-phenylene group in the molecule and having an amino group and a halogenated silyl group.

In one embodiment wherein a compound having the following formula: 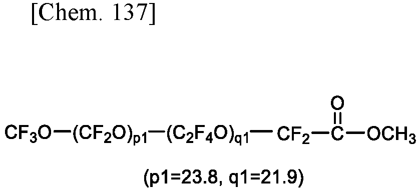 is used as the fluoropolyether-containing polymer having a carbonyl group, and p-aminophenyltrimethoxysilane is used as the organosilicon compound having an o-, m- or p-phenylene group in the molecule and having an amino group and a silanol group or hydrolyzable silyl group, a compound having the following formula: 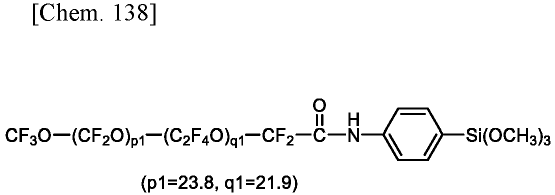 is obtained.

As another method for preparing the fluoropolyether-containing polymer having a silanol group or hydrolyzable silyl group, represented by formula (2), the following method is exemplary.

### [Preparation Method 3]

One exemplary method involves dissolving a fluoropolyether-containing polymer having a SiH group in a solvent such as fluorochemical solvent (e.g., 1,3-bis(trifluoromethyl)benzene), mixing an organosilicon compound having an o-, m- or p-phenylene group in the molecule and having an olefin site (alkenyl group) and a silanol group or hydrolyzable silyl group (e.g., halogenated silyl or alkoxysilyl group), and aging the mixture in the presence of a toluene solution of a hydrosilation catalyst such as chloroplatinic acid/vinylsiloxane complex, at a temperature of 40 to 120°C, preferably 60 to 100°C, more preferably about 80°C, for 1 to 72 hours, preferably 10 to 36 hours, more preferably about 12 hours. It is noted that when an organosilicon compound having halogen on the hydrolyzable silyl group is used as the organosilicon compound having an o-, m- or p-phenylene group in the molecule and having an olefin site (alkenyl group) and a silanol group or hydrolyzable silyl group, the substituent (i.e., halogen) on the silyl group may be subsequently converted to another hydrolyzable group, for example, alkoxy group (e.g., methoxy).

In the preparation of the fluoropolyether-containing polymer having a silanol group or hydrolyzable silyl group, represented by formula (2) (Preparation Method 3), the fluoropolyether-containing polymer having a SiH group is exemplified by a fluoropolyether-containing polymer having the formula (16):
[Chem. 139]

**D³-Rf-A³** **(16)**

wherein Rf is as defined above, D³ is fluorine, a monovalent fluorinated hydrocarbon group which is terminated with CF₃-, CF₂H- or CH₂F- and may contain oxygen, or A³, and A³ is a group having the formula (17): 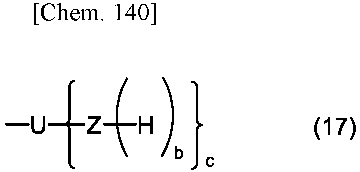 wherein U, Z, b, and c are as defined above.

In formula (16), D³ being the monovalent fluorinated hydrocarbon group which is terminated with CF₃-, CF₂H- or CH₂F- and may contain oxygen is as exemplified for D being the monovalent fluorinated hydrocarbon group which is terminated with CF₃-, CF₂H- or CH₂F- and may contain oxygen. D³ is preferably fluorine, CF₃-, CF₃CF₂- or A³.

Examples of the fluoropolyether-containing polymer having a SiH group, represented by formula (16), are shown below.

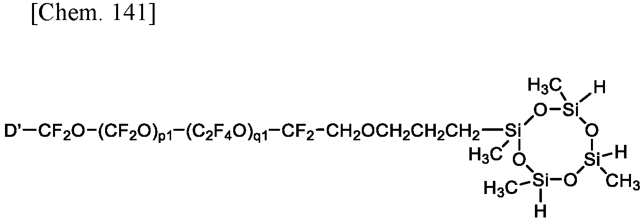

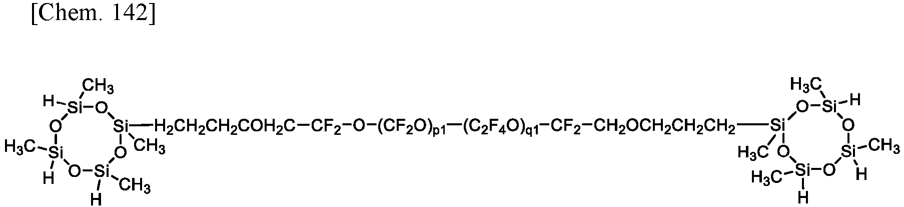

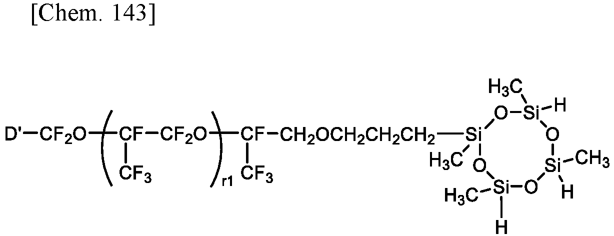

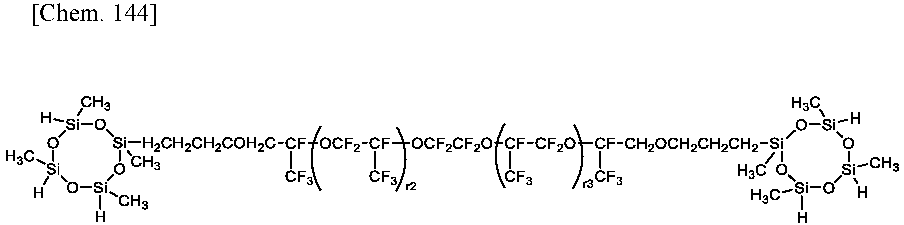

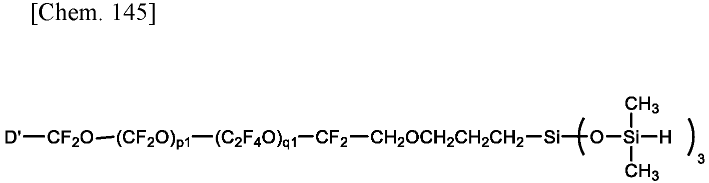

Herein D', p1, q1, p1+q1, r1, r2, r3, and r2+r3 are as defined above. Individual repeating units within the parentheses with p1 and q1 may be randomly bonded.

In the preparation of the fluoropolyether-containing polymer having a silanol group or hydrolyzable silyl group, represented by formula (2) (Preparation Method 3), the organosilicon compound having an o-, m- or p-phenylene group in the molecule and having an olefin site (alkenyl group) and a silanol group or hydrolyzable silyl group is exemplified by p-styryltrimethoxysilane, p-styrylethyltrimethoxysilane, and 2-(4-ethynylphenyl)ethyltrimethoxysilane.

In the preparation of the fluoropolyether-containing polymer having a silanol group or hydrolyzable silyl group, represented by formula (2) (Preparation Method 3), the organosilicon compound having an o-, m- or p-phenylene group in the molecule and having an olefin site (alkenyl group) and a silanol group or hydrolyzable silyl group can be used in such an amount that the amount of the alkenyl group of the organosilicon compound per 1 mol of the SiH group in the fluoropolyether-containing polymer having a SiH group is 1 to 4 mol, preferably 1 to 2.5 mol.

In the preparation of the fluoropolyether-containing polymer having a silanol group or hydrolyzable silyl group, represented by formula (2) (Preparation Method 3), the solvent as exemplified above for the solvent of Preparation Method 1 can be used.

The amount of the solvent used is 10 to 300 parts by weight, preferably 30 to 150 parts by weight per 100 parts by weight of the fluoropolyether-containing polymer having a SiH group.

Examples of the hydrosilation catalyst used in the preparation of the fluoropolyether-containing polymer having a silanol group or hydrolyzable silyl group, represented by formula (2) (Preparation Method 3), are as exemplified above for the hydrosilation catalyst of Preparation Method 1. Inter alia, platinum compounds such as vinyl siloxane coordination compounds are preferred.

The hydrosilation catalyst is used in an amount to provide 0.01 to 100 ppm, preferably 0.1 to 50 ppm of transition metal based on the weight of the fluoropolyether-containing polymer having a SiH group.

When an organosilicon compound having halogen on the hydrolyzable silyl group is used as the organosilicon compound having an o-, m- or p-phenylene group in the molecule and having an olefin site (alkenyl group) and a silanol group or hydrolyzable silyl group, the substituent (i.e., halogen) on the silyl group may be subsequently converted to another hydrolyzable group such as alkoxy group (e.g., methoxy). Examples of the reagent which can be used in converting the substituent (halogen) on the silyl group to another hydrolyzable group include C₁-C₁₀ alcohols such as methanol, ethanol, propanol, isopropanol and butanol.

The amount of the reagent used is 10 to 300 parts by weight, preferably 50 to 200 parts by weight per 100 parts by weight of the addition reaction product of the fluoropolyether-containing polymer having a SiH group with the organosilicon compound having an o-, m- or p-phenylene group in the molecule and having an olefin site (alkenyl group) and a halogenated silyl group.

**In** one embodiment wherein a compound having the following formula: 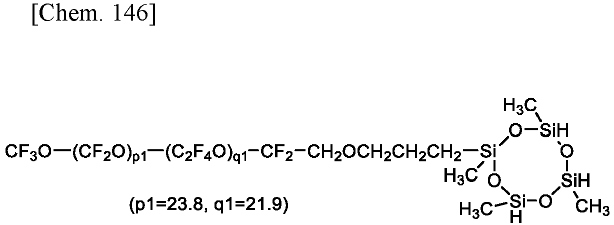 is used as the fluoropolyether-containing polymer having a SiH group, and p-styryltrimethoxysilane is used as the organosilicon compound having an o-, m- or p-phenylene group in the molecule and having an olefin site (alkenyl group) and a silanol group or hydrolyzable silyl group, a compound having the following formula: 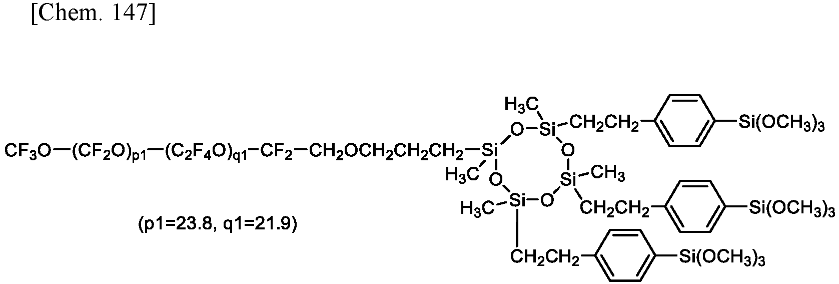 is obtained.

In another embodiment wherein a compound having the following formula: 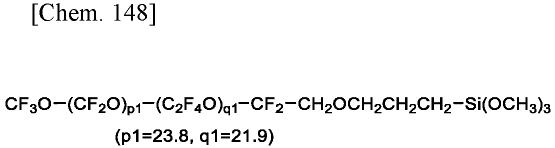 and 1,1,3,3-tetramethyldisiloxane [synonym: bis(dimethylsilyl) ether] are subjected to co-hydrolysis and condensation and the resultant compound having the following formula: 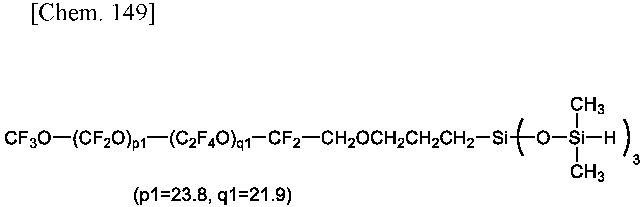 is used as the fluoropolyether-containing polymer having a SiH group, and p-styryltrimethoxysilane is used as the organosilicon compound having an o-, m- or p-phenylene group in the molecule and having an olefin site (alkenyl group) and a silanol group or hydrolyzable silyl group, a compound having the following formula: 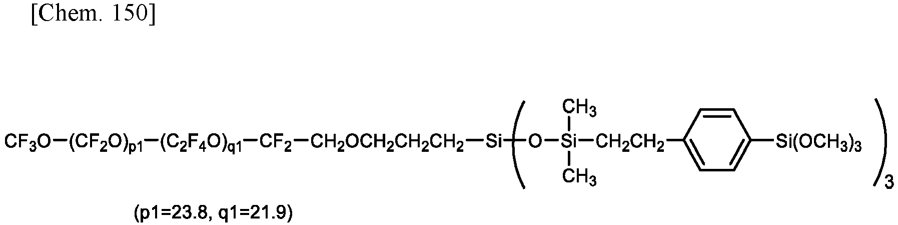 is obtained.

As another method for preparing the fluoropolyether-containing polymer having a silanol group or hydrolyzable silyl group, represented by formula (2), the following method is exemplary.

### [Preparation Method 4]

One exemplary method involves dissolving a fluoropolyether-containing polymer having a hydroxy group in a solvent such as fluorochemical solvent (e.g., 1,3-bis(trifluoromethyl)benzene), mixing an organic compound having an o-, m- or p-phenylene group in the molecule and having halogen and an olefin site (alkenyl group), and aging the mixture in the presence of a basic reagent such as an aqueous sodium hydroxide solution, at a temperature of 40 to 120°C, preferably 50 to 100°C, more preferably about 60°C, for 1 to 72 hours, preferably 10 to 36 hours, more preferably 10 to 12 hours. The resultant polymer is a fluoropolyether-containing polymer having an o-, m- or p-phenylene group and an olefin site (alkenyl group) in the molecule.

The method involves subsequently dissolving the fluoropolyether-containing polymer having an o-, m- or p-phenylene group and an olefin site (alkenyl group) in the molecule in a solvent such as fluorochemical solvent (e.g., 1,3-bis(trifluoromethyl)benzene), mixing an organosilicon compound having a SiH group and a silanol group or hydrolyzable silyl group (e.g., halogenated silyl or alkoxysilyl group) in the molecule, and aging the mixture in the presence of a toluene solution of a hydrosilation catalyst such as chloroplatinic acid/vinylsiloxane complex, at a temperature of 40 to 120°C, preferably 60 to 100°C, more preferably about 80°C, for 1 to 72 hours, preferably 10 to 36 hours, more preferably about 12 hours. When an organosilicon compound having halogen on the hydrolyzable silyl group is used as the organosilicon compound having an olefin site (alkenyl group) and a silanol group or hydrolyzable silyl group in the molecule, the substituent (i.e., halogen) on the silyl group may be subsequently converted to another hydrolyzable group, for example, alkoxy group (e.g., methoxy).

In the preparation of the fluoropolyether-containing polymer having a silanol group or hydrolyzable silyl group, represented by formula (2) (Preparation Method 4), the fluoropolyether-containing polymer having a hydroxy group is exemplified by a fluoropolyether-containing polymer having the formula (18): 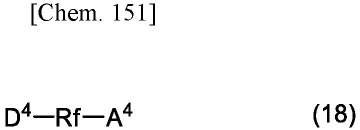 wherein Rf is as defined above, D⁴ is fluorine, a monovalent fluorinated hydrocarbon group which is terminated with CF₃-, CF₂H- or CH₂F- and may contain oxygen, or A⁴, and A⁴ is a group having the formula (19):

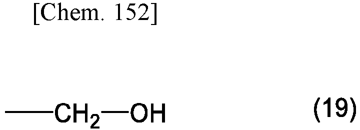

In formula (18), D⁴ being the monovalent fluorinated hydrocarbon group which is terminated with CF₃-, CF₂H- or CH₂F- and may contain oxygen is as exemplified for D being the monovalent fluorinated hydrocarbon group which is terminated with CF₃-, CF₂H- or CH₂F- and may contain oxygen. D⁴ is preferably fluorine, CF₃-, CF₃CF₂- or A⁴.

Examples of the fluoropolyether-containing polymer having a hydroxy group, represented by formula (18), are shown below.

[Chem. 153] D'-CF₂O-(CF₂O)ₚ₁-(C₂F₄O)_{q1}-CF₂-CH₂-OH

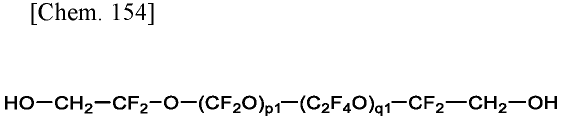

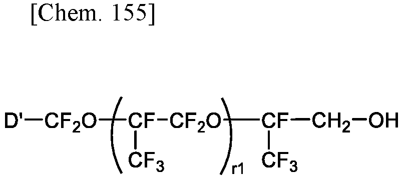

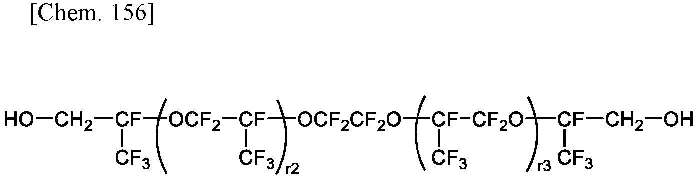

Herein D', p1, q1, p1+q1, r1, r2, r3, and r2+r3 are as defined above. Individual repeating units within the parentheses with p1 and q1 may be randomly bonded.

In the preparation of the fluoropolyether-containing polymer having a silanol group or hydrolyzable silyl group, represented by formula (2) (Preparation Method 4), the organic compound having an o-, m- or p-phenylene group in the molecule and having halogen and an olefin site (alkenyl group) is exemplified by 1-(bromomethyl)-3-allylbenzene and 4-vinylbenzyl bromide.

In the preparation of the fluoropolyether-containing polymer having a silanol group or hydrolyzable silyl group, represented by formula (2) (Preparation Method 4), the organic compound having an o-, m- or p-phenylene group in the molecule and having halogen and an olefin site (alkenyl group) can be used in such an amount that the amount of the halogen in the organic compound per 1 mol of the hydroxy group of the fluoropolyether-containing polymer having a hydroxy group is 1 to 4 mol, preferably 1 to 2.5 mol.

In the preparation of the fluoropolyether-containing polymer having a silanol group or hydrolyzable silyl group, represented by formula (2) (Preparation Method 4), the solvent as exemplified above for the solvent of Preparation Method 1 can be used.

The amount of the solvent used is 0 to 300 parts by weight, preferably 30 to 150 parts by weight, per 100 parts by weight of the fluoropolyether-containing polymer having a hydroxy group.

In the preparation of the fluoropolyether-containing polymer having a silanol group or hydrolyzable silyl group, represented by formula (2) (Preparation Method 4), the basic reagent is preferably sodium hydroxide or potassium hydroxide.

The basic reagent can be used in such an amount that the amount of the base per 1 mol of the fluoropolyether-containing polymer having a hydroxy group is 0.5 to 15 mol, preferably 0.8 to 7 mol.

The fluoropolyether-containing polymer having a hydroxy group and the organic compound having an o-, m- or p-phenylene group in the molecule and having halogen and an olefin site (alkenyl group) can be reacted to obtain a fluoropolyether-containing polymer having an o-, m- or p-phenylene group and an olefin site (alkenyl group) in the molecule.

Examples of the fluoropolyether-containing polymer having an o-, m- or p-phenylene group and an olefin site (alkenyl group) in the molecule in the preparation of the fluoropolyether-containing polymer having a silanol group or hydrolyzable silyl group, represented by formula (2) (Preparation Method 4), are shown below.

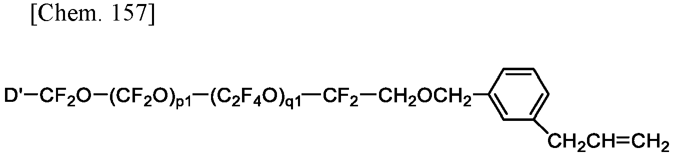

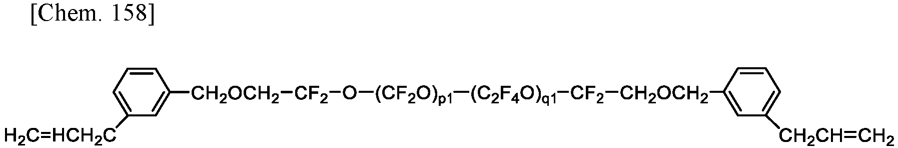

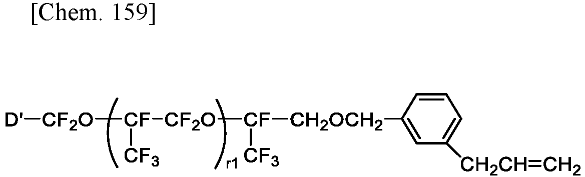

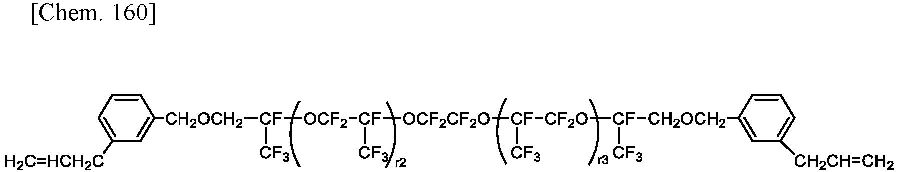

Herein D', p1, q1, p1+q1, r1, r2, r3, and r2+r3 are as defined above. Individual repeating units within the parentheses with p1 and q1 may be randomly bonded.

In the preparation of the fluoropolyether-containing polymer having a silanol group or hydrolyzable silyl group, represented by formula (2) (Preparation Method 4), the organosilicon compound having a SiH group and a silanol group or hydrolyzable silyl group in the molecule which is reacted with the above-obtained fluoropolyether-containing polymer having an o-, m- or p-phenylene group and an olefin site (alkenyl group) in the molecule is exemplified by trimethoxysilane.

In the preparation of the fluoropolyether-containing polymer having a silanol group or hydrolyzable silyl group, represented by formula (2) (Preparation Method 4), the organosilicon compound having a SiH group and a silanol group or hydrolyzable silyl group in the molecule can be used in such an amount that the amount of the SiH group in the organosilicon compound per 1 mol of the olefin site (alkenyl group) in the obtained fluoropolyether-containing polymer having an o-, m- or p-phenylene group and an olefin site (alkenyl group) in the molecule is 1 to 4 mol, preferably 1 to 2.5 mol.

In the preparation of the fluoropolyether-containing polymer having a silanol group or hydrolyzable silyl group, represented by formula (2) (Preparation Method 4), the solvent used for the reaction between the obtained fluoropolyether-containing polymer having an o-, m- or p-phenylene group and an olefin site (alkenyl group) in the molecule and the organosilicon compound having a SiH group and a silanol group or hydrolyzable silyl group in the molecule is as exemplified above for the solvent of Preparation Method 1.

The amount of the solvent used is 10 to 300 parts by weight, preferably 30 to 150 parts by weight per 100 parts by weight of the fluoropolyether-containing polymer having an o-, m- or p-phenylene group and an olefin site (alkenyl group) in the molecule.

The hydrosilation catalyst used for the reaction between the obtained fluoropolyether-containing polymer having an o-, m- or p-phenylene group and an olefin site (alkenyl group) in the molecule and the organosilicon compound having a SiH group and a silanol group or hydrolyzable silyl group in the molecule in the preparation of the fluoropolyether-containing polymer having a silanol group or hydrolyzable silyl group, represented by formula (2) (Preparation Method 4), is as exemplified above for the hydrosilation catalyst in Preparation Method 1. Inter alia, platinum compounds such as vinyl siloxane coordination compounds are preferred.

The hydrosilation catalyst is used in an amount to provide 0.01 to 100 ppm, preferably 0.02 to 50 ppm of transition metal based on the weight of the fluoropolyether-containing polymer having an o-, m- or p-phenylene group and an olefin site (alkenyl group) in the molecule.

When an organosilicon compound having halogen on the hydrolyzable silyl group is used as the organosilicon compound having a SiH group and a silanol group or hydrolyzable silyl group in the molecule, the substituent (i.e., halogen) on the silyl group may be subsequently converted to another hydrolyzable group such as alkoxy group (e.g., methoxy). Examples of the reagent which can be used in converting the substituent (halogen) on the silyl group to another hydrolyzable group include C₁-C₁₀ alcohols such as methanol, ethanol, propanol, isopropanol and butanol.

The amount of the reagent used is 10 to 300 parts by weight, preferably 50 to 200 parts by weight per 100 parts by weight of the addition reaction product of the fluoropolyether-containing polymer having a SiH group with the organosilicon compound having an o-, m- or p-phenylene group in the molecule and having an olefin site (alkenyl group) and a halogenated silyl group.

**In** one embodiment wherein a compound having the following formula: 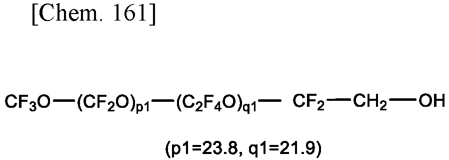 is used as the fluoropolyether-containing polymer having a hydroxy group, and 1-(bromomethyl)-3-allylbenzene is used as the organic compound having an o-, m- or p-phenylene group in the molecule and having halogen and an olefin site (alkenyl group), a compound having the following formula: 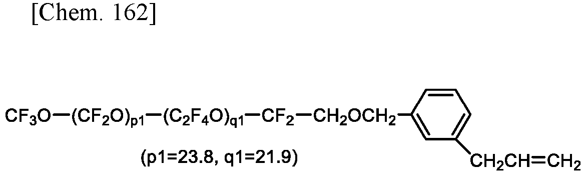 is obtained.

In another embodiment wherein the compound having the above formula is used and trimethoxysilane is used as the organosilicon compound having a SiH group and a silanol group or hydrolyzable silyl group in the molecule, a compound having the following formula: 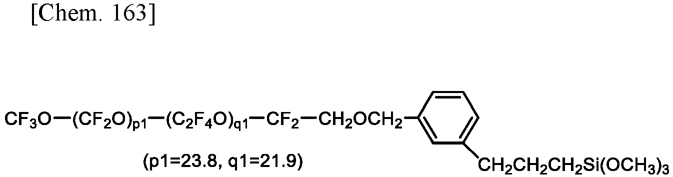 is obtained.

Another embodiment of the invention is a surface treating agent comprising a fluoropolyether-containing polymer having at least one group represented by the above formula (1) at at least one end in the molecule, especially the fluoropolyether-containing polymer having a silanol group or hydrolyzable silyl group, represented by the above formula (2), as a main component. The surface treating agent comprises the fluoropolyether-containing polymer having a silanol group or hydrolyzable silyl group, as a main component, and may contain unreacted reactants prior to the introduction of a terminal silanol group or terminal hydrolyzable silyl group into the fluoropolyether-containing polymer having a silanol group or hydrolyzable silyl group, and reaction intermediates. The surface treating agent may comprise a partial (hydrolytic) condensate which is obtained by condensing the hydroxy group on the fluoropolyether-containing polymer or a hydroxy group resulting from previous partial hydrolysis of the terminal hydrolyzable silyl group on the fluoropolyether-containing polymer by a publicly known method. As used herein, the "partial (hydrolytic) condensate" refers to a partial condensate or partial hydrolytic condensate.

Besides the fluoropolyether-containing polymer of the invention as a main component (especially the fluoropolyether-containing polymer having a silanol group or hydrolyzable silyl group, represented by the above formula (2)), the surface treating agent may contain a fluorinated compound (non-functional fluoropolyether polymer) having the formula (20):

D⁵-Rf-D⁵ (20)

wherein Rf is as defined above and D⁵ is independently fluorine, hydrogen, or a monovalent fluorinated hydrocarbon group which is terminated with CF₃-, CF₂H- or CH₂F- and may contain oxygen, if necessary.

In formula (20), Rf is as exemplified above for Rf in formula (2). Rf may be identical with or different from Rf in formula (2).

In formula (20), D⁵ is independently fluorine, hydrogen, or a monovalent fluorinated hydrocarbon group which is terminated with CF₃-, CF₂H- or CH₂F- and may contain oxygen. Examples of D⁵ include CF₃-, CF₃CF₂-, CF₃CF₂CF₂-, C₃F₇O-CF(CF₃)CH₂-, C₃F₇O-CFHCF₂OCH₂-, CF₃O-, CF₃CF₂O-, and CF₃CF₂CF₂O-. Among others, D⁵ is preferably fluorine, CF₃-, CF₃CF₂-, CF₃O-, CF₃CF₂O-, or CF₃CF₂CF₂O-.

Examples of the fluorinated compound (non-functional fluoropolyether polymer) having formula (20) are shown below.

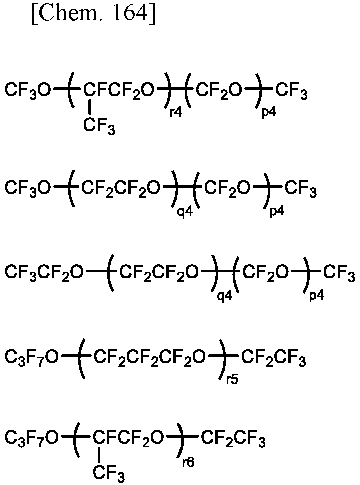

Herein p4, q4, and r4 are each independently an integer of 1 to 450. The sum of p4, q4 and r4 is 20 to 450. r5 and r6 are each an integer of 20 to 450. Individual repeating units within the parentheses with p4, q4, and r6 may be randomly bonded.

The content of the fluorinated compound (non-functional fluoropolyether polymer) having formula (20) may be 0 to 100 parts by weight, preferably 0 to 60 parts by weight, more preferably 0 to 30 parts by weight per 100 parts by weight of the fluoropolyether-containing polymer of the invention and/or partial (hydrolytic) condensate thereof as the main component.

To the surface treating agent, a hydrolytic condensation catalyst may be added if necessary. Suitable hydrolytic condensation catalysts include organotin compounds such as dibutyltin dimethoxide and dibutyltin dilaurate, organotitanium compounds such as tetra-n-butyl titanate, organic acids such as acetic acid, methanesulfonic acid, and fluorine-modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable.

The hydrolytic condensation catalyst may be added in a catalytic amount, typically 0.01 to 5 parts, more preferably 0.1 to 1 part by weight per 100 parts by weight of the fluoropolyether-containing polymer of the invention and/or partial (hydrolytic) condensate thereof.

The surface treating agent may further comprise a solvent. Suitable solvents include fluorine-modified aliphatic hydrocarbon solvents such as perfluorohexane, perfluoroheptane, perfluorooctane and tridecafluorooctane; fluorine-modified aromatic hydrocarbon solvents such as 1,3-bis(trifluoromethyl)benzene; fluorine-modified ether solvents such as methyl perfluorobutyl ether, ethyl perfluorobutyl ether, perfluoro(2-butyltetrahydrofuran), methyl perfluorohexyl ether, methyl perfluoroheptenyl ether, and 1,1,2,2-tetrafluoroethyl-2,2,2-trifluoroethyl ether; fluorine-modified alkylamine solvents such as perfluorotributylamine and perfluorotripentylamine; hydrocarbon solvents such as petroleum benzine, toluene, and xylene; ketone solvents such as acetone, methyl ethyl ketone, and methyl isobutyl ketone. Of these, fluorine-modified solvents are desirable for solubility and wettability, with 1,3-bis(trifluoromethyl)benzene, perfluoro(2-butyltetrahydrofuran), perfluorotributylamine, ethyl perfluorobutyl ether, methyl perfluorohexyl ether, methyl perfluoroheptenyl ether, and tridecafluorooctane being more desirable.

The solvents may be used in admixture of two or more while it is preferred that the fluoropolyether-containing polymer and its partial (hydrolytic) condensate be uniformly dissolved in the solvent. An optimum concentration of the fluoropolyether-containing polymer and its partial (hydrolytic) condensate in the solvent varies with a particular treating mode. The amount which is easy to weigh may be chosen. In the case of direct coating, the concentration is preferably 0.01 to 10 parts by weight, more preferably 0.05 to 5 parts by weight per 100 parts by weight of the solvent and the fluoropolyether-containing polymer and its partial (hydrolytic) condensate in total. In the case of evaporation treatment, the concentration is preferably 1 to 100 parts by weight, more preferably 3 to 30 parts by weight per 100 parts by weight of the solvent and the fluoropolyether-containing polymer and its partial (hydrolytic) condensate in total.

The surface treating agent of the invention may be applied to a substrate by any publicly known techniques such as brush coating, dipping, spraying and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 200°C, especially 25 to 150°C for 30 minutes to 36 hours, especially 1 to 24 hours. When the agent is applied by evaporation, the curing temperature is desirably in a range of 20 to 200°C, especially 20 to 100°C for 12 to 72 hours, especially 12 to 36 hours. Humid curing conditions are also useful. The cured coating typically has a thickness of 0.1 to 100 nm, desirably 1 to 20 nm although the thickness depends on the type of substrate. Also, in the case of spray coating, for example, a procedure involving diluting the agent with a fluorochemical solvent having water previously added thereto, for thereby effecting hydrolysis to generate Si-OH, and thereafter, spraying the dilution is recommended because the coating rapidly cures.

It is noted that the film thickness may be measured by suitable means, for example, spectroscopic reflectometry, X-ray reflectometry, spectroscopic ellipsometry, and X-ray fluorescence film thickness measurement.

The substrate to be treated with the surface treating agent of the invention is not particularly limited, and may be made of any desired materials including paper, fabric, metals, metal oxides, glass, plastics, ceramics, and quartz. The surface treating agent of the invention is effective for endowing the substrate with water/oil repellency. In particular, the surface treating agent is advantageously used for the treatment of SiO₂-deposited glass and film.

Preferred articles which may be treated with the surface treating agent of the invention include car navigation systems, mobile phones, smart phones, digital cameras, digital video cameras, PDA, portable audio players, car audio players, game consoles, eyeglass lenses, camera lenses, lens filters, sunglasses, medical instruments (e.g., gastroscopes), copiers, personal computers, LC displays, organic EL displays, plasma displays, touch panel displays, protective film, antireflective film, and other optical articles. Since the surface treating agent of the invention is effective for preventing fingerprints and sebum from adhering to the articles and also for imparting scratch resistance, it is particularly useful as a water/oil repellent layer on lenses, touch panel displays, and antireflective films.

The surface treating agent of the invention is also used for anti-staining coatings on sanitary ware such as bathtubs and washbowls; anti-staining coatings on glazing or strengthened glass in transport vehicles such as automobiles, trains and aircraft and head lamp covers; water/oil repellent coatings on building exteriors; coatings for preventing oil contamination on kitchen ware; anti-staining, anti-sticking, anti-graffiti coatings in telephone booths; anti-fingerprint coatings on artistic objects; anti-fingerprint coatings on compact discs and DVD's; mold parting agents; paint additives; and resin modifiers. The agent is also effective for modifying the flow and dispersion of inorganic fillers and as a lubricity-improving agent for tape and film.

**In** particular, the surface treating agent of the invention is able to form on a lens substrate a cured film having water/oil repellency, slipping, abrasion resistance and chucking properties.

As used herein, chucking properties refer to, in the step of machining a substrate which is fixedly secured by an adhesive tape, the degree of securement of the substrate. **In** a lens edging system in which a lens is secured by a lens blocking tape, for example, the degree of securement is judged in terms of the strength of adhesion (tensile shear bond strength) between the lens blocking tape and the lens. Chucking properties are regarded satisfactory when the adhesion between the adhesive tape and the substrate ensures to secure the substrate so firmly that the substrate is machined at an acceptable accuracy.

### EXAMPLES

Synthesis Examples, Examples and Comparative Examples are given below for illustrating the invention, but the invention is not limited by Examples. The number of repetition of fluorooxyalkylene units in fluorooxyalkylene-containing polymer residue and the number average molecular weight of the fluorooxyalkylene-containing polymer residue are respectively a number average value (number average number of repetition) and number average molecular weight computed from ¹⁹F-NMR. The number average molecular weight of the entire compound having the fluorooxyalkylene-containing polymer residue is computed from the sum of the number average molecular weight of the fluorooxyalkylene-containing polymer residue and the formula weight of the remaining part of the molecular formula. **In** the formulae below, individual repeating units within the parentheses with p1 and q1 are randomly bonded. The film thickness is measured by spectroscopic ellipsometry using a spectral ellipsometer.

### [Synthesis Example 1]

A reactor was charged with 100 g of a compound having the formula (1A) (2.32×10⁻² mol, the fluorooxyalkylene-containing polymer residue having a number average molecular weight of 4,227, the compound (entirety) having a number average molecular weight of 4,305): 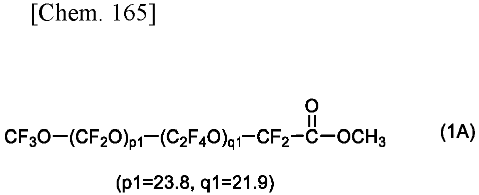 50 g of 1,3-bis(trifluoromethyl)benzene, and 9.37 g of p-aminophenyltrimethoxysilane (4.40×10⁻² mol). The mixture was aged at 25°C for 24 hours. The solvent and unreacted reactants were distilled off under reduced pressure. After washing, 101 g of a liquid product was obtained. On ¹H-NMR analysis, the compound was identified to have the structure represented by the formula (1B).

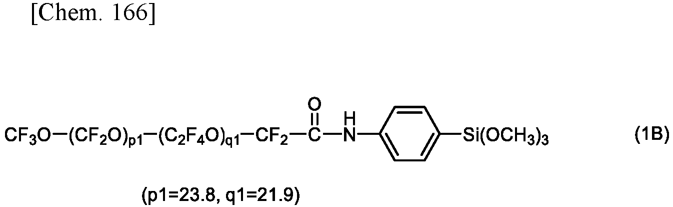

### [Synthesis Example 2]

A reactor was charged with 100 g of a compound having the formula (2A) (2.32×10⁻² mol, the fluorooxyalkylene-containing polymer residue having a number average molecular weight of 4,227, the compound (entirety) having a number average molecular weight of 4,317): 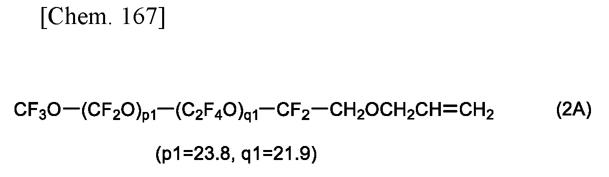 50 g of 1,3-bis(trifluoromethyl)benzene, 9.71 g (2.71×10⁻² mol) of an organosilicon compound having the formula (2B): 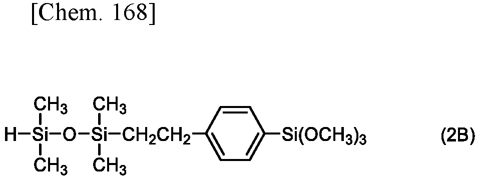 and 6.53×10⁻² g (containing 2.26×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 102 g of a liquid product was obtained. On ¹H-NMR analysis, the compound was identified to have the structure represented by the formula (2C).

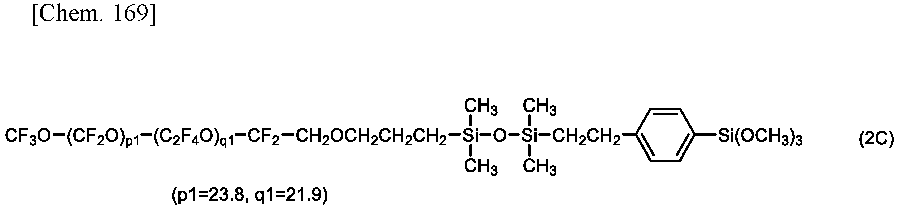

### [Synthesis Example 3]

A reactor was charged with 100 g (2.32×10⁻² mol) of the compound having the above formula (2A), 50 g of 1,3-bis(trifluoromethyl)benzene, 11.36 g (2.71×10⁻² mol) of an organosilicon compound having the formula (3A): 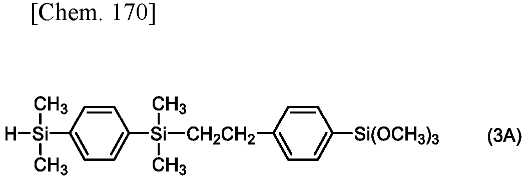 and 6.53×10⁻² g (containing 2.26×10⁻⁸ mol of Pt element) of a toluene solution of chloroplatinic acid/vinylsiloxane complex. The mixture was aged at 80°C for 12 hours. The solvent and unreacted reactants were distilled off under reduced pressure. After washing, 103 g of a liquid product was obtained. On ¹H-NMR analysis, the compound was identified to have the structure represented by the formula (3B).

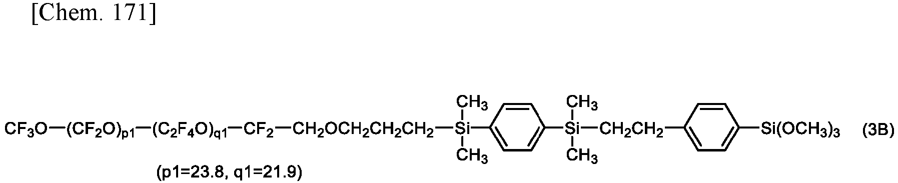

### [Synthesis Example 4]

A reactor was charged with 100 g of a compound having the formula (4A) (2.34×10⁻² mol, the fluorooxyalkylene-containing polymer residue having a number average molecular weight of 4,227, the compound (entirety) having a number average molecular weight of 4,277): 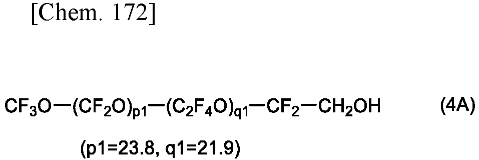 50 g of 1,3-bis(trifluoromethyl)benzene, and 5.19 g (2.46×10⁻² mol) of 1-bromomethyl-3-allylbenzene. Subsequently, 21.0 mL of a 1 mol/L aqueous sodium hydroxide solution was added dropwise. The mixture was aged at 60°C for 11 hours. The solvent and unreacted reactants were distilled off under reduced pressure. After washing, 100 g of a liquid product was obtained. On ¹H-NMR analysis, the compound was identified to have the structure represented by the formula (4B).

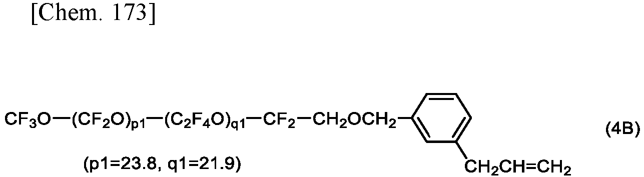

A reactor was charged with 100 g of the compound having the above formula (4B) (2.27×10⁻² mol, the fluorooxyalkylene-containing polymer residue having a number average molecular weight of 4,227, the compound (entirety) having a number average molecular weight of 4,405), 50 g of 1,3-bis(trifluoromethyl)benzene, 3.30 g (2.71×10⁻² mol) of trimethoxysilane, and 6.53×10⁻² g (containing 2.26×10⁻⁸ mol of Pt element) of a toluene solution of chloroplatinic acid/vinylsiloxane complex. The mixture was aged at 80°C for 12 hours. The solvent and unreacted reactants were distilled off under reduced pressure. After washing, 101 g of a liquid product was obtained. On ¹H-NMR analysis, the compound was identified to have the structure represented by the formula (4C).

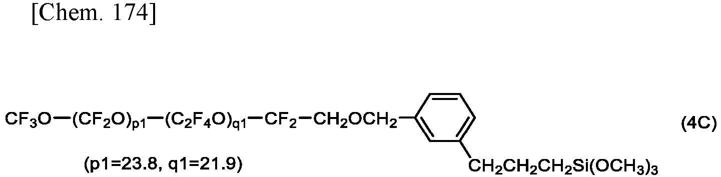

### [Synthesis Example 5]

A reactor was charged with 100 g of a compound having the formula (5A) (2.31×10⁻² mol, the fluorooxyalkylene-containing polymer residue having a number average molecular weight of 4,227, the compound (entirety) having a number average molecular weight of 4,330): 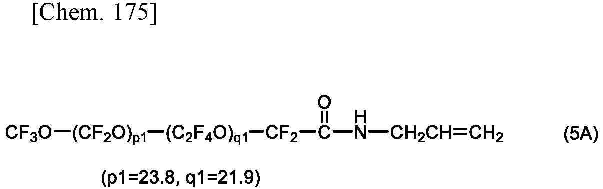 100 g of 1,3-bis(trifluoromethyl)benzene, 10.7 g (2.76×10⁻² mol) of an organosilicon compound having the formula (5B): 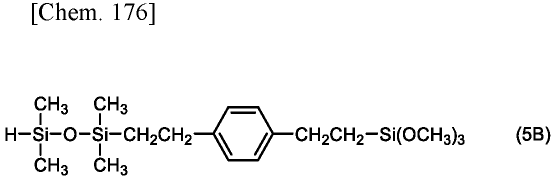 and 6.64×10⁻² g (containing 2.30×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 105 g of a liquid product was obtained. On ¹H-NMR analysis, the compound was identified to have the structure represented by the formula (5C).

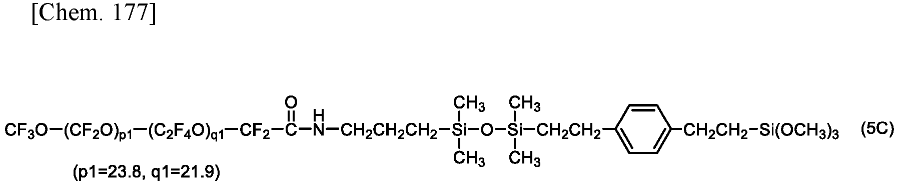

### [Synthesis Example 6]

A reactor was charged with 100 g of a compound having the formula (6A) (2.29×10⁻² mol, the fluorooxyalkylene-containing polymer residue having a number average molecular weight of 4,227, the compound (entirety) having a number average molecular weight of 4,370): 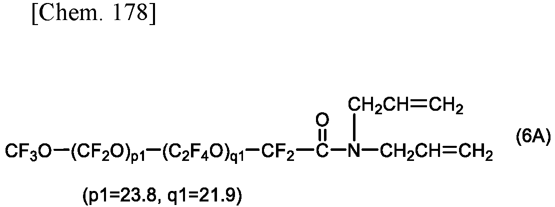 100 g of 1,3-bis(trifluoromethyl)benzene, 18.3 g (5.11×10⁻² mol) of the organosilicon compound having the above formula (2B), and 7.58×10⁻² g (containing 2.00×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 104 g of a liquid product was obtained. On ¹H-NMR analysis, the compound was identified to have the structure represented by the formula (6B).

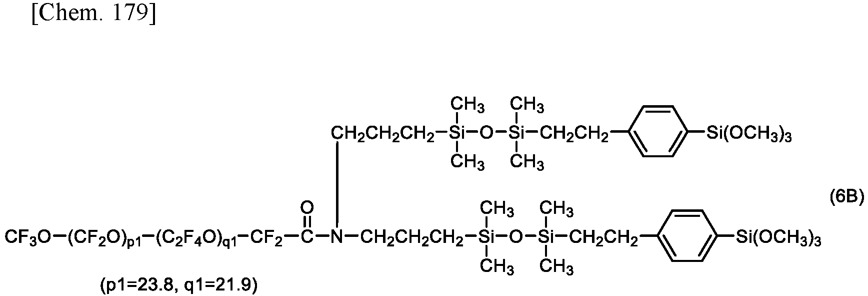

### [Synthesis Example 7]

A reactor was charged with 100 g of a compound having the formula (7A) (2.19×10⁻² mol, the fluorooxyalkylene-containing polymer residue having a number average molecular weight of 4,227, the compound (entirety) having a number average molecular weight of 4,557): 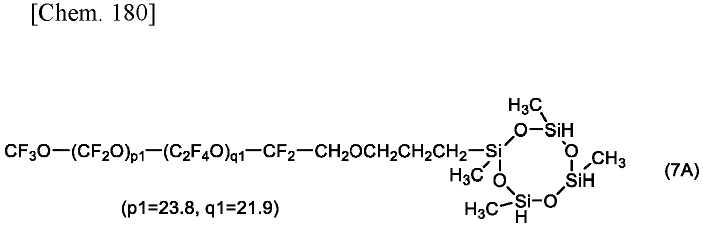 50 g of 1,3-bis(trifluoromethyl)benzene, 15.7 g (7.00×10⁻² mol) of p-styryltrimethoxysilane, and 6.07×10⁻² g (containing 2.10×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 102 g of a liquid product was obtained. On ¹H-NMR analysis, the compound was identified to have the structure represented by the formula (7B).

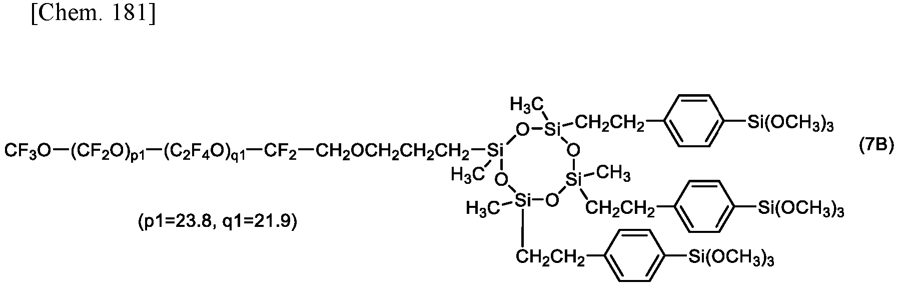

### [Synthesis Example 8]

A reactor was charged with 100 g of a compound having the formula (8A) (2.24×10⁻² mol, the fluorooxyalkylene-containing polymer residue having a number average molecular weight of 4,227, the compound (entirety) having a number average molecular weight of 4,469): 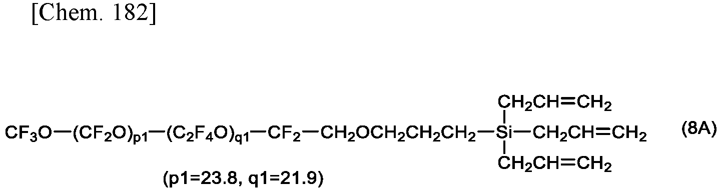 50 g of 1,3-bis(trifluoromethyl)benzene, 9.38 g (2.24×10⁻² mol) of the organosilicon compound having the above formula (3A), 5.37 g (4.40×10⁻² mol) of trimethoxysilane, and 7.28×10⁻² g (containing 2.52×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 102 g of a liquid product was obtained. On ¹H-NMR analysis, the compound was identified to have the structure represented by the formula (8B).

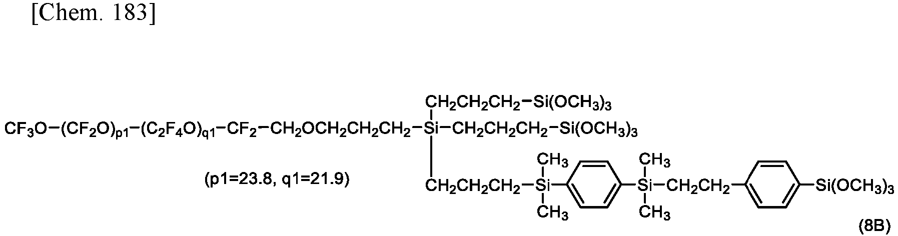

### [Synthesis Example 9]

A reactor was charged with 100 g of a compound having the formula (9A) (2.24×10⁻² mol, the fluorooxyalkylene-containing polymer residue having a number average molecular weight of 4,227, the compound (entirety) having a number average molecular weight of 4,468): 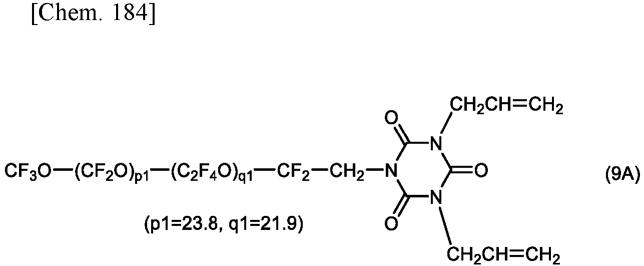 50 g of 1,3-bis(trifluoromethyl)benzene, 19.0 g (4.90×10⁻² mol) of the organosilicon compound having the above formula (5B), and 5.55×10⁻² g (containing 1.92×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 106 g of a liquid product was obtained. On ¹H-NMR analysis, the compound was identified to have the structure represented by the formula (9B).

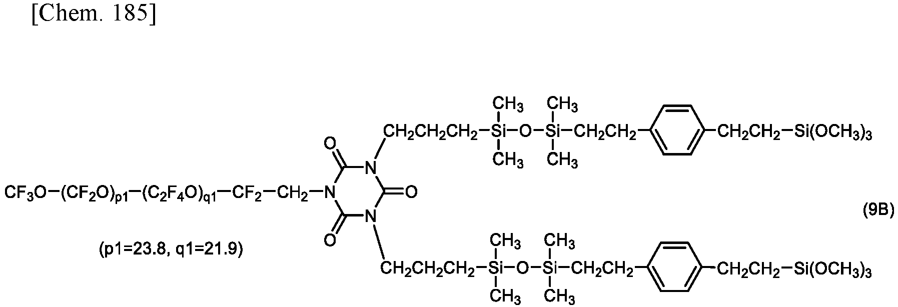

### [Synthesis Example 10]

A reactor was charged with 100 g of a compound having the formula (10A) (2.17×10⁻² mol, the fluorooxyalkylene-containing polymer residue having a number average molecular weight of 4,277, the compound (entirety) having a number average molecular weight of 4,607): 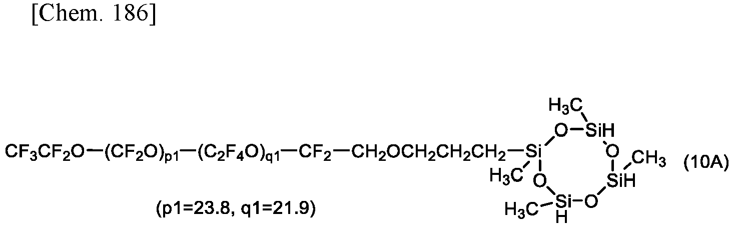 50 g of 1,3-bis(trifluoromethyl)benzene, 15.7 g (7.00×10⁻² mol) of p-styryltrimethoxysilane, and 6.07×10⁻² g (containing 2.10×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 102 g of a liquid product was obtained. On ¹H-NMR analysis, the compound was identified to have the structure represented by the formula (10B).

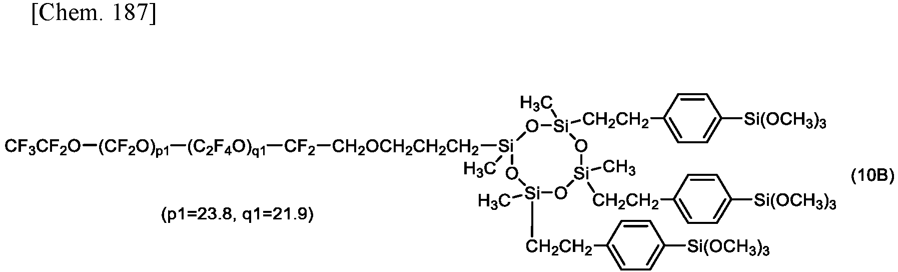

### [Synthesis Example 11]

A reactor was charged with 100 g of a mixture of compounds having formulae (11A-1) and (11A-2) (2.17×10⁻² mol, the mixture (entirety) having a number average molecular weight of 4,603) (the mixture containing (11A-1) and (11A-2) in a molar ratio of 9:1): 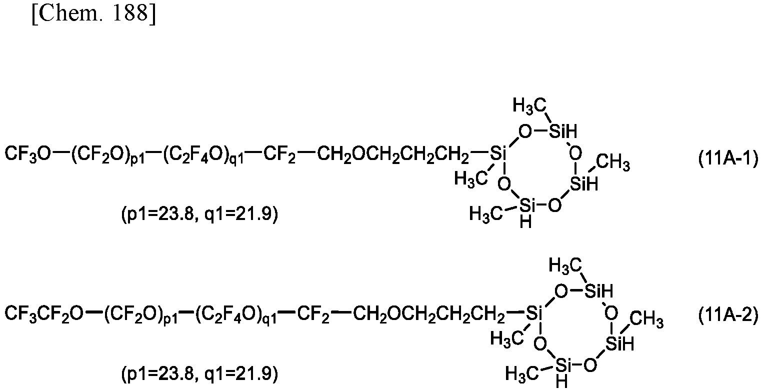 50 g of 1,3-bis(trifluoromethyl)benzene, 15.5 g (6.90×10⁻² mol) of p-styryltrimethoxysilane, and 6.07×10⁻² g (containing 2.10×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 100 g of a liquid product was obtained. On ¹H-NMR and ¹⁹F-NMR analysis, the compound (mixture) was identified to have the structures represented by the formulae (11B-1) and (11B-2) (the mixture containing (11B-1) and (11B-2) in a molar ratio of 9:1).

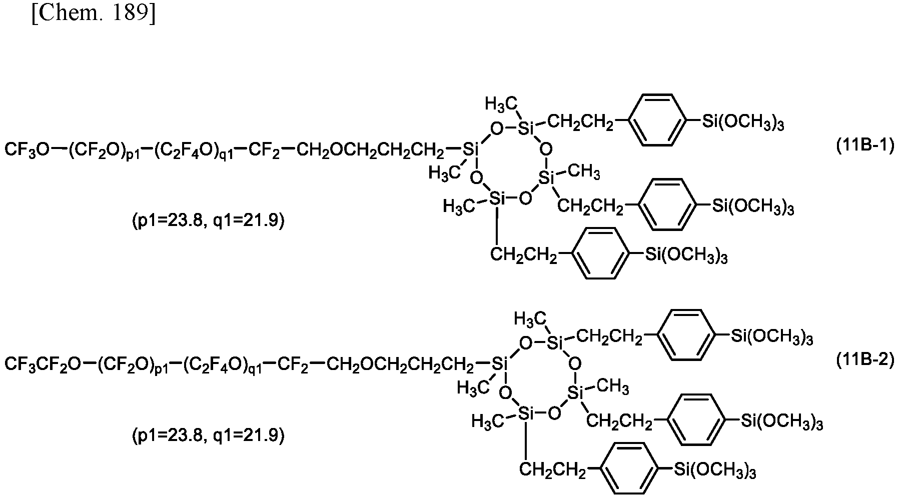

### [Synthesis Example 12]

A reactor was charged with 100 g of a compound having the formula (12A) (2.26×10⁻³ mol, the fluorooxyalkylene-containing polymer residue having a number average molecular weight of 4,084, the compound (entirety) having a number average molecular weight of 4,414): 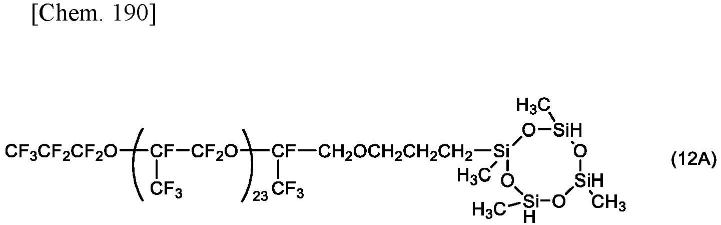 50 g of 1,3-bis(trifluoromethyl)benzene, 16.2 g (7.23×10⁻² mol) of p-styryltrimethoxysilane, and 6.74×10⁻² g (containing 2.33×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 102 g of a liquid product was obtained. On ¹H-NMR analysis, the compound was identified to have the structure represented by the formula (12B).

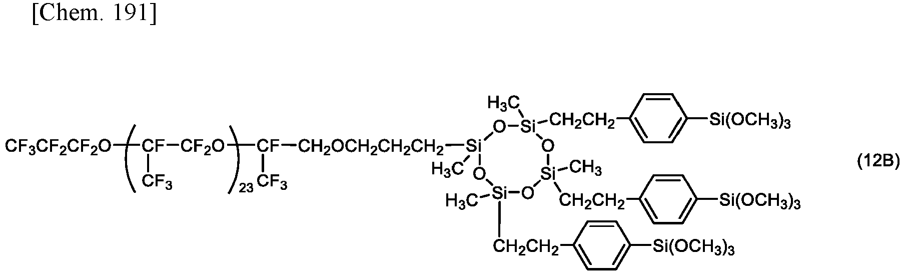

### [Synthesis Example 13]

A reactor was charged with 100 g of a compound having the formula (13A) (2.36×10⁻² mol, the fluorooxyalkylene-containing polymer residue having a number average molecular weight of 4,122, the compound (entirety) having a number average molecular weight of 4,240): 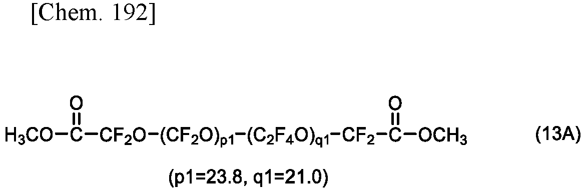 50 g of 1,3-bis(trifluoromethyl)benzene, and 13.4 g (6.29×10⁻² mol) of p-aminophenyltrimethoxysilane. The mixture was aged at 25°C for 24 hours. The solvent and unreacted reactants were distilled off under reduced pressure. After washing, 102 g of a liquid product was obtained. On ¹H-NMR analysis, the compound was identified to have the structure represented by the formula (13B).

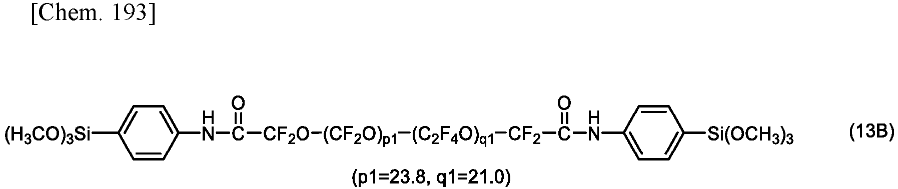

### [Synthesis Example 14]

A reactor was charged with 100 g of a compound having the formula (14A) (2.11×10⁻² mol, the fluorooxyalkylene-containing polymer residue having a number average molecular weight of 4,122, the compound (entirety) having a number average molecular weight of 4,744): 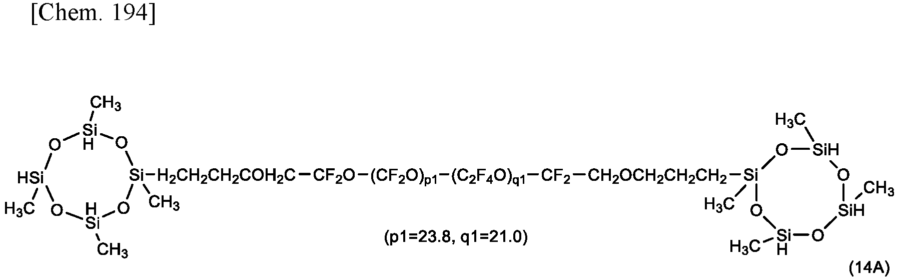 50 g of 1,3-bis(trifluoromethyl)benzene, 44.5 g (1.99×10⁻¹ mol) of p-styryltrimethoxysilane, and 9.02×10⁻² g (containing 3.12×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 107 g of a liquid product was obtained. On ¹H-NMR analysis, the compound was identified to have the structure represented by the formula (14B).

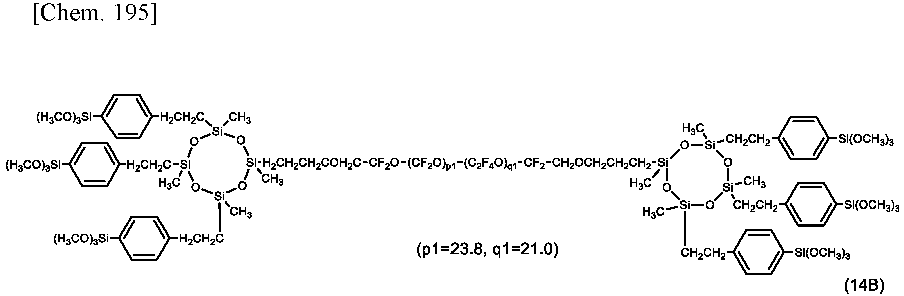

### [Synthesis Example 15]

A reactor was charged with 100 g of a compound having the formula (15A) (1.48×10⁻² mol, the fluorooxyalkylene-containing polymer residue having a number average molecular weight of 6,142, the compound (entirety) having a number average molecular weight of 6,764): 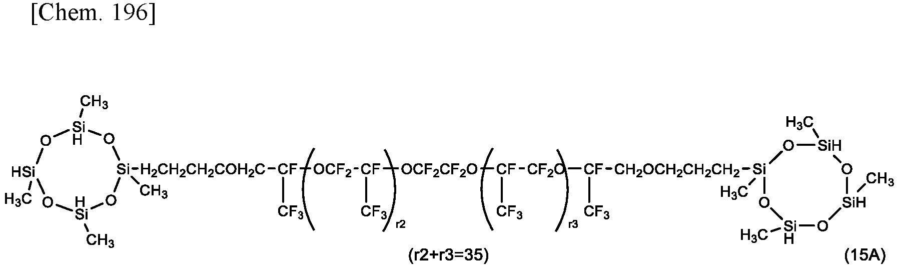 50 g of Asahiklin AC-6000 (tridecafluorooctane, AGC), 21.0 g (9.36×10⁻² mol) of p-styryltrimethoxysilane, and 4.89×10⁻² g (containing 1.51×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 108 g of a liquid product was obtained. On ¹H-NMR analysis, the compound was identified to have the structure represented by the formula (15B).

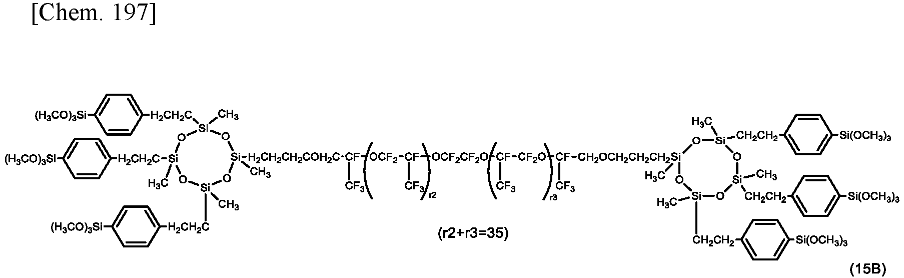

### [Synthesis Example 16]

A reactor was charged with 100 g (2.32×10⁻² mol) of the compound having the above formula (2A), 50 g of 1,3-bis(trifluoromethyl)benzene, 3.31 g (2.71×10⁻² mol) of trimethoxysilane, and 8.30×10⁻² g (containing 2.87×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 102 g of a liquid product was obtained. On ¹H-NMR analysis, the compound was identified to have the structure represented by the formula (16A).

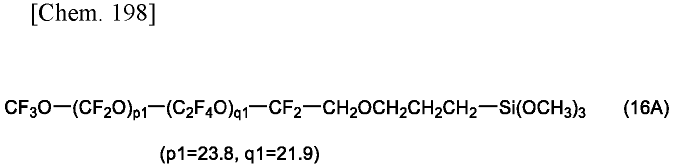

### [Synthesis Example 17]

A reactor was charged with 100 g (2.24×10⁻² mol) of a compound having the above formula (8A), 50 g of 1,3-bis(trifluoromethyl)benzene, 9.40 g (7.84×10⁻² mol) of trimethoxysilane, and 8.30×10⁻² g (containing 2.87×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 102 g of a liquid product was obtained. On ¹H-NMR analysis, the compound was identified to have the structure represented by the formula (17A).

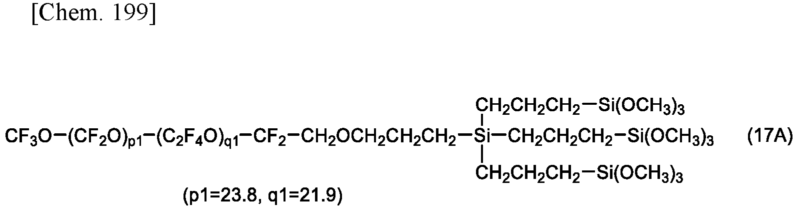

### [Synthesis Example 18]

A reactor was charged with 100 g of a compound having the formula (18A) (2.35×10⁻² mol, the fluorooxyalkylene-containing polymer residue having a number average molecular weight of 4,122, the compound (entirety) having a number average molecular weight of 4,264): 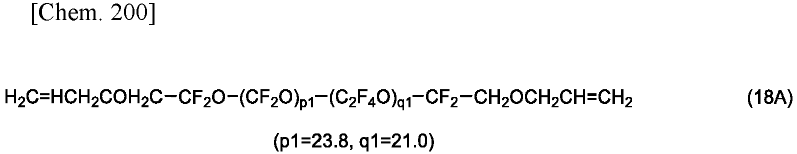 100 g of 1,3-bis(trifluoromethyl)benzene, 9.03 g (7.40×10⁻² mol) of trimethoxysilane, and 4.70×10⁻² g (containing 1.45×10⁻⁷ mol of Pt element) of a toluene solution of chloroplatinic acid/vinylsiloxane complex. The mixture was aged at 80°C for 12 hours. The solvent and unreacted reactants were distilled off under reduced pressure. After washing, 110 g of a liquid product was obtained. On ¹H-NMR analysis, the compound was identified to have the structure represented by the formula (18B).

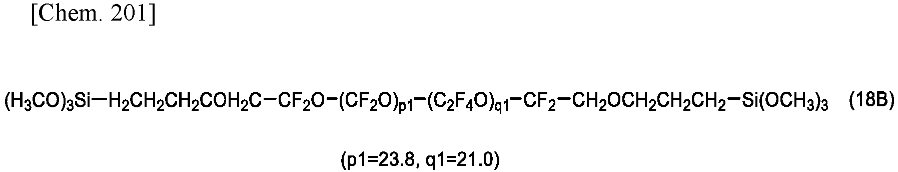

### [Example 1]

A surface treating agent was prepared by dissolving the compound of Synthesis Example 1 in Novec 7200 (ethyl perfluorobutyl ether, 3M) in a concentration of 20% by weight.

### [Example 2]

A surface treating agent was prepared by dissolving the compound of Synthesis Example 2 in Novec 7200 (ethyl perfluorobutyl ether, 3M) in a concentration of 20% by weight.

### [Example 3]

A surface treating agent was prepared by dissolving the compound of Synthesis Example 3 in Asahiklin AE-3000 (1,1,2,2-tetrafluoroethyl-2,2,2-trifluoroethyl ether, AGC) in a concentration of 20% by weight.

### [Example 4]

A surface treating agent was prepared by dissolving the compound of Synthesis Example 4 in Novec 7200 (ethyl perfluorobutyl ether, 3M) in a concentration of 20% by weight.

### [Example 5]

A surface treating agent was prepared by dissolving the compound of Synthesis Example 5 in Novec 7200 (ethyl perfluorobutyl ether, 3M) in a concentration of 20% by weight.

### [Example 6]

A surface treating agent was prepared by dissolving the compound of Synthesis Example 6 in Asahiklin AE-3000 (1,1,2,2-tetrafluoroethyl-2,2,2-trifluoroethyl ether, AGC) in a concentration of 20% by weight.

### [Example 7]

A surface treating agent was prepared by dissolving the compound of Synthesis Example 7 in Novec 7200 (ethyl perfluorobutyl ether, 3M) in a concentration of 20% by weight.

### [Example 8]

A surface treating agent was prepared by dissolving the compound of Synthesis Example 8 in Opteon SF10 (methyl perfluoroheptenyl ether, Chemours-Mitsui Fluoroproducts Co., Ltd.) in a concentration of 20% by weight.

### [Example 9]

A surface treating agent was prepared by dissolving the compound of Synthesis Example 9 in Opteon SF10 (methyl perfluoroheptenyl ether, Chemours-Mitsui Fluoroproducts Co., Ltd.) in a concentration of 20% by weight.

### [Example 10]

A surface treating agent was prepared by dissolving the compound of Synthesis Example 10 in Novec 7200 (ethyl perfluorobutyl ether, 3M) in a concentration of 20% by weight.

### [Example 11]

A surface treating agent was prepared by dissolving the compound of Synthesis Example 11 in Novec 7200 (ethyl perfluorobutyl ether, 3M) in a concentration of 20% by weight.

### [Example 12]

A surface treating agent was prepared by dissolving the compound of Synthesis Example 12 in Novec 7300 (methyl perfluorohexyl ether, 3M) in a concentration of 20% by weight.

### [Example 13]

A surface treating agent was prepared by dissolving the compound of Synthesis Example 13 in Asahiklin AC-6000 (tridecafluorooctane, AGC) in a concentration of 20% by weight.

### [Example 14]

A surface treating agent was prepared by dissolving the compound of Synthesis Example 14 in Asahiklin AC-6000 (tridecafluorooctane, AGC) in a concentration of 20% by weight.

### [Example 15]

A surface treating agent was prepared by dissolving the compound of Synthesis Example 15 in Asahiklin AC-6000 (tridecafluorooctane, AGC) in a concentration of 20% by weight.

### [Comparative Example 1]

A surface treating agent was prepared by dissolving the compound of Synthesis Example 16 in Novec 7200 (ethyl perfluorobutyl ether, 3M) in a concentration of 20% by weight.

### [Comparative Example 2]

A surface treating agent was prepared by dissolving the compound of Synthesis Example 17 in Novec 7200 (ethyl perfluorobutyl ether, 3M) in a concentration of 20% by weight.

### [Comparative Example 3]

A surface treating agent was prepared by dissolving the compound of Synthesis Example 18 in Novec 7200 (ethyl perfluorobutyl ether, 3M) in a concentration of 20% by weight.

### Preparation of surface treating agent and formation of cured film

Surface treating agents were prepared as described in Examples and Comparative Examples. Onto an antireflective-treated plastic lens having a SiO₂ layer on its outermost surface (size: 80 mm diameter), each surface treating agent was deposited by vacuum evaporation under conditions including pressure 2.0×10⁻² Pa and heating temperature 700°C. The deposit was cured in an atmosphere of 25°C and relative humidity 50% for 12 hours, forming a cured film of 10 nm thick.

### Evaluation of water/oil repellency

### [Measurement of initial water repellency]

Using a contact angle meter Drop Master (Kyowa Interface Science Co., Ltd.), the cured film on lens was measured for a contact angle with water as an index of water repellency (droplet 2 µl, temperature 25°C, RH 40%). The results (initial contact angle with water) are shown in Table 1.

### Evaluation of slipping

### [Measurement of coefficient of dynamic friction]

Using a surface tester Type 14FW (Shinto Scientific Co., Ltd.), the coefficient of dynamic friction of the cured film on lens relative to BEMCOT (Asahi Kasei Corp.) was measured under the following conditions.

| | |
|---|---|
| Contact area: | 10 mm × 30 mm |
| Load: | 100 gf |

The results of the coefficient of dynamic friction are shown in Table 1 in accordance with the following A to C.
A: the coefficient of dynamic friction is 0.04 or less
B: the coefficient of dynamic friction is more than 0.04 and less than 0.08
C: the coefficient of dynamic friction is 0.08 or more

### Evaluation of cloth abrasion resistance

Using a rubbing tester (Shinto Scientific Co., Ltd.), the cured film on lens was rubbed under the following conditions. Thereafter, the cured film was measured for a contact angle with water as an index of water repellency as described above. The test environment conditions included temperature 25°C and RH 40%.

### [Measurement of cloth abrasion resistance]

| | |
|---|---|
| Cloth: | BEMCOT (Asahi Kasei Corp.) |
| Contact area: | 1 cm² |
| Moving distance (one way): | 40 mm |
| Moving speed: | 4,800 mm/min |
| Load: | 1 kgf/1 cm² |
| Abrasion cycles: | 30,000 cycles |

The results of cloth abrasion resistance are shown in Table 1 in accordance with the following A to C.
A: The contact angle with water reduced from the initial contact angle by 0 to 2°
B: The contact angle with water reduced from the initial contact angle by 3 to 5°
C: The contact angle with water reduced from the initial contact angle by 6° or more

### Evaluation of chucking

Lens blocking tape (LEAP III 1695M, 3M) was applied to the cured film on lens before a tensile shear bond strength was measured. Specifically, the cured film-bearing lens and the lens blocking tape attached thereto were pulled apart such that a shear stress acted on the bonding interface. The maximum force when the bonded juncture was ruptured was measured.

### [Measurement of tensile shear bond strength]

| | |
|---|---|
| Contact area: | 2.7 cm² |
| Tensile rate: | 50 mm/min |

The results of chucking (tensile shear bond strength) are shown in Table 1 in accordance with the following A to C.
A: The tensile shear bond strength is 50 N or more
B: The tensile shear bond strength is more than 30 and less than 50 N
C: The tensile shear bond strength is 30 N or less

**[Table 1]**

| | Initial contact angle with water (°) | Coefficient of dynamic friction | Cloth abrasion resistance | Chucking property |
|---|---|---|---|---|
| Example 1 | 111 | A | B | B |
| Example 2 | 109 | A | A | B |
| Example 3 | 109 | A | A | B |
| Example 4 | 112 | A | B | B |
| Example 5 | 110 | A | A | B |
| Example 6 | 110 | A | A | A |
| Example 7 | 115 | A | A | A |
| Example 8 | 113 | A | B | B |
| Example 9 | 114 | A | A | A |
| Example 10 | 116 | A | A | A |
| Example 11 | 115 | A | A | A |
| Example 12 | 114 | B | A | A |
| Example 13 | 106 | B | B | A |
| Example 14 | 108 | B | A | A |
| Example 15 | 108 | B | A | A |
| Comparative Example 1 | 110 | A | C | C |
| Comparative Example 2 | 114 | A | B | C |
| Comparative Example 3 | 107 | C | B | A |

The results have demonstrated that Comparative Examples 1 and 2 show low coefficients of dynamic friction (Grades A), but low cloth abrasion resistance (Grades C and B) and low chucking (Grades C). Owing to the inclusion of functional groups at both ends, Comparative Example 3 shows high chucking (Grade A), but a high coefficient of dynamic friction (Grade C). On the other hand, Examples 1 to 15 show low coefficients of dynamic friction (Grades A and B), hence improved slipping and high cloth abrasion resistance (Grades A and B), and show improved chucking (Grades A and B) owing to, as described in formula (1), introduction of a phenylene group into the linking group between the fluorooxyalkylene-containing polymer residue and the silanol and/or hydrolyzable silyl group in the backbone.

## Claims

1. A fluoropolyether-containing polymer having at least one group represented by the formula (1) at at least one end in the molecule: 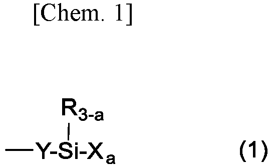 wherein Y is a divalent organic group including an o-, m- or p-phenylene group, R is a C₁-C₄ alkyl group or phenyl group, X is independently a hydroxy or hydrolyzable group, and a is 2 or 3.

2. The fluoropolyether-containing polymer of claim 1, wherein Y in formula (1) is a group represented by the formula (5): 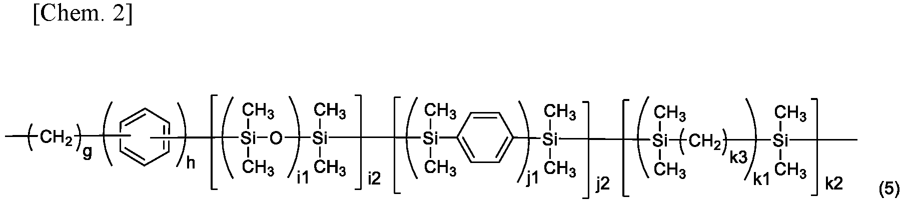 wherein g is an integer of 0 to 20, h is an integer of 1 to 3, i1, j1 and k1 are an integer of 1 to 10, i2, j2 and k2 are an integer of 0 to 5, k3 is an integer of 1 to 10, individual repeating units may be randomly bonded, and when (CH₂)_{g} are separated into a plurality of blocks, numbers of repetition of (CH₂) units in the plurality of blocks may be the same or different.

3. The fluoropolyether-containing polymer of claim 1, wherein in formula (1), Y is selected from among groups represented by the following formulae: 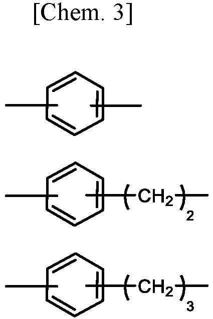 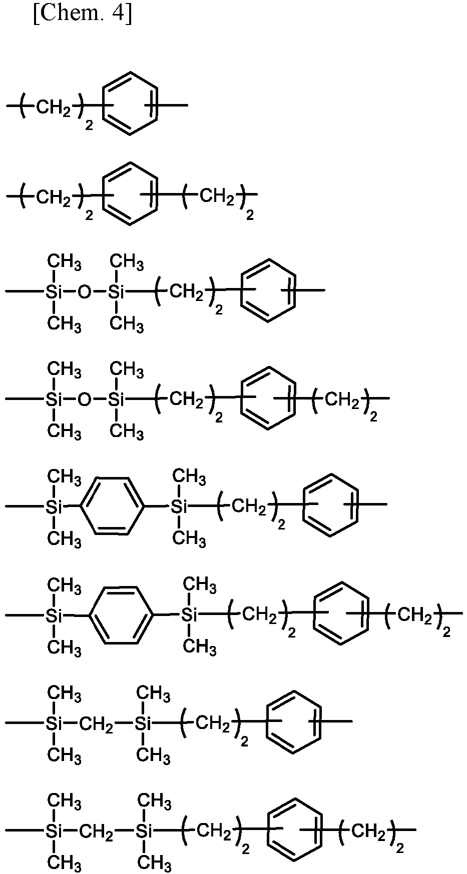 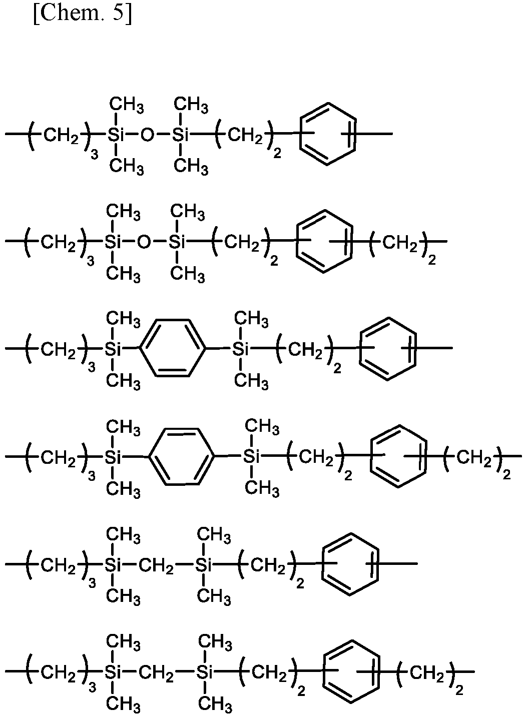 wherein the valence bond on the right side is attached to silicon in formula (1).

4. The fluoropolyether-containing polymer of claim 1, wherein in formula (1), X is hydroxy, a C₁-C₁₀ alkoxy group, a C₂-C₁₀ alkoxyalkoxy group, a C₂-C₁₀ acyloxy group, a C₂-C₁₀ alkenyloxy group or halogen.

5. The fluoropolyether-containing polymer of claim 1, wherein the fluoropolyether-containing polymer is represented by the formula (2):
[Chem. 6]
D-Rf-A (2)
wherein Rf is a divalent fluorooxyalkylene-containing polymer residue represented by the formula (3): 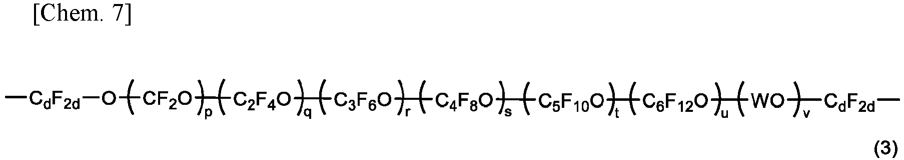
wherein W is a fluoroalkylene group containing at least one hydrogen, d is independently for each unit an integer of 1 to 3, p, q, r, s, t, u, and v each are an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 1,000 to 20,000,
D is fluorine, a monovalent fluorinated hydrocarbon group which is terminated with CF₃-, CF₂H- or CH₂F- and may contain oxygen, or A, and A is a group represented by the formula (4): 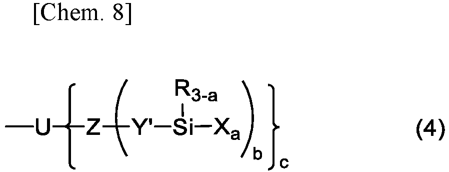
wherein U is a single bond or a di- to tetravalent organic group, Z is independently a single bond, carbon, silicon, nitrogen or a tri- to nonavalent organic group, Y' is independently a C₁-C₈ aliphatic divalent hydrocarbon group or Y, at least one Y' in the molecule is Y, Y, R, X, and a are as defined above, b is an integer of 1 to 8, and c is an integer of 1 to 3.

6. The fluoropolyether-containing polymer of claim 5, wherein in formula (4), Z is a single bond, carbon, silicon, nitrogen, a linear, branched or cyclic tri- to octavalent organopolysiloxane residue of 3 to 13 silicon atoms, trivalent isocyanurate or a trivalent triazine ring-containing group.

7. The fluoropolyether-containing polymer of claim 5, wherein in formula (4), U is a single bond, carbonyl, amide, a group represented by the following formula: 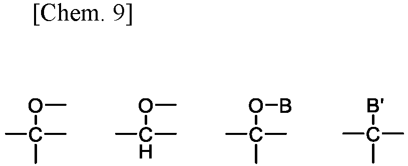 wherein B is hydrogen, a C₁-C₂₀ monovalent hydrocarbon group or a monovalent polyether group, B' is hydrogen or a C₁-C₂₀ monovalent hydrocarbon group, or a C₁-C₂₀ di- to tetravalent hydrocarbon group which may contain at least one atom or group selected from among oxygen, sulfur, hydroxy, polyether, diorganosilylene, a linear divalent organopolysiloxane residue of 2 to 100 silicon atoms, silalkylene, silarylene, secondary amino, tertiary amino, ether, carbonyl, amide and ester.

8. The fluoropolyether-containing polymer of claim 5 wherein the polymer having formula (2) is represented by any one of the following formulae: 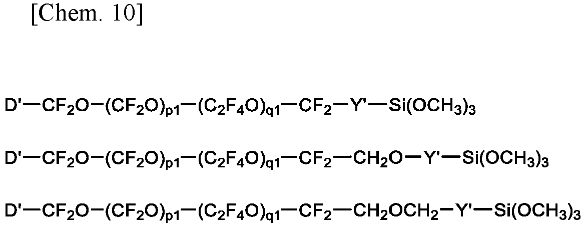 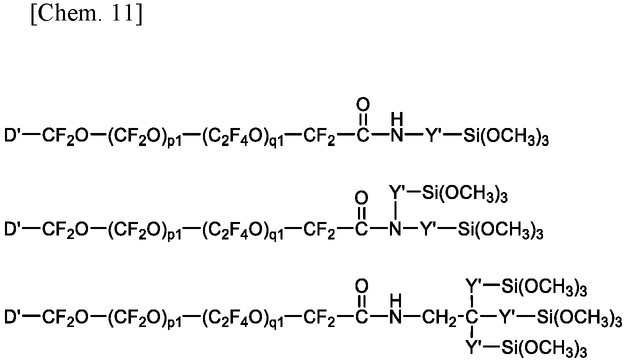 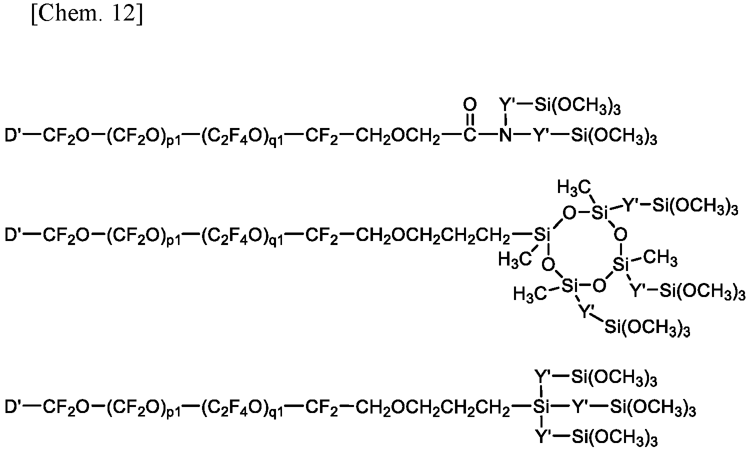 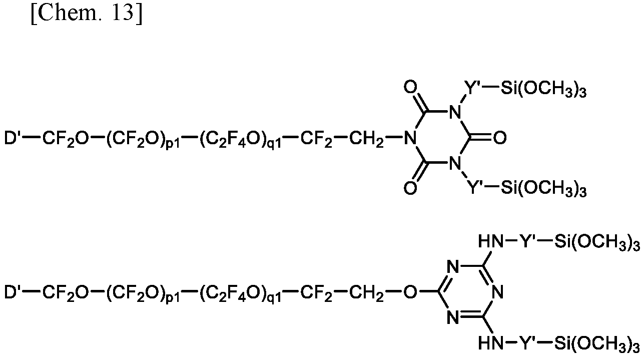 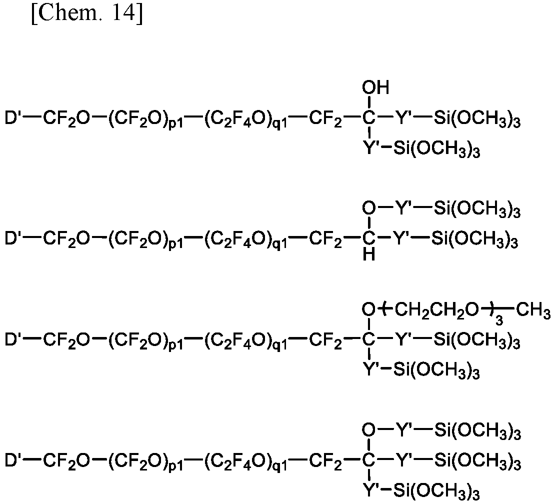 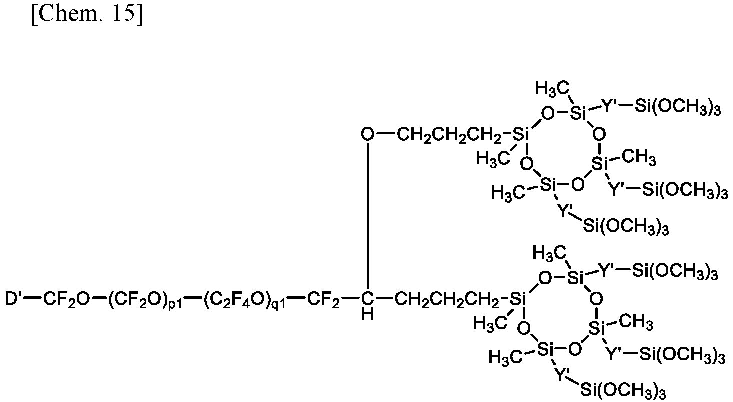 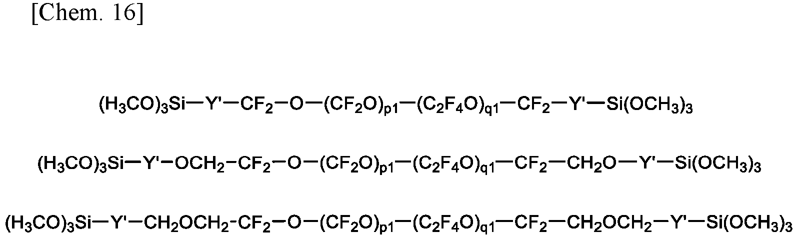 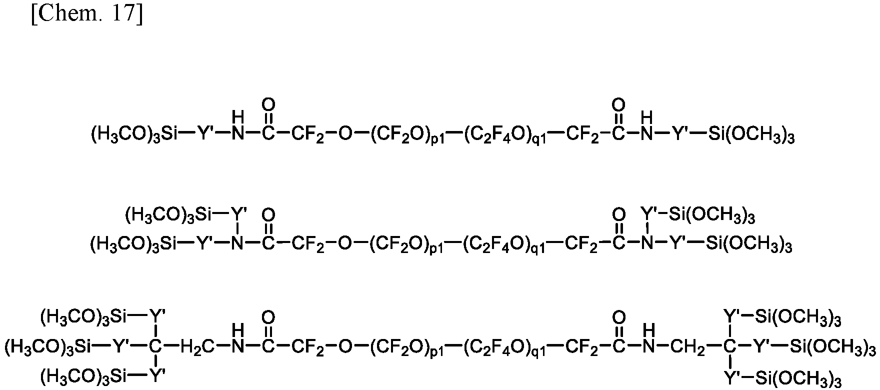 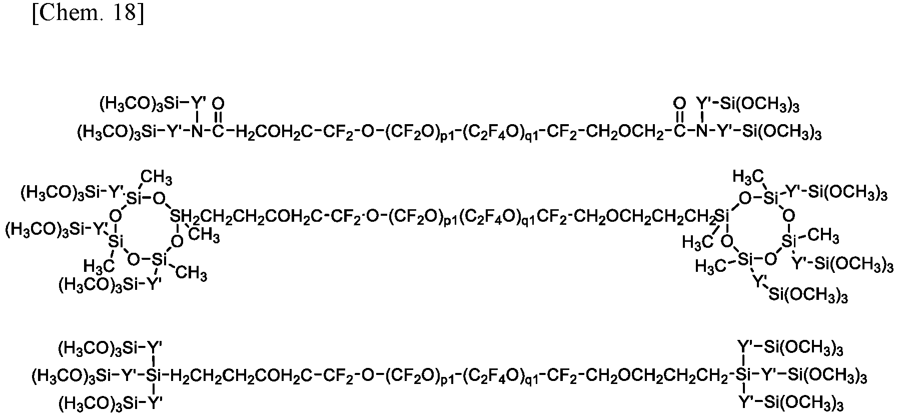 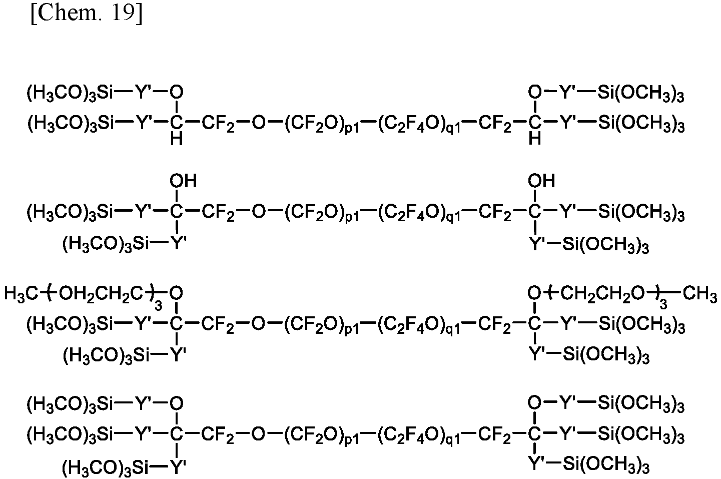 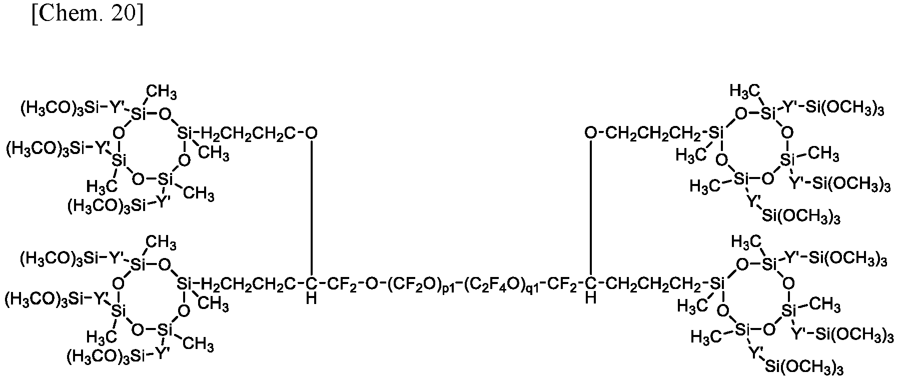 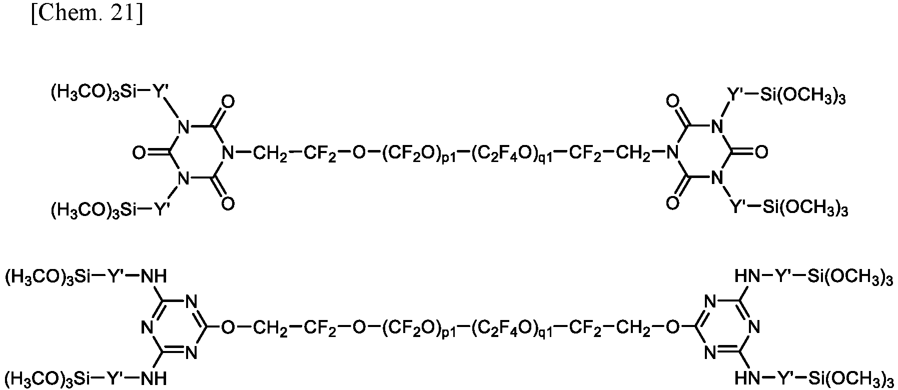 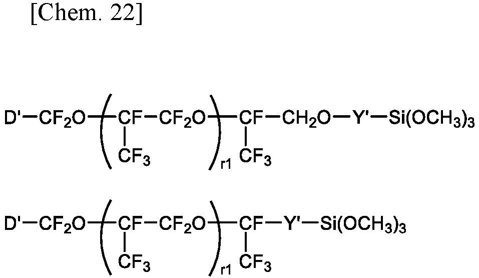 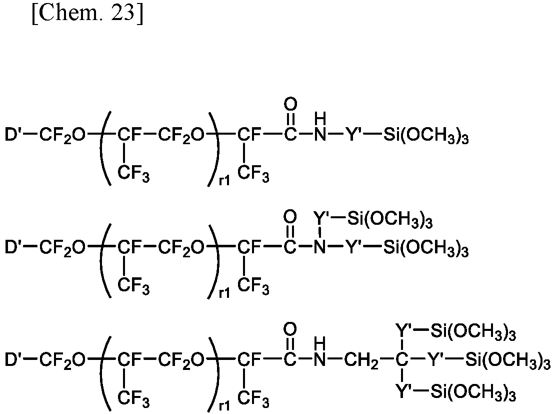 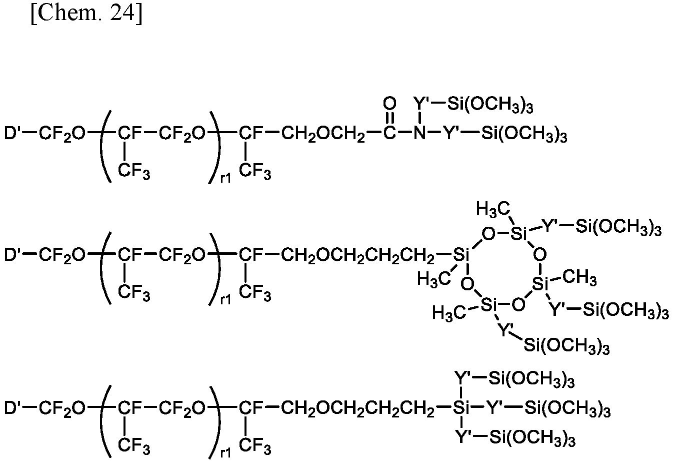 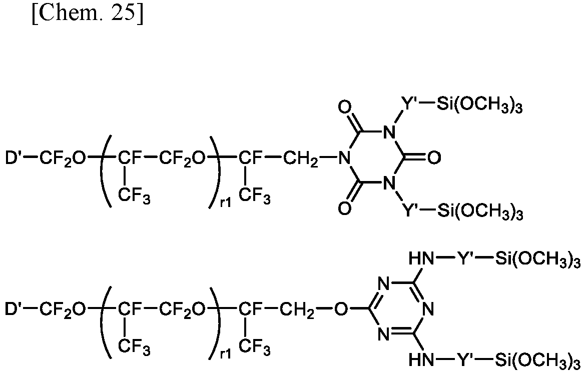 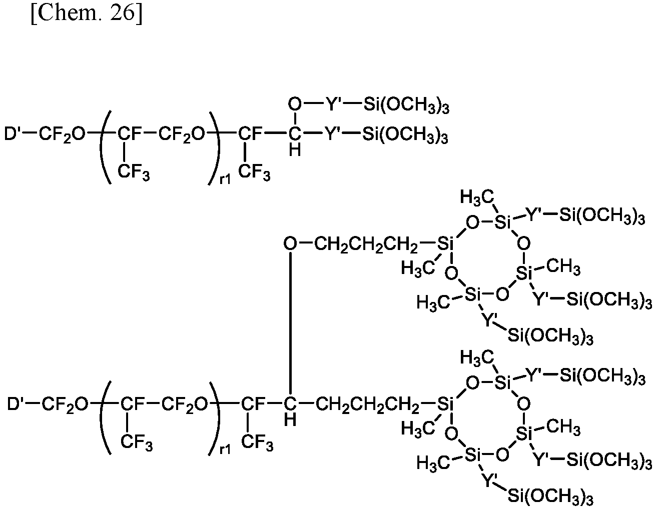 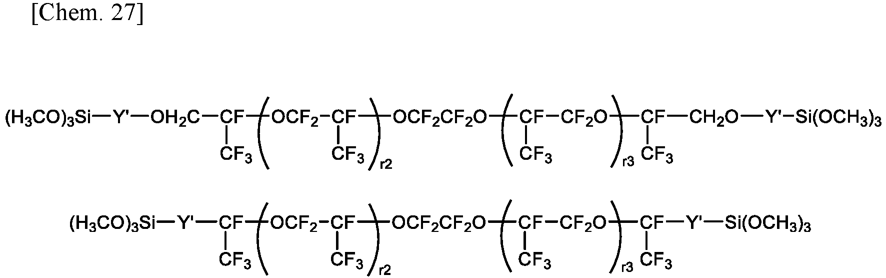 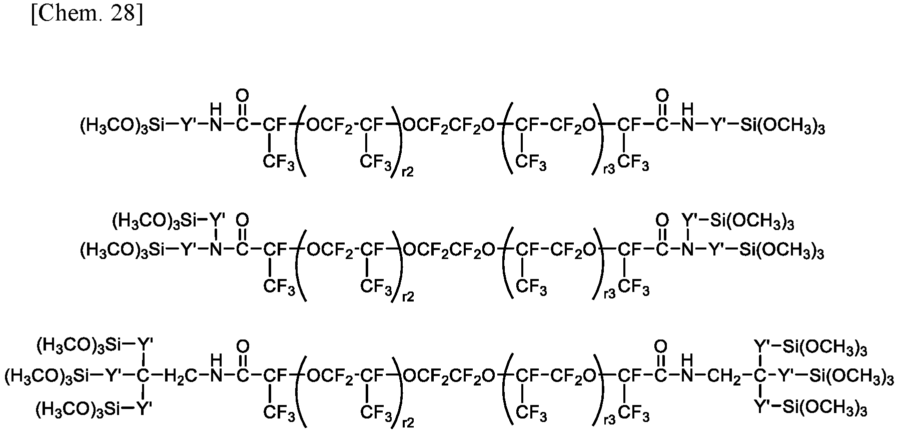 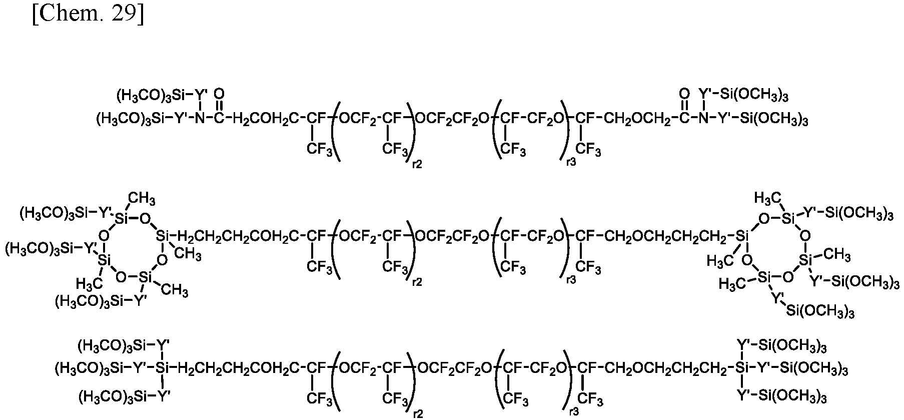 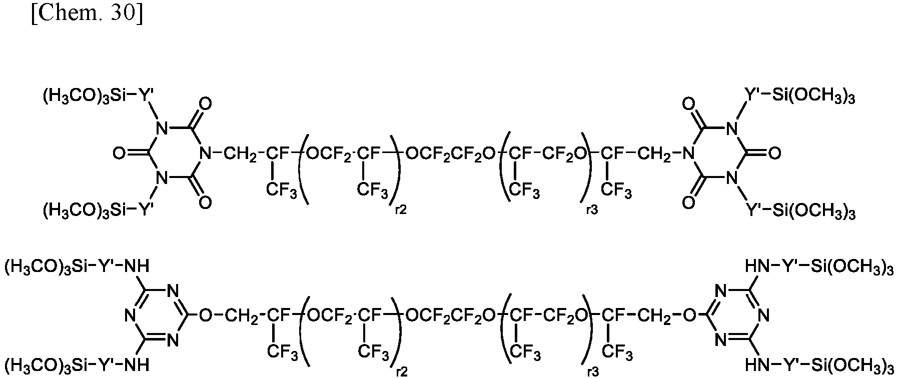 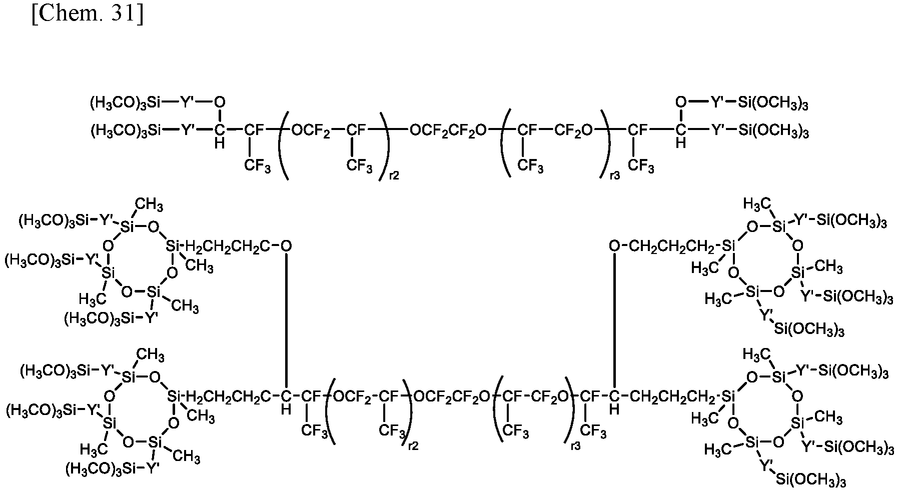 wherein Y' is as defined above, D' is F, CF₃ or CF₃CF₂, p1 is an integer of 5 to 440, q1 is an integer of 5 to 250, p1+q1 is an integer of 20 to 450, r1 is an integer of 20 to 180, r2 is an integer of 1 to 100, r3 is an integer of 1 to 100, r2+r3 is an integer of 20 to 180, and individual repeating units within the parentheses with p1 and q1 may be randomly bonded.

9. A surface treating agent comprising the fluoropolyether-containing polymer of any one of claims 1 to 8 and/or a partial (hydrolytic) condensate thereof as a main component.

10. An article having a surface treated with the surface treating agent of claim 9.

11. The article of claim 10 which is a lens substrate.
